# EUROPEAN PATENT APPLICATION

(11) **EP 4 585 646 A1**
(43) Date of publication of application: **16.07.2025**
(21) Application number: 23862894.5
(22) Date of filing: 17.08.2023
(51) Int. Cl.: C08L 71/02, C08G 65/336, C09K 3/18

(54) **FLUORINE-CONTAINING COMPOSITION, SURFACE TREATMENT AGENT, AND ARTICLE**

(30) Priority: 06.09.2022 JP 2022141131
(71) Applicant: SHIN-ETSU CHEMICAL CO., LTD., Tokyo 1000005 (JP)
(72) Inventor: SAKOH, Ryusuke, Annaka-shi, Gunma 379-0224 (JP); MOTEGI, Miki, Annaka-shi, Gunma 379-0224 (JP); YAMANE, Yuji, Annaka-shi, Gunma 379-0224 (JP)
(74) Representative: Ter Meer Steinmeister & Partner
(86) International application number: PCT/JP2023/029680
(87) International publication number: WO 2024/053354

(57) **Abstract**

A surface treatment agent comprising a fluorine-containing composition which comprises (A) a polymer of formula (1) and/or a product of partial (hydrolytic) condensation thereof and (B) a polymer of formula (2) and/or a product of partial (hydrolytic) condensation thereof in a specific proportion. The surface treatment agent can form cured coating films excellent in terms of water and oil repellency and wear resistance and of slipperiness, chemical resistance, and heat resistance.

Rf'OCF₂CF₂O-Rf-A (1)

Rf'OCF₂O-Rf-A (2)

[Rf is a group of formula (3) 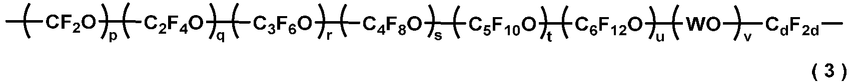 (wherein W is an H-containing fluoroalkylene group, d is 1-6, and p, q, r, s, t, u, and v are each 0-450, the sum of p to v being 10-450),
Rf' is a fluoroalkyl group, and A is a group of formula (4) 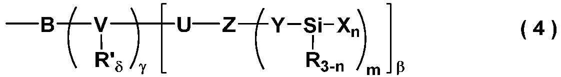 (wherein B is a single bond or a divalent group, V is a tri- to octa-valent group, R' is H, OH, an alkyl group, a phenyl group, an oxyalkylene-containing group, an alkoxy group, or a halogen atom, U is a single bond or a divalent group, Z is a single bond or a tri- to octa-valent group, Y is a divalent group, R is an alkyl group or a phenyl group, X is OH or a hydrolyzable group, n is 1-3, m is 1-7, β is 1-6, γ is 0 or 1, and δ is 0-6.)]

## Description

### TECHNICAL FIELD

The present invention relates to a fluorine-containing composition comprising a fluoropolyether-containing polymer (a compound having a monovalent fluorooxyalkylene-containing polymer residue in the molecule), and more particularly, to a fluorine-containing composition comprising a fluoropolyether-containing polymer having a silanol group or a hydrolyzable silyl group that forms a coating excellent in water/oil repellency, abrasion resistance, slipperiness, chemical resistance, and heat resistance and/or a partial (hydrolytic) condensate thereof, a surface treatment agent comprising the fluorine-containing composition, and an article having a surface treated with the surface treatment agent.

### BACKGROUND ART

Recently, there has been an accelerating demand to mount touch panels as the displays on smartphones and others. While the touch panel has a screen kept bare, there are many chances of the finger or cheek coming in direct contact with the screen. Undesirably the touch panel is readily fouled with stains like sebum. There is an annually increasing need for the technology to attain fingerprint proofness or easy stain removal on a display surface for better appearance or visibility. It is thus desired to have a material capable of meeting these requirements. In particular, for touch panel displays which are readily stained with fingerprints, it is desirable to form a water/oil-repellent layer on their surface. Prior art water/oil-repellent layers have high water/oil repellency and easy stain wipe-off, but suffer from the problem that the anti-fouling performance deteriorates during service.

Generally, fluoropolyether-containing compounds exhibit, by virtue of their extremely low surface free energy, water/oil repellency, chemical resistance, lubricity, parting, anti-fouling and other properties. Taking advantage of these properties, they find use in a variety of industrial fields as water/oil repellent antifouling agents for paper and textiles, lubricants for magnetic recording media, oil-repellent agents for precision instruments, parting agents, cosmetic ingredients, protective films and the like. Inversely, the same properties indicate non-tackiness or non-adhesion to other substrates. Even if they can be coated to the substrate surface, it is difficult for the coating to tightly adhere thereto.

On the other hand, silane coupling agents are well known for their ability to bond surfaces of glass or fabric substrates to organic compounds. They are widely used as surface coating agents for numerous substrates. The silane coupling agent contains an organic functional group and a reactive silyl group (typically hydrolyzable silyl group such as alkoxysilyl) in the molecule. In the presence of airborne moisture or the like, the hydrolyzable silyl groups undergo self-condensation reaction to form a coating. The hydrolyzable silyl groups form chemical and physical bonds with the surface of glass or metal, whereby the coating becomes a tough coating having durability.

Patent Documents 1 to 6 (JP-T 2008-534696, JP-T 2008-537557, JP-A 2012-072272, JP-A 2012-157856, JP-A 2013-136833, JP-A 2015-199906) disclose a composition comprising a fluoropolyether-containing polymer which is obtained by introducing a hydrolyzable silyl group into a fluoropolyether-containing compound, the composition being tightly adherent to the substrate surface and capable of forming a coating with water/oil repellency, chemical resistance, lubricity, parting, anti-fouling and other properties on the substrate surface.

Cured films such as lenses and antireflective films surface treated with a composition comprising the fluoropolyether-containing polymer obtained by introducing a hydrolyzable silyl group into a fluoropolyether-containing compound have excellent slipperiness and parting and have excellent abrasion durability with steel wool.

Application development of the composition comprising the fluoropolyether-containing polymer obtained by introducing a hydrolyzable silyl group into a fluoropolyether-containing compound has also expanded, and application development of in-vehicle applications such as interior displays has also expanded. In the case of in-vehicle use, while slipperiness as touch feeling is required, durability against alkaline cleaning liquid (chemical resistance) and durability in a state exposed to high temperature under sunlight (heat resistance) are required.

In the composition comprising the fluoropolyether-containing polymer obtained by introducing a hydrolyzable silyl group into a fluoropolyether-containing compound, all of slipperiness, chemical resistance, and heat resistance have not been satisfied.

Note that, as conventional techniques related to the present invention, the following documents can be cited together with the above-described documents.

### PRIOR ART DOCUMENTS

### PATENT DOCUMENTS

Patent Document 1: JP-A 2008-534696
Patent Document 2: JP-A 2008-537557
Patent Document 3: JP-A 2012-072272
Patent Document 4: JP-A 2012-157856
Patent Document 5: JP-A 2013-136833
Patent Document 6: JP-A 2015-199906
Patent Document 7: WO 2017/212850

### SUMMARY OF INVENTION

### TECHNICAL PROBLEM

An object of the present invention, which has been made under the above-mentioned circumstances, is to provide a fluorine-containing composition comprising a fluoropolyether-containing polymer having a silanol group or a hydrolyzable silyl group capable of forming a cured film excellent in water/oil repellency and abrasion resistance, and also excellent in slipperiness, chemical resistance, and heat resistance and/or a partial (hydrolytic) condensate thereof, a surface treatment agent comprising the fluorine-containing polymer, and an article having a surface treated with the surface treatment agent.

### SOLUTION TO PROBLEM

Making extensive investigations to attain the above object, the present inventors have found that by using a fluorine-containing composition comprising a fluoropolyether-containing polymer having a silanol group or a hydrolyzable silyl group represented by the general formula (1) described later and/or a partial (hydrolytic) condensate thereof and a fluoropolyether-containing polymer having a silanol group or a hydrolyzable silyl group represented by the general formula (2) described later and/or a partial (hydrolytic) condensate thereof in a predetermined ratio as a surface treatment agent, a surface treatment agent containing the polymer and/or the partial (hydrolytic) condensate can form a cured film excellent in water/oil repellency and abrasion resistance, and also excellent in slipperiness, chemical resistance, and heat resistance, and have completed the present invention.

Accordingly, the present invention provides a fluorine-containing composition comprising a fluoropolyether-containing polymer (a compound having a monovalent fluorooxyalkylene-containing polymer residue in the molecule), a surface treatment agent, and an article as defined below.
[1] A fluorine-containing composition comprising the following component (A) and component (B):
   (A) a fluoropolyether-containing polymer having a silanol group or a hydrolyzable silyl group having the following general formula (1) and/or a partial (hydrolytic) condensate thereof
   (B) a fluoropolyether-containing polymer having a silanol group or a hydrolyzable silyl group having the following general formula (2) and/or a partial (hydrolytic) condensate thereof
      [Chem. 1]

      **RfOCF₂CF₂O-Rf-A** **(1)**

      **Rf'OCF₂O-Rf-A** **(2)**

      wherein Rf is a divalent fluorooxyalkylene-containing polymer residue having the following general formula (3): 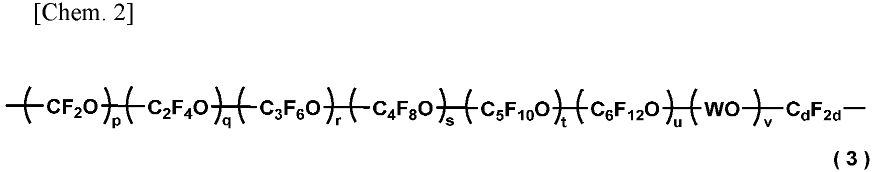 wherein W is a fluoroalkylene group containing at least one hydrogen atom, d is an integer of 1 to 6, p, q, r, s, t, u, and v are each independently an integer of 0 to 450, and p+q+r+s+t+u+v is 10 to 450, and each of these units may be linear or branched, and individual repeat units shown in parentheses with p, q, r, s, t, u, and v may be randomly bonded,
      Rf' is a fluoroalkyl group terminated with a -CF₃ group, and
      A is a monovalent group having the following formula (4): 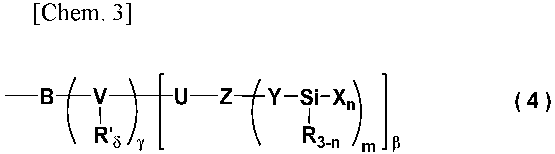 wherein B is a single bond or a divalent organic group, V is a carbon atom, a silicon atom, a nitrogen atom, or a tri- to octavalent organic group, R' is independently a hydrogen atom, a hydroxy group, a C₁-C₄ alkyl group, a phenyl group, a group having an oxyalkylene group, a C₁-C₄ alkoxy group, or a halogen group, U is independently a single bond or a divalent organic group, Z is independently a single bond, or a carbon atom, a silicon atom, a nitrogen atom, or a tri- to octavalent organic group, Y is independently a divalent hydrocarbon group which may contain at least one selected from an oxygen atom, a sulfur atom, a silicon atom, and a siloxane bond, R is independently a C₁-C₄ alkyl group or a phenyl group, X is independently a hydroxy group or a hydrolyzable group, n is independently an integer of 1 to 3 for each bonded silicon atom, m is independently an integer of 1 to 7, β is an integer of 1 to 6, γ is 0 or 1, δ is an integer of 0 to 6, when γ is 0, β is 1, and when γ is 1, the sum of β and δ is an integer of 2 to 7,
      wherein the molar ratio of the component (A) to the component (B) [(A)/(B)] is 1.2 to 4.0.
[2] The fluorine-containing composition of [1], further comprising the following component (C) and/or component (D):
   (C) a fluoropolyether-containing polymer having the following general formula (5)
   (D) a fluoropolyether-containing polymer having a silanol group or a hydrolyzable silyl group having the following general formula (6) and/or a partial (hydrolytic) condensate thereof
      [Chem. 4]

      **A'-Rf¹-A'** **(5)**

      **A-Rf¹-A** **(6)**

      wherein Rf¹ is a divalent fluorooxyalkylene-containing polymer residue having the following formula (7): 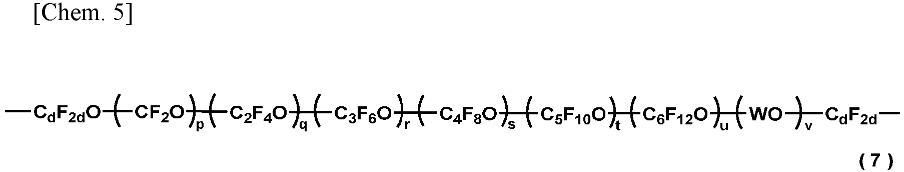 wherein W is a fluoroalkylene group containing at least one hydrogen atom, d is independently an integer of 1 to 6 for each unit, p, q, r, s, t, u, and v are each independently an integer of 0 to 450, and p+q+r+s+t+u+v is 10 to 450, and each of these units may be linear or branched, and individual repeat units shown in parentheses with p, q, r, s, t, u, and v may be randomly bonded,
      A' is a fluorine atom, and
      A is independently the same as described above.
[3] The fluorine-containing composition of [1], wherein in the formulae (1) and (2), B in the formula (4) is a divalent group which may contain at least one of an oxygen atom, a sulfur atom, secondary amine, tertiary amine, ketone, amide, thioamide, and an ester group, selected from the group consisting of a single bond, a C₁-C₁₀ alkylene group, an alkylene group containing a C₆-C₈ arylene group, a divalent group having alkylene groups bonded via a diorganosilylene group, a silalkylene structure, or a silarylene structure, a divalent group having a C₁-C₁₀ alkylene group bonded to a bond of a linear organopolysiloxane residue of 2 to 10 silicon atoms or a branched or cyclic organopolysiloxane residue of 3 to 10 silicon atoms, a carbonyl group, and an amide group.
[4] The fluorine-containing composition of [1], wherein in the formulae (1) and (2), γ in the formula (4) is 1, and V in the formula (4) is any one selected from the group consisting of a carbon atom, a silicon atom, a nitrogen atom, -C(O-)=, a tri- to hexavalent linear organopolysiloxane residue of 2 to 10 silicon atoms, a tri- to hexavalent branched or cyclic organopolysiloxane residue of 3 to 10 silicon atoms, a trivalent isocyanuric group, and a trivalent triazine ring-containing group.
[5] The fluorine-containing composition of [1], wherein in the formulae (1) and (2), Y in the formula (4) is a group selected from the group consisting of a C₁-C₁₀ alkylene group which may contain an oxygen atom or a sulfur atom, an alkylene group containing a C₆-C₈ arylene group, a divalent group having alkylene groups or an alkylene group and an arylene group bonded via a diorganosilylene group, a silalkylene structure, or a silarylene structure, and a divalent group having a C₁-C₁₀ alkylene group bonded to a bond of a linear organopolysiloxane residue of 2 to 10 silicon atoms or a branched or cyclic organopolysiloxane residue of 3 to 10 silicon atoms.
[6] The fluorine-containing composition of [1], wherein in the formulae (1) and (2), U in the formula (4) is any one selected from the group consisting of a single bond, a C₁-C₁₀ alkylene group which may contain an oxygen atom and a sulfur atom, an alkylene group containing a C₆-C₈ arylene group, a divalent group having alkylene groups bonded via a diorganosilylene group, a silalkylene structure, or a silarylene structure, and a divalent group having a C₁-C₁₀ alkylene group bonded to a bond of a linear organopolysiloxane residue of 2 to 10 silicon atoms or a branched or cyclic organopolysiloxane residue of 3 to 10 silicon atoms.
[7] The fluorine-containing composition of [1], wherein in the formulae (1) and (2), Z in the formula (4) is any one selected from the group consisting of a single bond, a carbon atom, a silicon atom, a nitrogen atom, -C(O-)=, a tri- to hexavalent linear organopolysiloxane residue of 2 to 10 silicon atoms, a tri- to hexavalent branched or cyclic organopolysiloxane residue of 3 to 10 silicon atoms, a trivalent isocyanuric group, and a trivalent triazine ring-containing group.
[8] The fluorine-containing composition of [1], wherein in the formulae (1) and (2), X in the formula (4) is selected from the group consisting of a hydroxy group, a C₁-C₁₀ alkoxy group, a C₂-C₁₀ alkoxyalkoxy group, a C₁-C₁₀ acyloxy group, a C₂-C₁₀ alkenyloxy group, and a halogen group.
[9] The fluorine-containing composition of [1], wherein As are the same in the formulae (1) and (2).
[10] The fluorine-containing composition of [1], wherein the fluoropolyether-containing polymer having a silanol group or a hydrolyzable silyl group having the formula (1) is at least one selected from those having the following formulae: 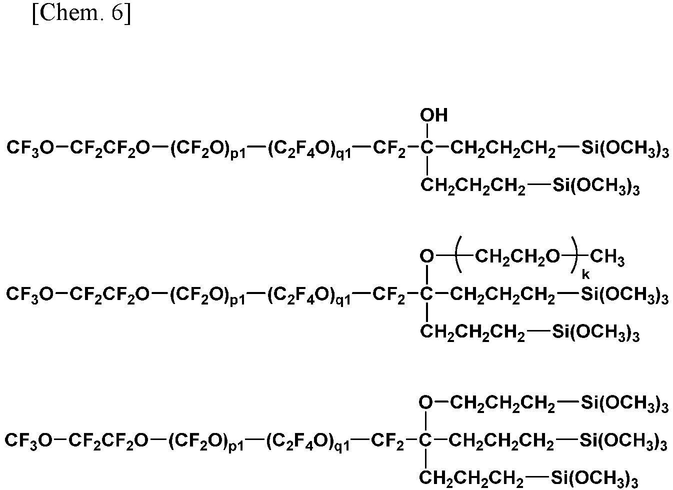 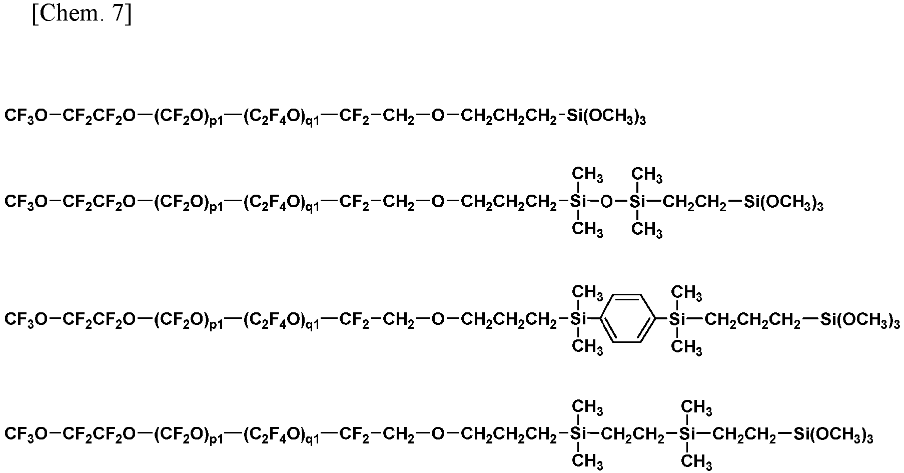 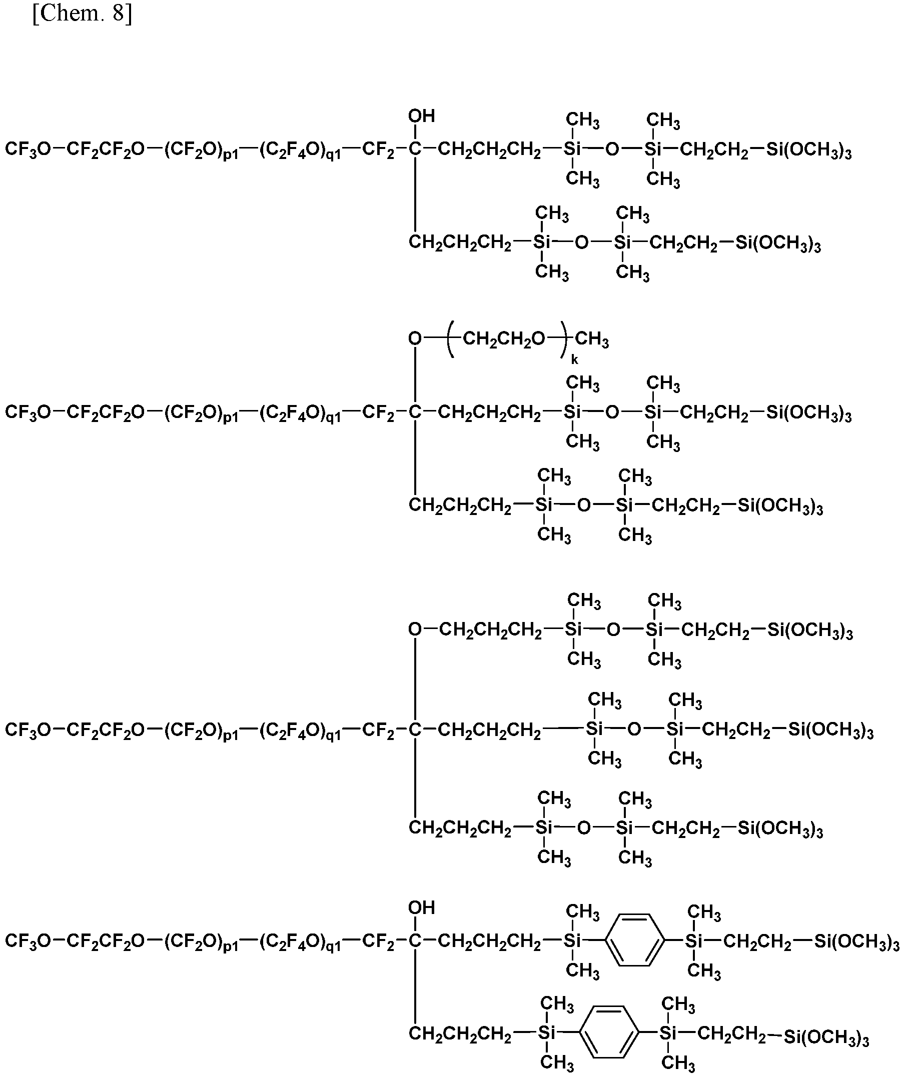 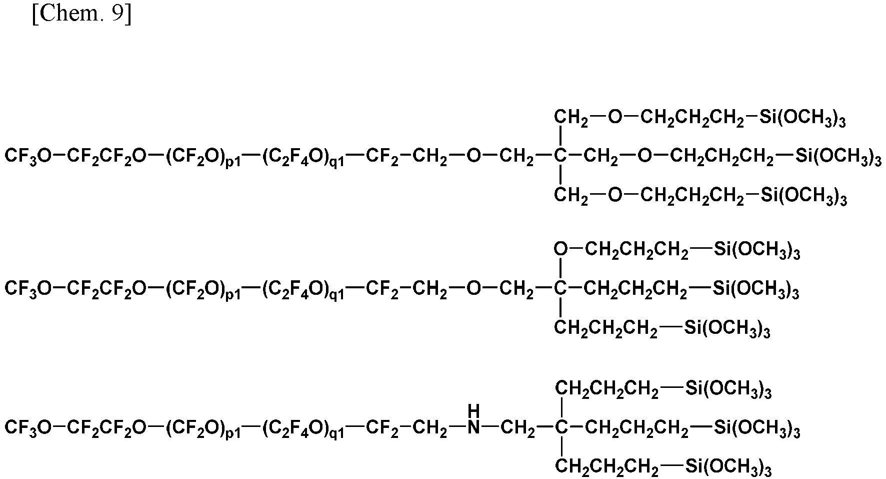 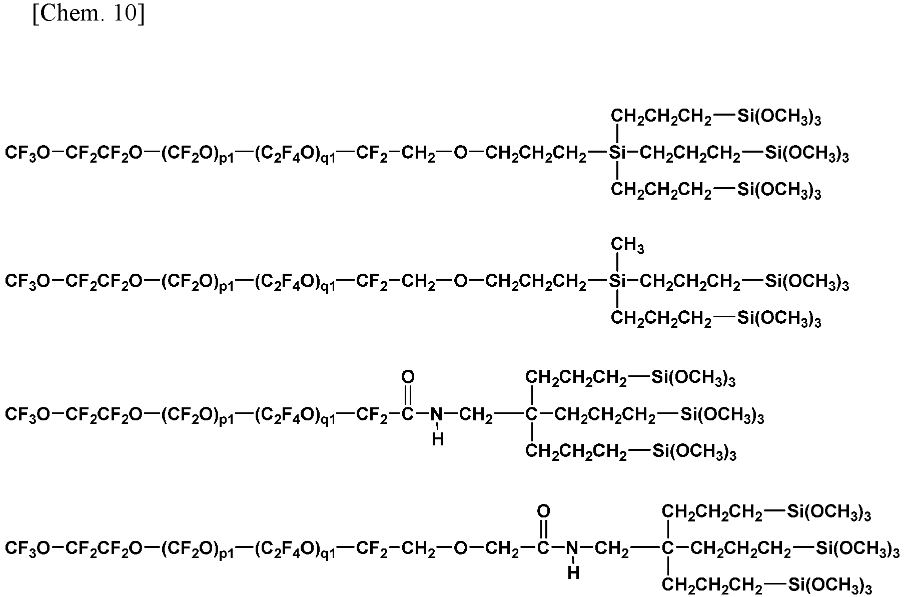 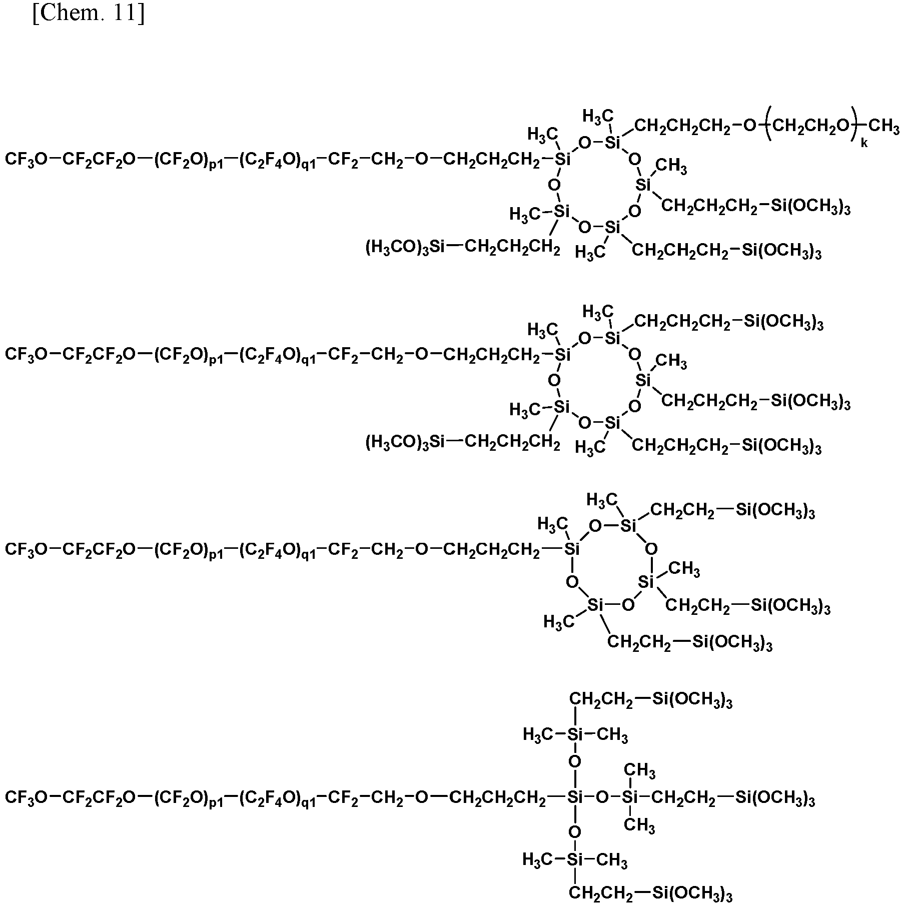 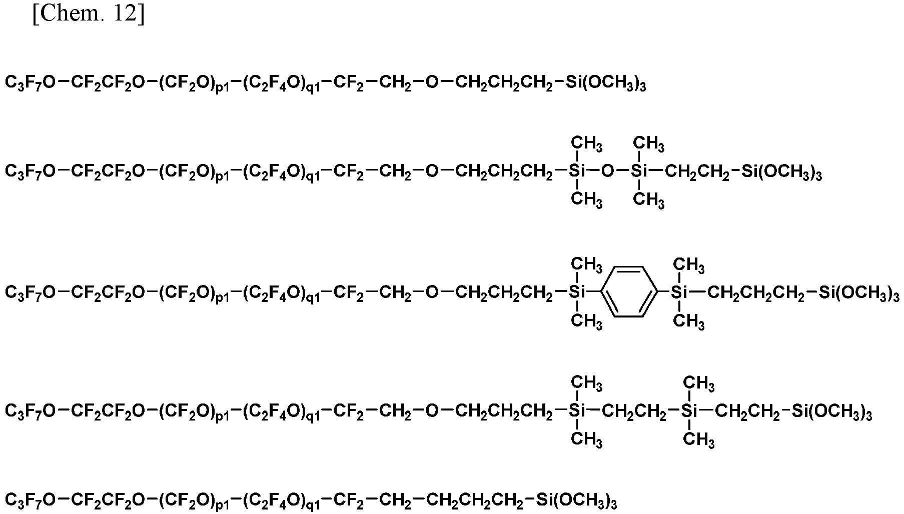 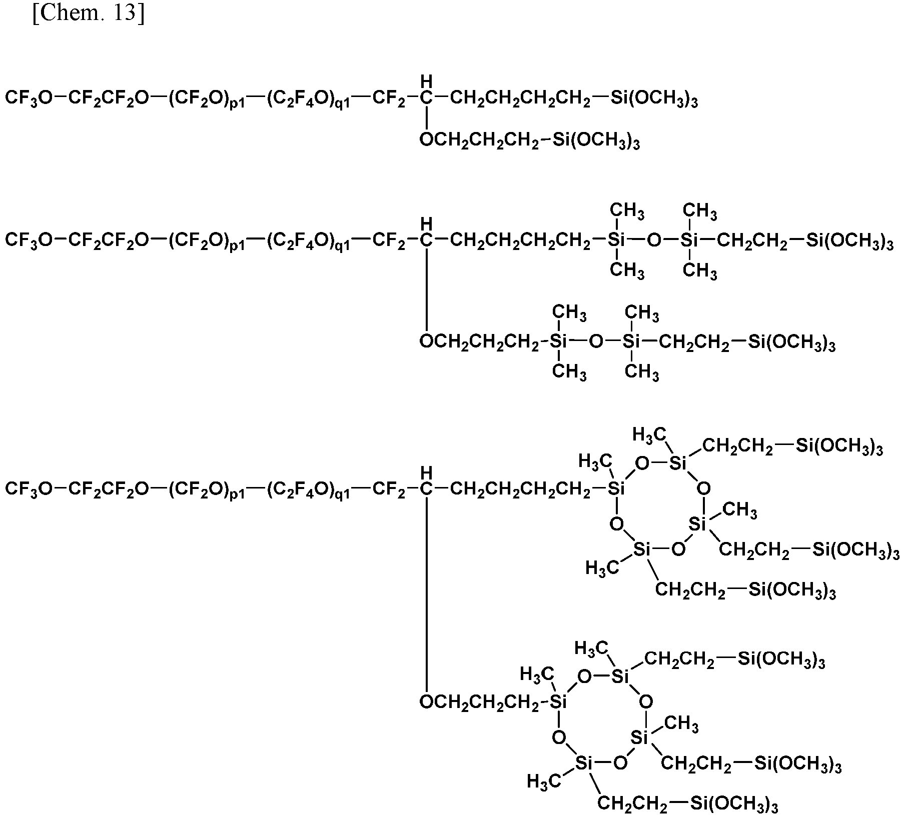 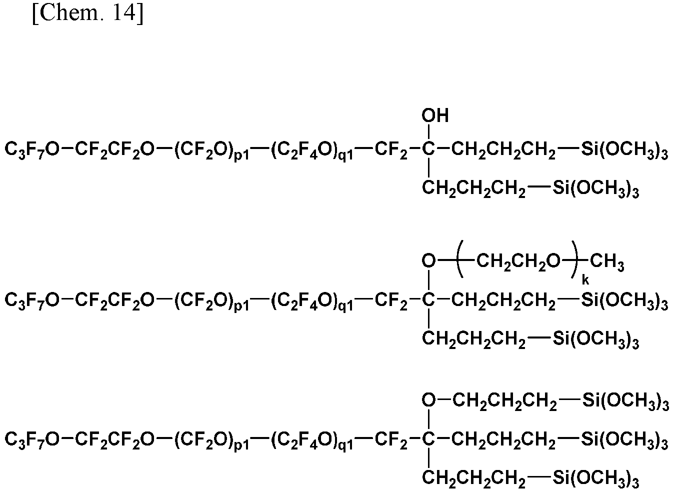 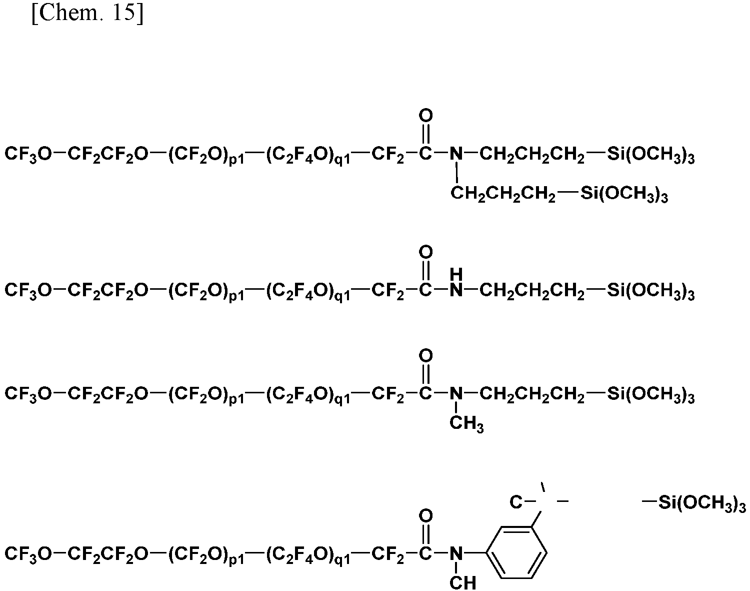 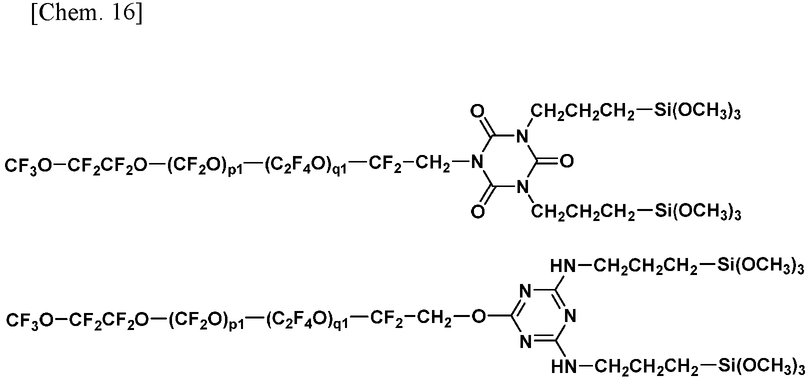 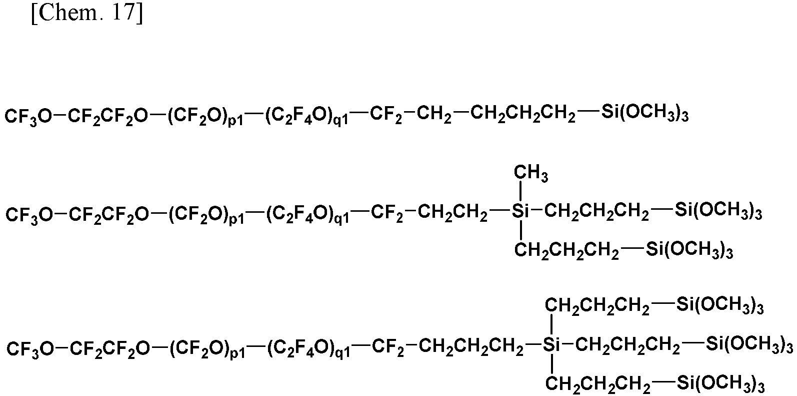 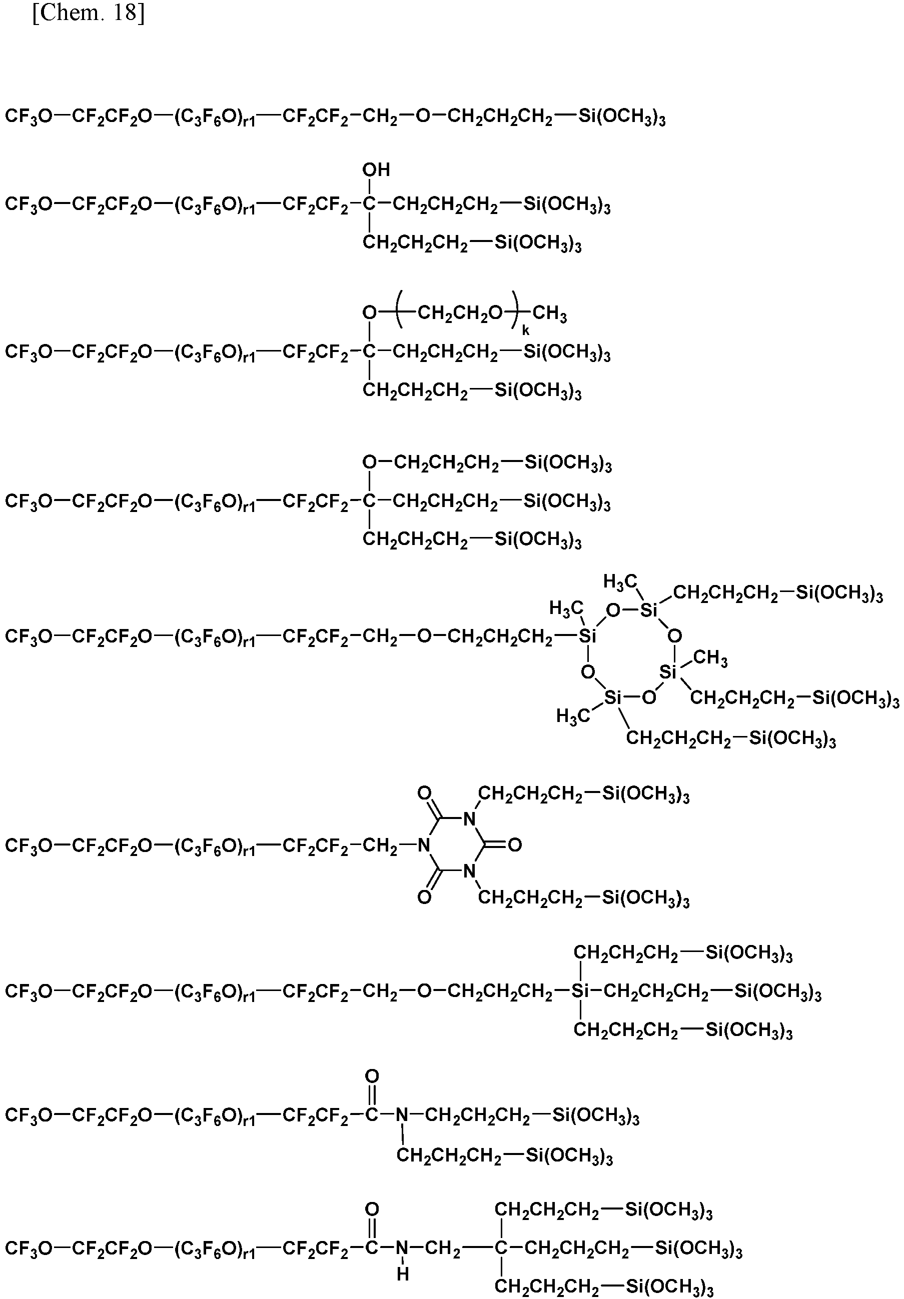 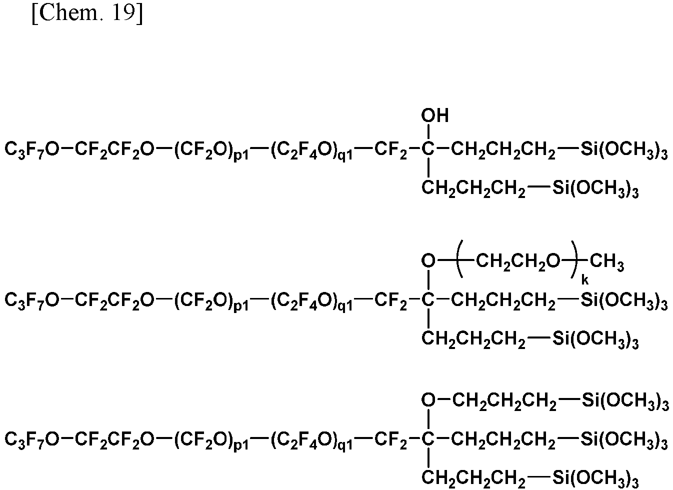 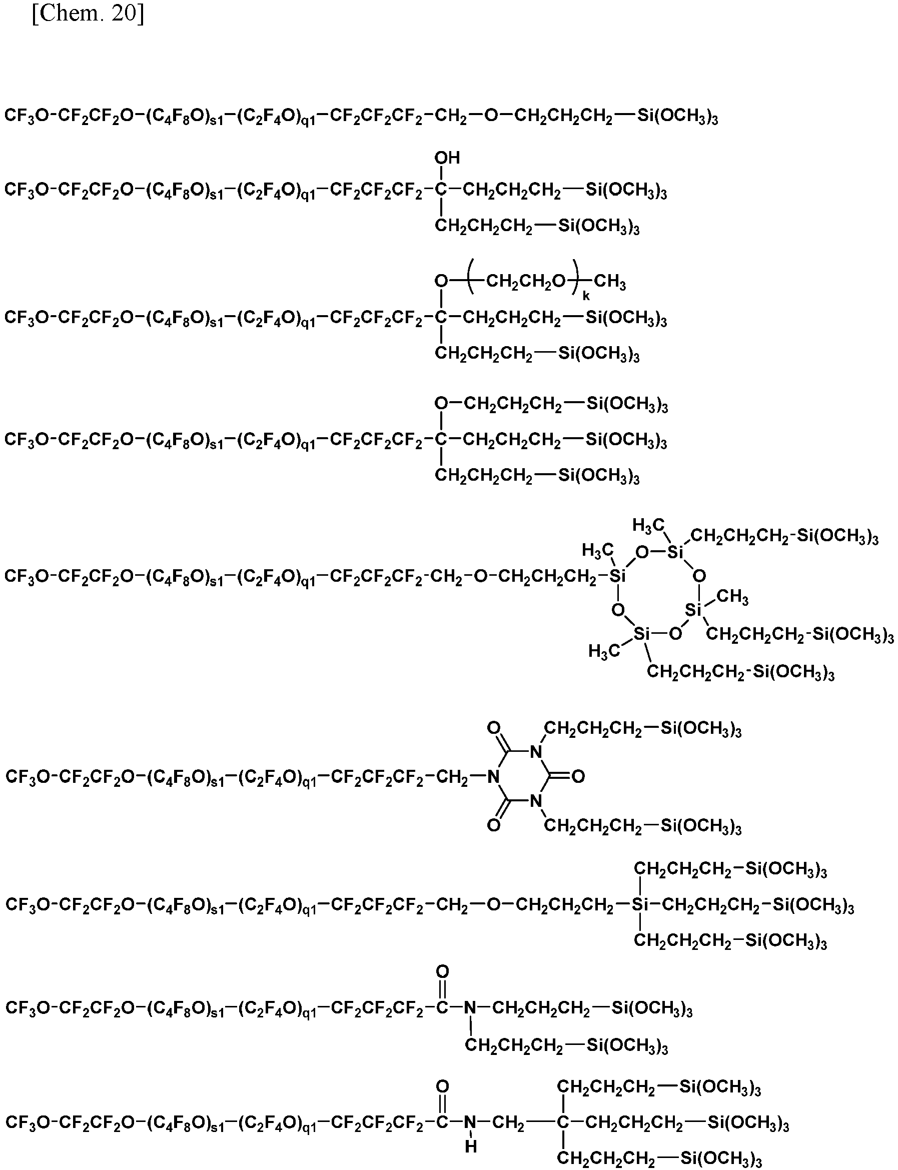 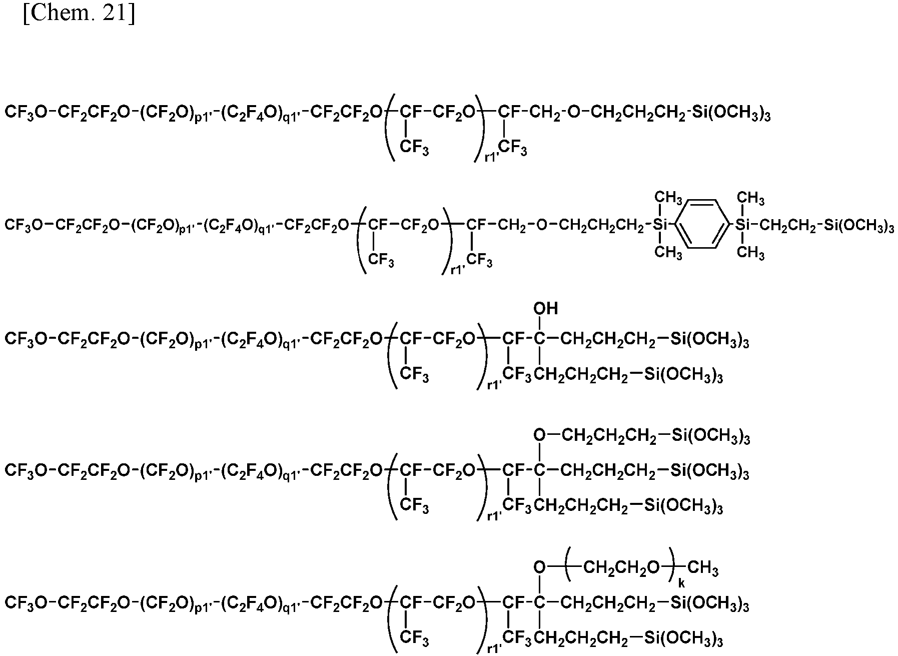 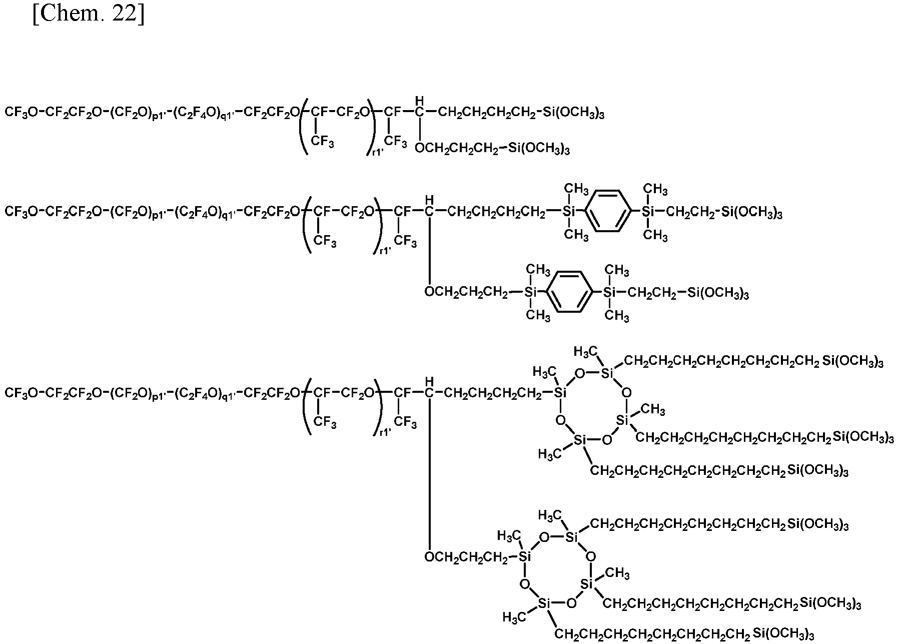 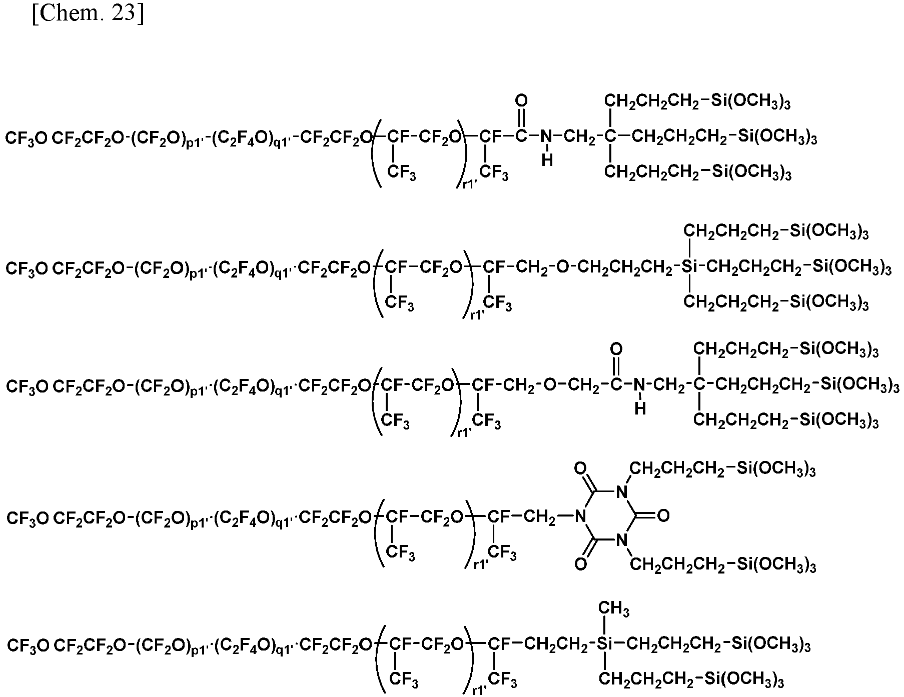 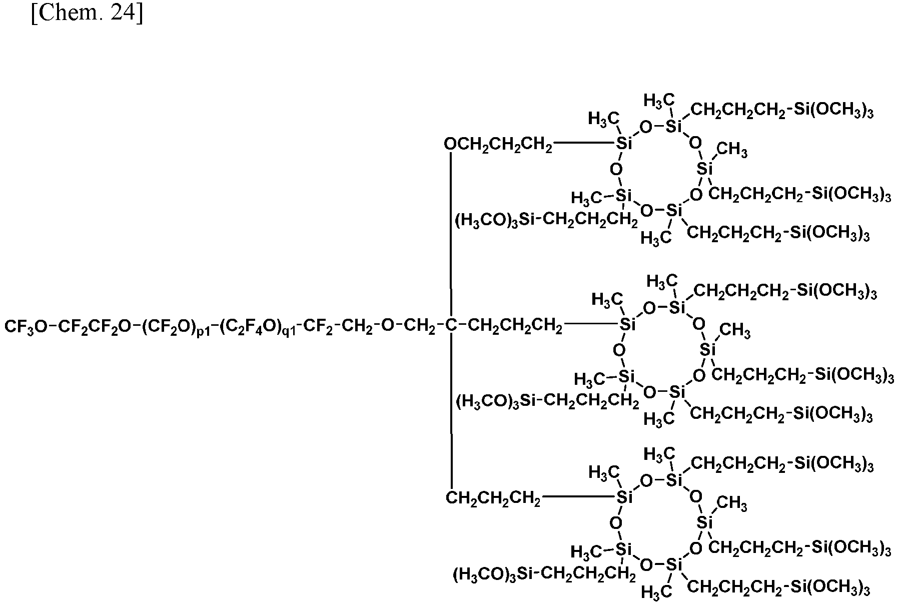 wherein p1, q1, r1, and s1 are each independently an integer of 1 or more, provided that the sum of p1, q1, r1, and s1 in each formula is 10 to 200, p1', q1', and r1' are each independently an integer of 1 or more, provided that the sum of p1', q1', and r1' in each formula is 9 to 199, individual repeat units shown in parentheses with p1, q1, r1, s1, p1', and q1' may be randomly bonded, and k is an integer of 1 to 20.
[11] The fluorine-containing composition of [1], wherein the fluoropolyether-containing polymer having a silanol group or a hydrolyzable silyl group having the formula (2) is at least one selected from those having the following formulae: 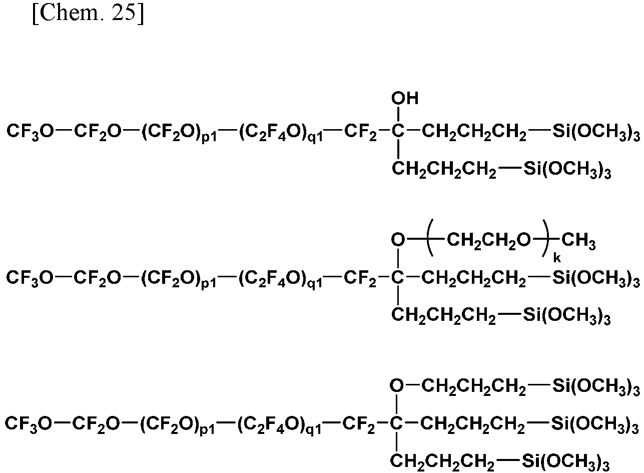 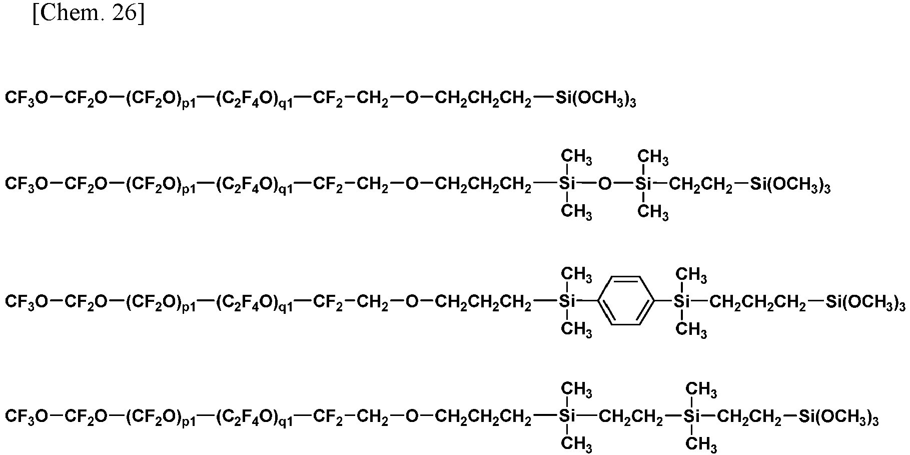 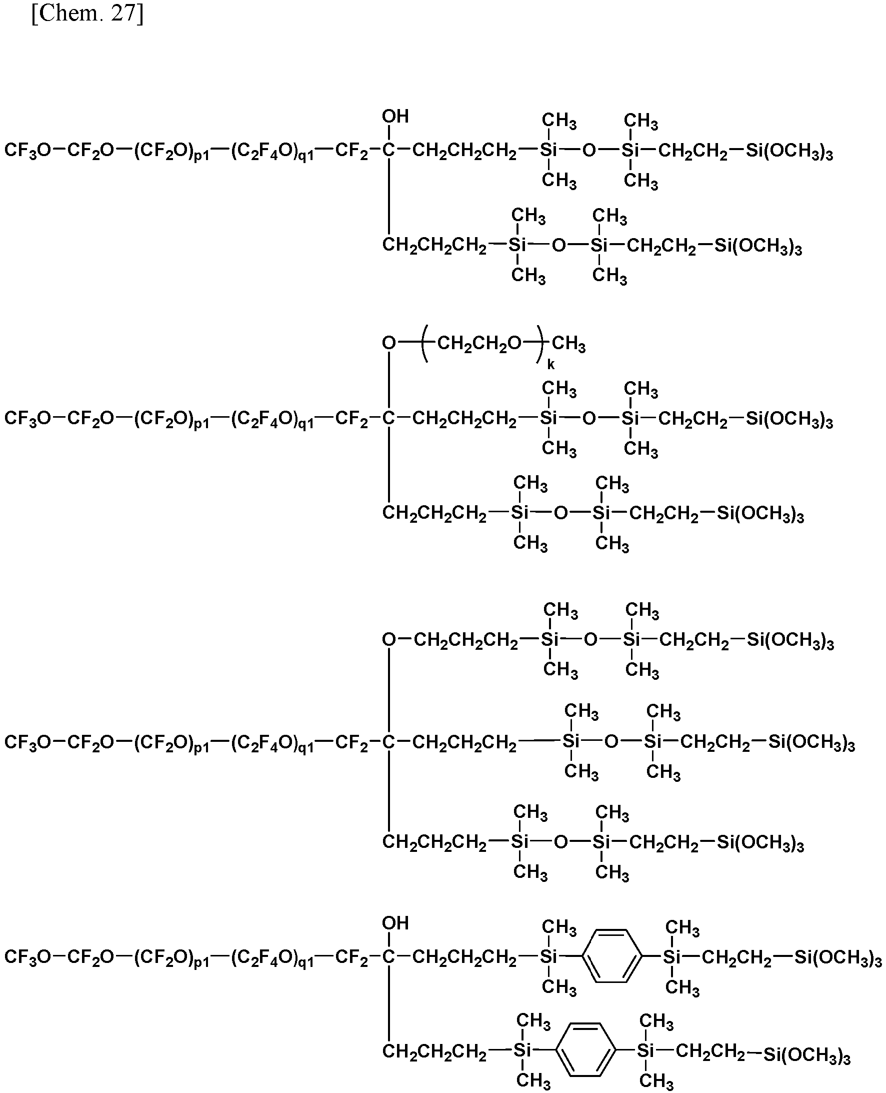 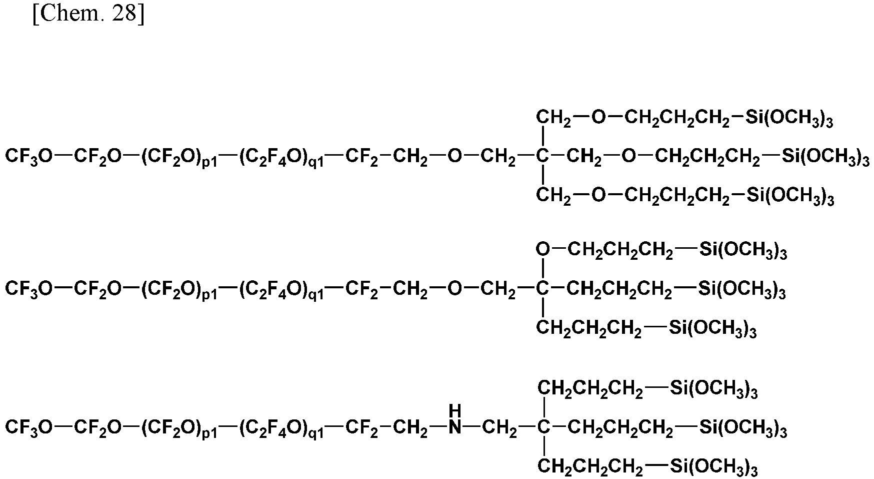 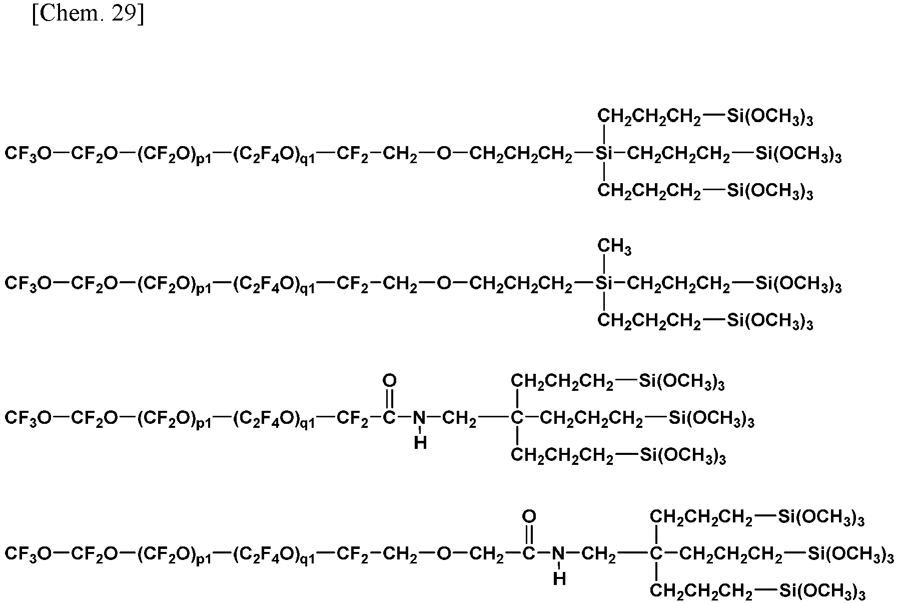 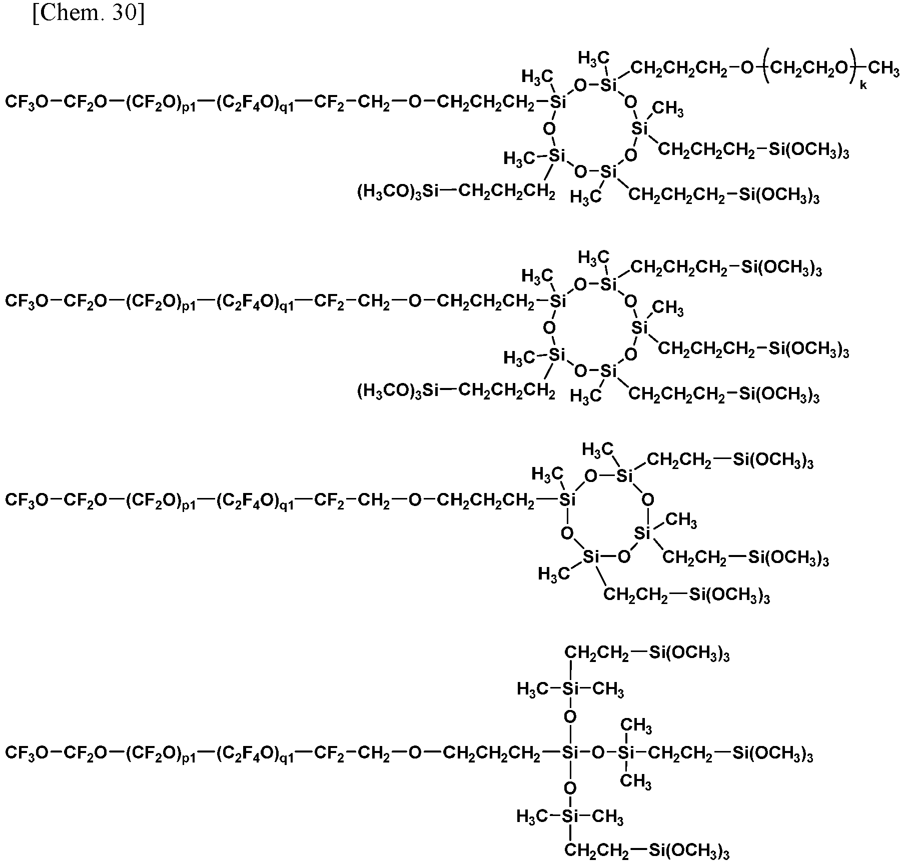 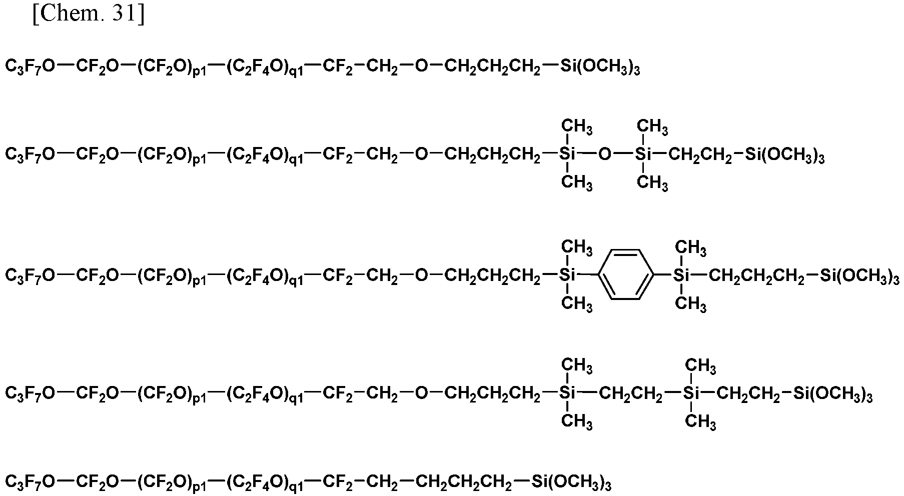 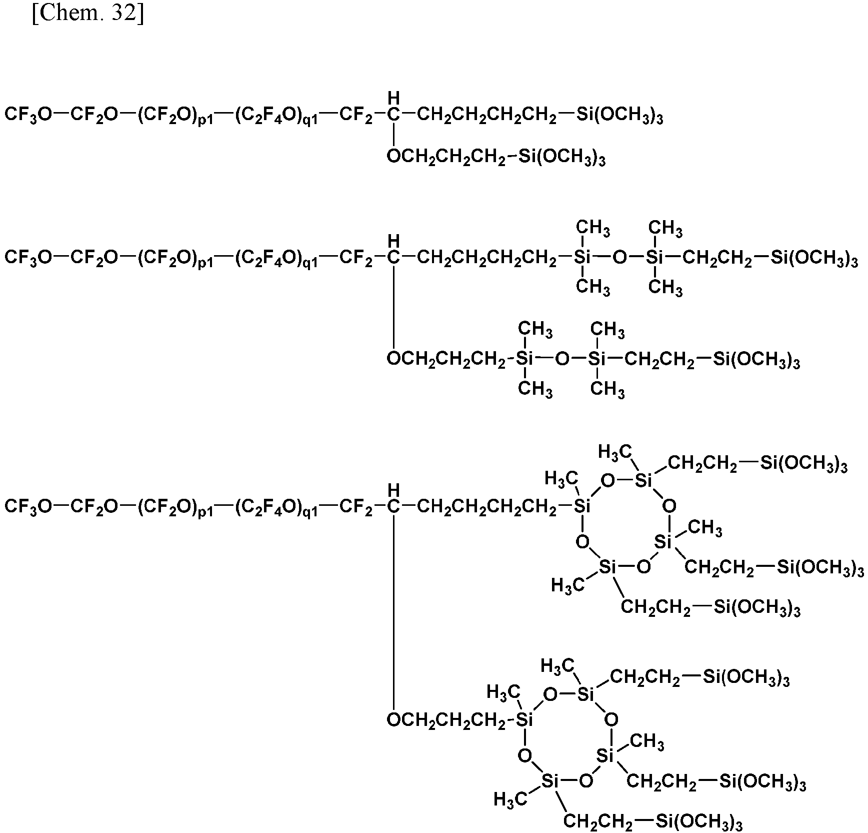 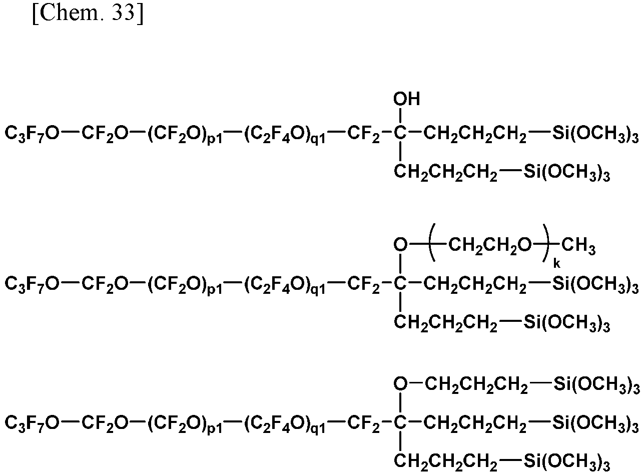 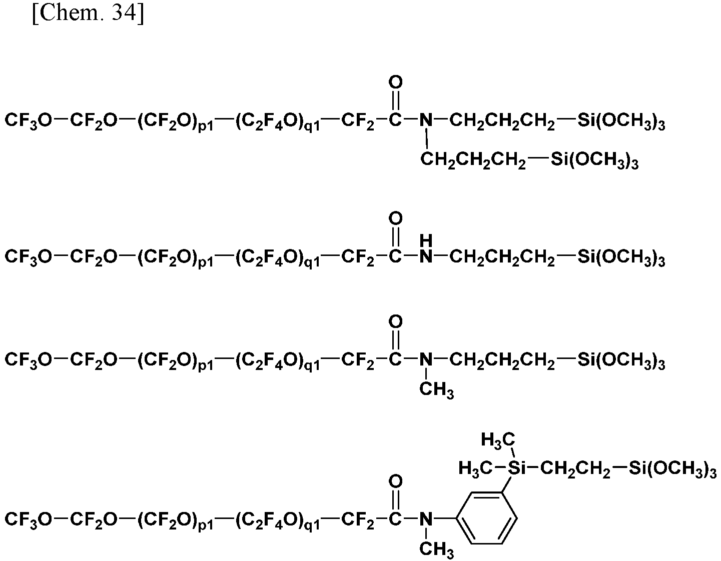 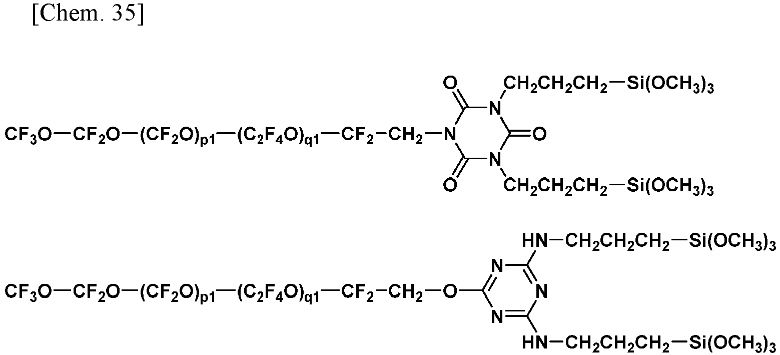 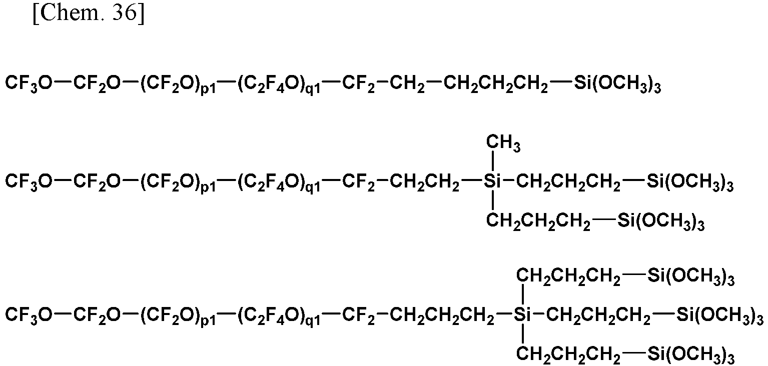 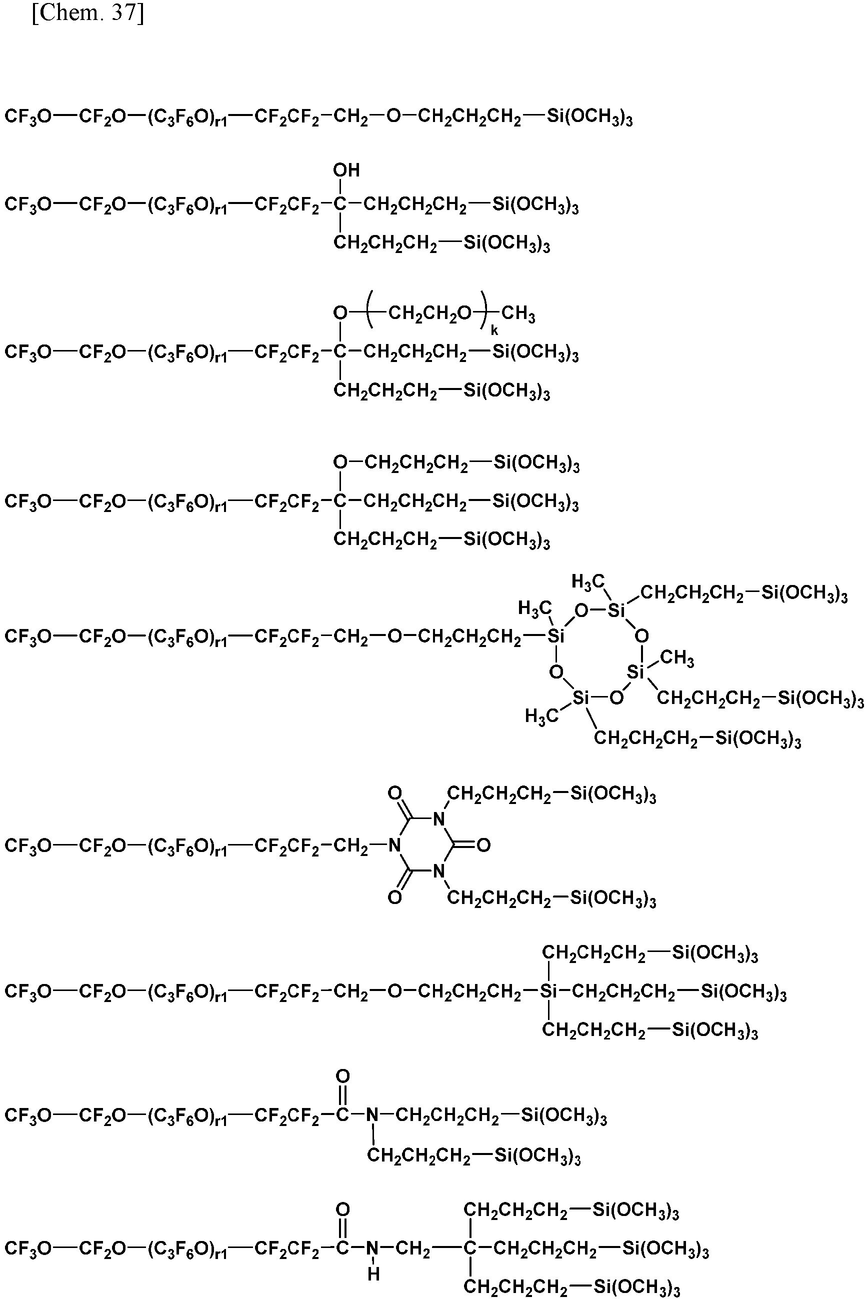 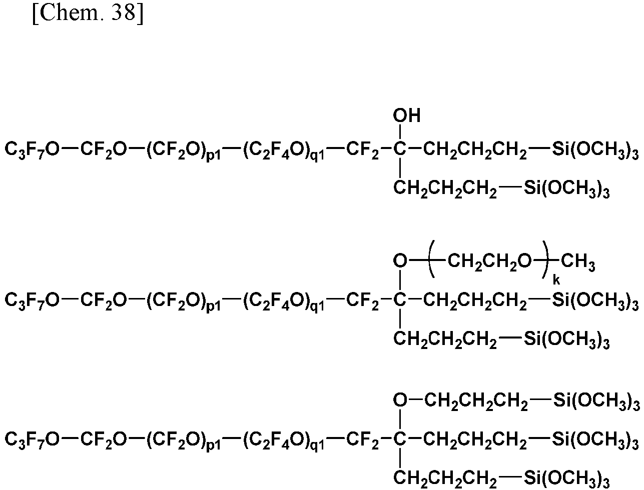 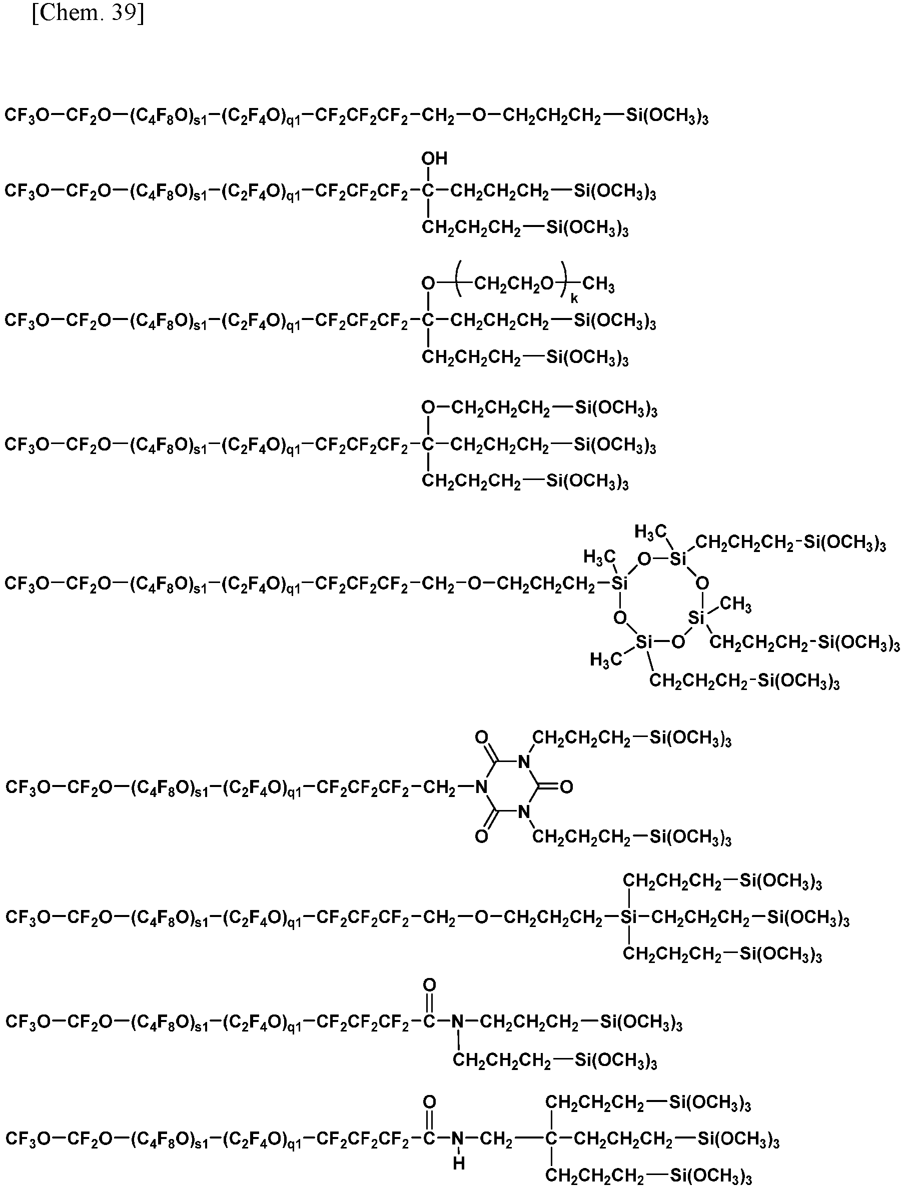 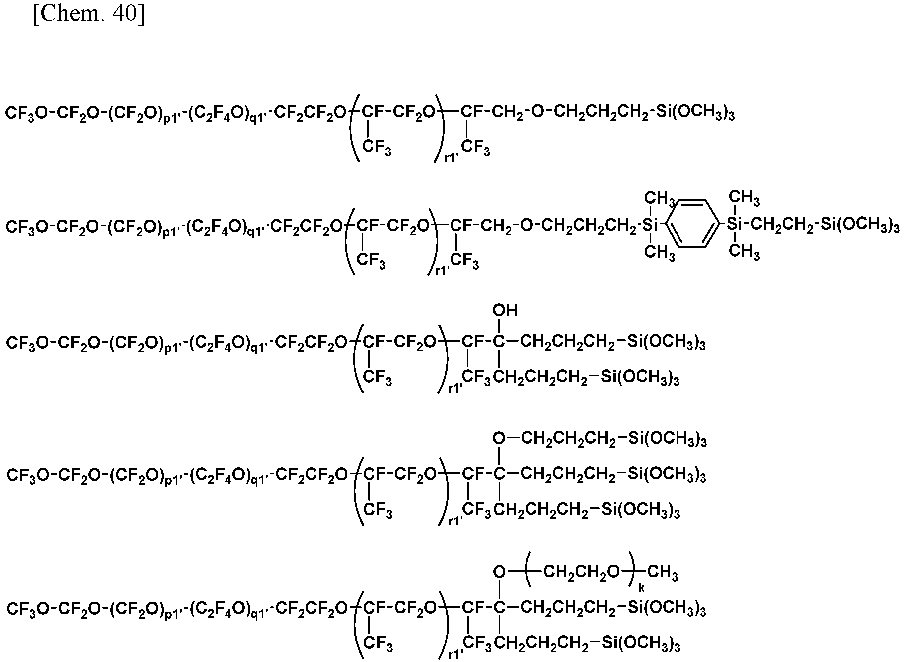 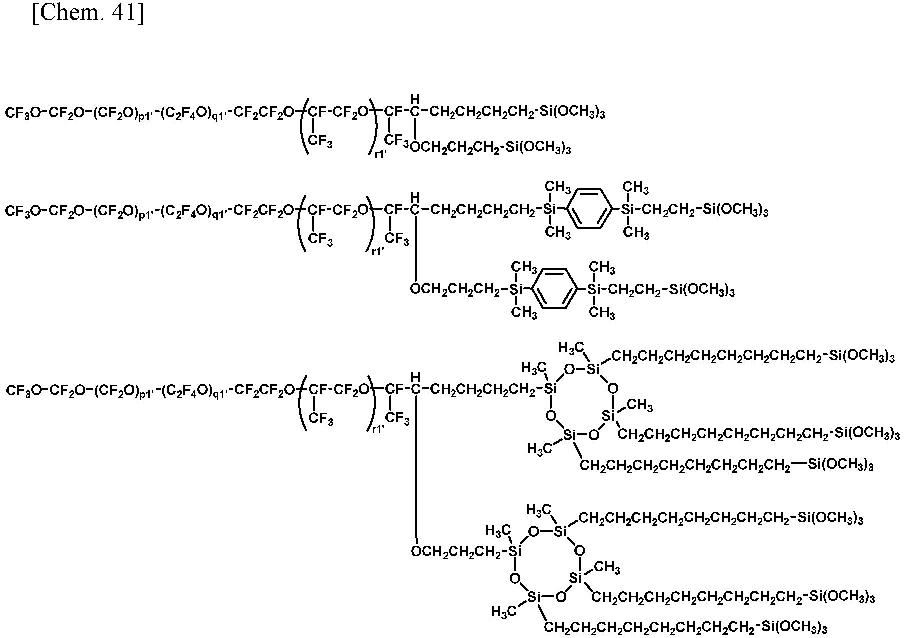 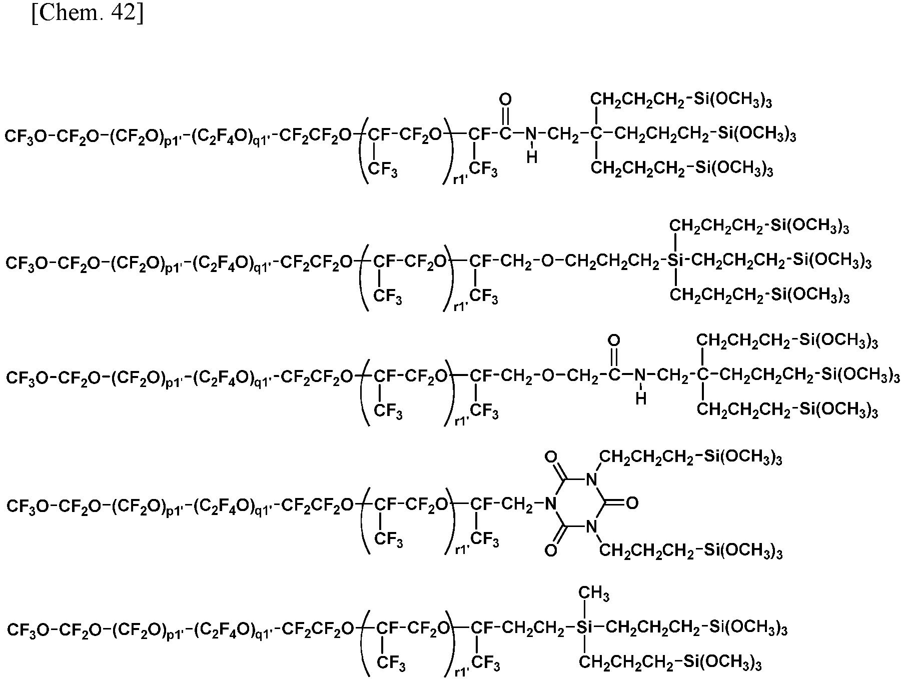 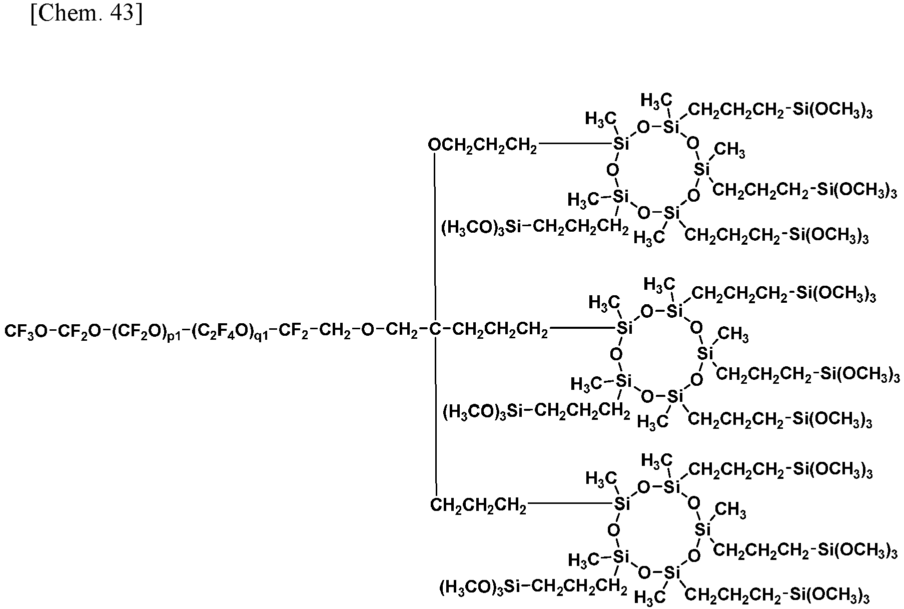 wherein p1, q1, r1, and s1 are each independently an integer of 1 or more, provided that the sum of p1, q1, r1, and s1 in each formula is 10 to 200, p1', q1', and r1' are each independently an integer of 1 or more, provided that the sum of p1', q1', and r1' in each formula is 9 to 199, individual repeat units shown in parentheses with p1, q1, r1, s1, p1', and q1' may be randomly bonded, and k is an integer of 1 to 20.
[12] A surface treatment agent comprising the fluorine-containing composition of [1] to [11].
[13] An article having a surface treated with the surface treatment agent of [12].
[14] The article of [13], which is an optical article.
[15] The article of [13], which is a touch panel display.
[16] The article of [13], which is an antireflective film.
[17] The article of [13], wherein the substrate is SiO₂-deposited glass.
[18] The article of [13], wherein the substrate is strengthened glass.
[19] The article of [13], wherein the substrate is a lens substrate.
[20] The article of [13], wherein the substrate is a quartz substrate.

### ADVANTAGEOUS EFFECTS OF INVENTION

According to the present invention, by using a fluoropolyether-containing polymer having a silanol group or a hydrolyzable silyl group represented by the general formula (1) described later and/or a partial (hydrolytic) condensate thereof and a fluoropolyether-containing polymer having a silanol group or a hydrolyzable silyl group represented by the general formula (2) described later and/or a partial (hydrolytic) condensate thereof in a predetermined ratio, decomposition of the main chain by chemicals such as an alkaline cleaning liquid and heat is suppressed. Thereby, an article having a surface treated with a surface treatment agent comprising a fluorine-containing composition comprising the polymer and/or the partial (hydrolytic) condensate thereof is excellent in water/oil repellency, abrasion resistance, slipperiness, chemical resistance, and heat resistance.

### DESCRIPTION OF EMBODIMENTS

As used herein, the term "about (a value)" is a numerical value (approximate value) obtained by counting fractions over 1/2 as one and disregarding the rest, and when the lowest digit of the numerical value described is not "0", includes a numerical value range in which the numerical value described is reached by counting fractions of the digit below the lowest digit over 1/2 as one and disregarding the rest. For example, "about 3 equivalents" implies a range from 2.5 equivalents to 3.4 equivalents, and "about 0.02 equivalent" implies a range from 0.015 equivalent to 0.024 equivalent. When the lowest digit of the numerical value described is "0", the term "about (a value)" includes a numerical value range in which the numerical value described is reached by counting fractions of the lowest digit over 1/2 as one and disregarding the rest. For example, "about 80°C" implies a range from 75°C to 84°C.

The fluorine-containing composition of the present invention is a fluorine-containing composition comprising, as a fluoropolyether-containing polymer having a fluoropolyether group (a monovalent fluorooxyalkylene-containing polymer residue) and a reactive functional group in the molecule, a component (A) that is a fluoropolyether-containing polymer having a silanol group (a hydroxy group bonded to a silicon atom) or a hydrolyzable silyl group represented by the following general formula (1) and/or a partial (hydrolytic) condensate thereof and a component (B) that is a fluoropolyether-containing polymer having a silanol group (a hydroxy group bonded to a silicon atom) or a hydrolyzable silyl group represented by the following general formula (2) and/or a partial (hydrolytic) condensate thereof, in which a molar ratio of the component (A) to the component (B) [(A)/(B)] is 1.2 to 4.0.

The difference in structure between OCF₂CF₂ORf of the formula (1) and OCF₂ORf of the formula (2) can be confirmed by measuring ¹⁹F-NMR.
(A) A fluoropolyether-containing polymer having a silanol group or a hydrolyzable silyl group having the following general formula (1):
   [Chem. 44]

   **Rf'OCF₂CF₂O-Rf-A** **(1)**

   and/or a partial (hydrolytic) condensate thereof,
(B) a fluoropolyether-containing polymer having a silanol group or a hydrolyzable silyl group having the following general formula (2):
   [Chem. 45]

   **Rf'OCF₂O-Rf-A** **(2)**

   and/or a partial (hydrolytic) condensate thereof, wherein Rf is a divalent fluorooxyalkylene-containing polymer residue having the following general formula (3): 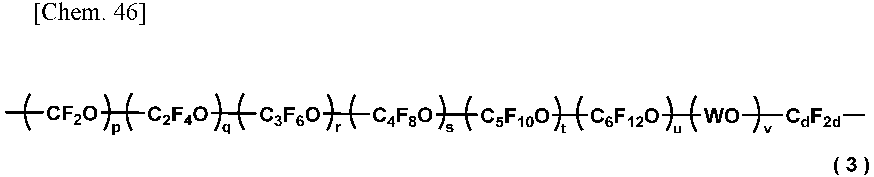 wherein W is a fluoroalkylene group containing at least one hydrogen atom, d is an integer of 1 to 6, p, q, r, s, t, u, and v are each independently an integer of 0 to 450, and p+q+r+s+t+u+v is 10 to 450, and each of these units may be linear or branched, and individual repeat units shown in parentheses with p, q, r, s, t, u, and v may be randomly bonded,
   Rf' is a fluoroalkyl group terminated with a -CF₃ group, and
   A is a monovalent group having the following formula (4): 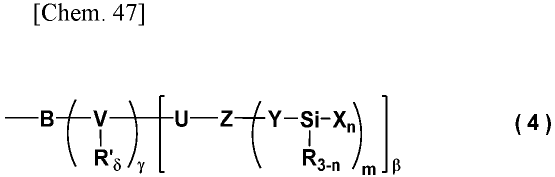
   wherein B is a single bond or a divalent organic group, V is a carbon atom, a silicon atom, a nitrogen atom, or a tri- to octavalent organic group, R' is independently a hydrogen atom, a hydroxy group, a C₁-C₄ alkyl group, a phenyl group, a group having an oxyalkylene group, a C₁-C₄ alkoxy group, or a halogen group, U is independently a single bond or a divalent organic group, Z is independently a single bond, or a carbon atom, a silicon atom, a nitrogen atom, or a tri- to octavalent organic group, Y is independently a divalent hydrocarbon group which may contain at least one selected from an oxygen atom, a sulfur atom, a silicon atom, and a siloxane bond, R is independently a C₁-C₄ alkyl group or a phenyl group, X is independently a hydroxy group or a hydrolyzable group, n is independently an integer of 1 to 3 for each bonded silicon atom, m is independently an integer of 1 to 7, β is an integer of 1 to 6, γ is 0 or 1, δ is an integer of 0 to 6, when γ is 0, β is 1, and when γ is 1, the sum of β and δ is an integer of 2 to 7.

In the present invention, by using a fluoropolyether-containing polymer having a silanol group or a hydrolyzable silyl group represented by the general formula (1) and/or a partial (hydrolytic) condensate thereof as the component (A) and a fluoropolyether-containing polymer having a silanol group or a hydrolyzable silyl group represented by the general formula (2) and/or a partial (hydrolytic) condensate thereof as the component (B) in a predetermined ratio, decomposition of the main chain (divalent fluorooxyalkylene-containing polymer residue Rf) by chemicals such as an alkaline cleaning liquid and heat is suppressed. Thereby, an article having a surface treated with a surface treatment agent comprising a fluorine-containing composition comprising the polymer and/or the partial (hydrolytic) condensate thereof is excellent in water/oil repellency, abrasion resistance, slipperiness, chemical resistance, and heat resistance.

In the formulae (1) and (2), Rf is a divalent fluorooxyalkylene-containing polymer residue represented by the following general formula (3): 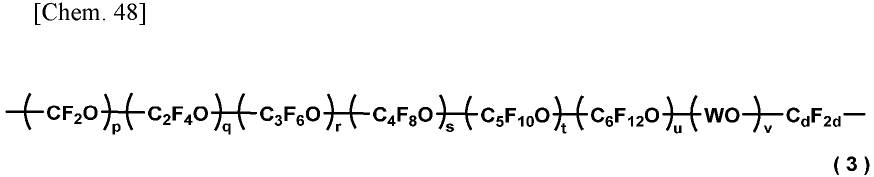 wherein W is a fluoroalkylene group containing at least one hydrogen atom, d is an integer of 1 to 6, p, q, r, s, t, u, and v are each independently an integer of 0 to 450, p+q+r+s+t+u+v is 10 to 450, each of these units may be linear or branched, and individual repeat units shown in parentheses with p, q, r, s, t, u, and v may be randomly bonded.

In the formula (3), W is a fluoroalkylene group containing at least one hydrogen atom, examples of which include perfluoroalkylene groups such as CF₂, C₂F₄, C₃F₆, C₄F₈, C₅F₁₀ and C₆F₁₂ in which one or two fluorine atoms are substituted by hydrogen atom.

In the formula (3), d is an integer of 1 to 6, preferably 1 or 2.

Also, p, q, r, s, t, u, and v are each independently an integer of 0 to 450, preferably p is an integer of 0 to 100, q is an integer of 0 to 100, r is an integer of 0 to 100, s is an integer of 0 to 100, t is an integer of 0 to 100, u is an integer of 0 to 100, v is an integer of 0 to 100, p+q+r+s+t+u+v is 10 to 450, preferably 10 to 200, more preferably 10 to 100. When p+q+r+s+t+u+v is not more than the upper limit, adhesion and curability are satisfactory, and when the same is not less than the lower limit, the characteristics of fluoropolyether group can be fully developed, which is preferable.

In the formula (3), each unit may be linear or branched. Also, individual repeat units shown in parentheses with p, q, r, s, t, u, and v may be randomly bonded.

Specific examples of Rf include those shown below. In the following structures, a left bond is bonded to OCF₂O or OCF₂CF₂O, and a right bond is bonded to A. 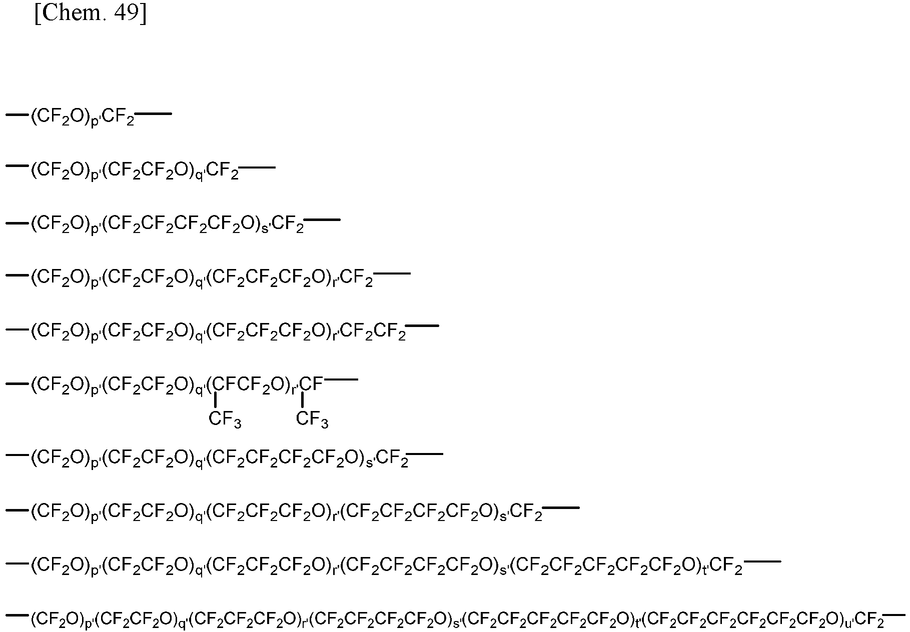 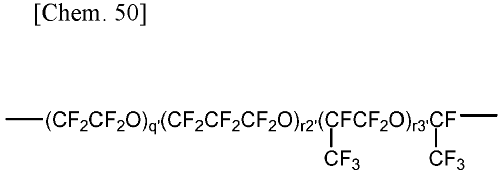 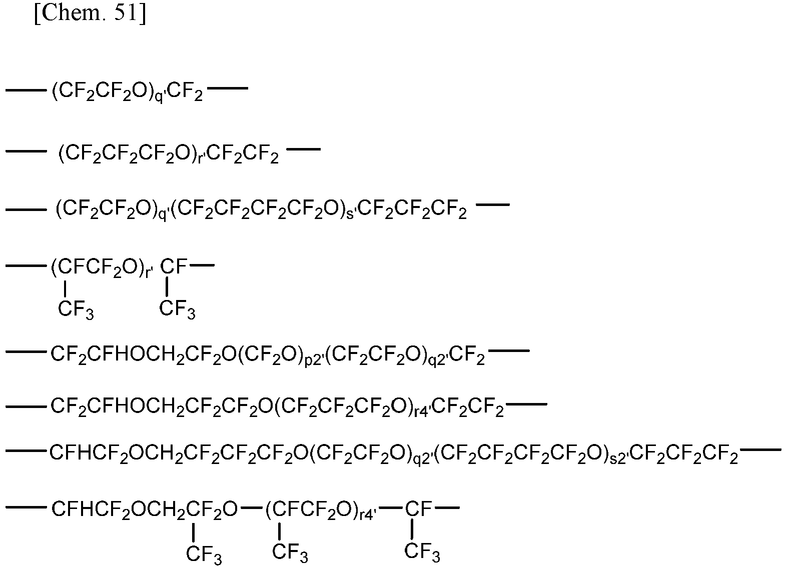 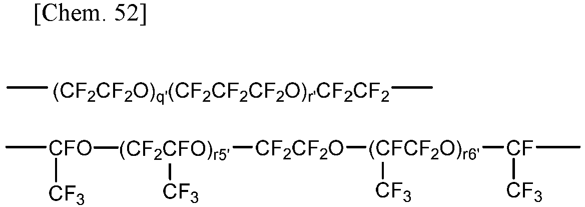 wherein p', q', r', s', t', u', r2', and r3' are each independently an integer of 1 or more, preferably each independently an integer of 1 to 195, more preferably each independently an integer of 2 to 100, and the sum of p', q', r', s', t', u', r2', and r3' in each formula is 10 to 200, p2', q2', r4', s2', r5', and r6' are each independently an integer of 1 or more, preferably each independently an integer of 1 to 197, more preferably each independently an integer of 2 to 100, and the sum of p2', q2', r4', s2', r5', and r6' in each formula is 8 to 198, and individual repeat units shown in parentheses with p', q', r', s', t', u', r2', r3', p2', q2', and s2' may be randomly bonded.

In the formulae (1) and (2), Rf' is a fluoroalkyl group terminated with a -CF₃ group, preferably a -CF₃ group, a -CF₂CF₃ group, or a -CF₂CF₂CF₃ group.

In the formulae (1) and (2), A is a monovalent group represented by the following formula (4). A in the formulae (1) and (2) may be the same or different, but are preferably the same from the viewpoint of compatibility between the component (A) and the component (B) and substrate adhesion of a cured film obtained by curing the fluorine-containing composition of the present invention. 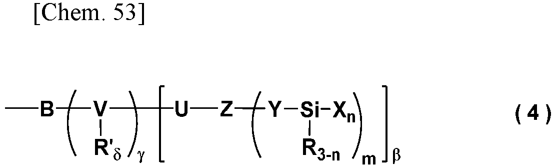 wherein B is a single bond or a divalent organic group, V is a carbon atom, a silicon atom, a nitrogen atom, or a tri- to octavalent organic group, R' is independently a hydrogen atom, a hydroxy group, a C₁-C₄ alkyl group, a phenyl group, a group having an oxyalkylene group, a C₁-C₄ alkoxy group, or a halogen group, U is independently a single bond or a divalent organic group, Z is independently a single bond, or a carbon atom, a silicon atom, a nitrogen atom, or a tri- to octavalent organic group, Y is independently a divalent hydrocarbon group which may contain at least one selected from an oxygen atom, a sulfur atom, a silicon atom, and a siloxane bond, R is independently a C₁-C₄ alkyl group or a phenyl group, X is independently a hydroxy group or a hydrolyzable group, n is independently an integer of 1 to 3 for each bonded silicon atom, m is independently an integer of 1 to 7, β is an integer of 1 to 6, γ is 0 or 1, δ is an integer of 0 to 6, when γ is 0, β is 1, and when γ is 1, the sum of β and δ is an integer of 2 to 7.

In the formula (4), B is a single bond or a divalent organic group, and is a linking group connecting an Rf group and a V group (or a Z group or a Y group). The divalent organic group is preferably a divalent group selected from the group consisting of a C₁-C₁₀ alkylene group, an alkylene group containing a C₆-C₈ arylene group, a divalent group having alkylene groups bonded via a diorganosilylene group, a silalkylene structure, or a silarylene structure, a divalent group having a C₁-C₁₀ alkylene group bonded to a bond of a linear organopolysiloxane residue of 2 to 10 silicon atoms or a branched or cyclic organopolysiloxane residue of 3 to 10 silicon atoms, a carbonyl group, and an amide group, and the divalent organic group may contain at least one of an oxygen atom, a sulfur atom, secondary amine, tertiary amine, ketone, amide, thioamide, and an ester group.

Here, as the group bonded to a silicon atom of the diorganosilylene group, the silalkylene structure, the silarylene structure, the organopolysiloxane residue, and the like, a C₁-C₈, preferably C₁-C₄ alkyl group such as methyl, ethyl, propyl or butyl, or a phenyl group is preferable. Also, the alkylene group in the silalkylene structure is preferably a C₂-C₆, preferably C₂-C₄ alkylene group such as ethylene, propylene (trimethylene, methylethylene), butylene (tetramethylene, methylpropylene), or the like.

Examples of such B include the following groups in addition to a single bond. In the following structure, a left bond is bonded to Rf, and a right bond is bonded to V (or Z or Y). 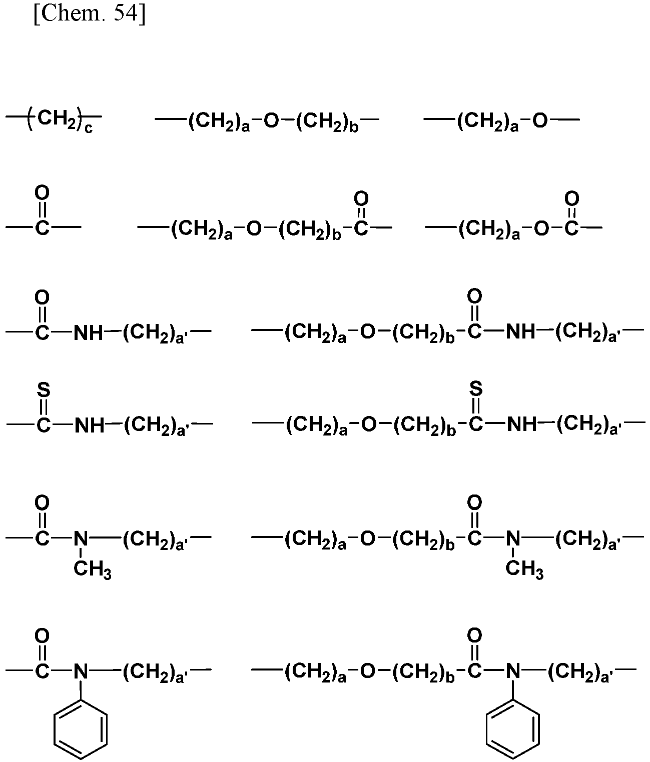 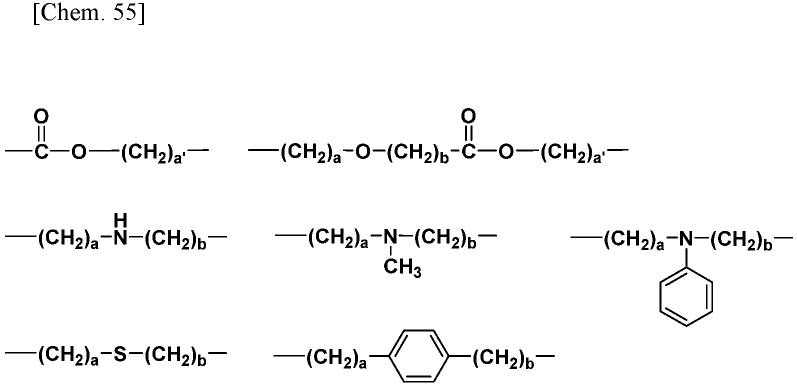 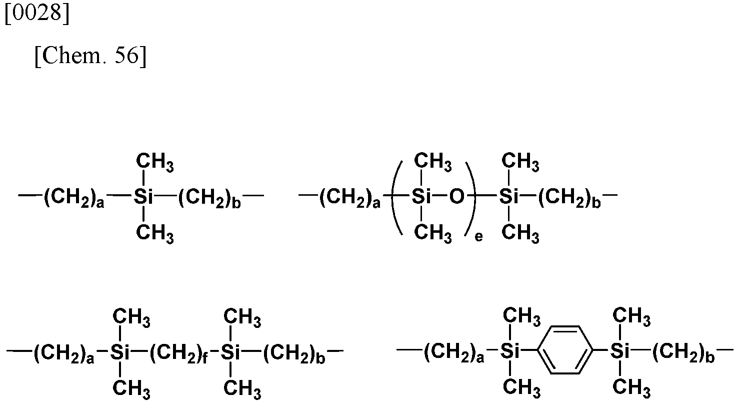 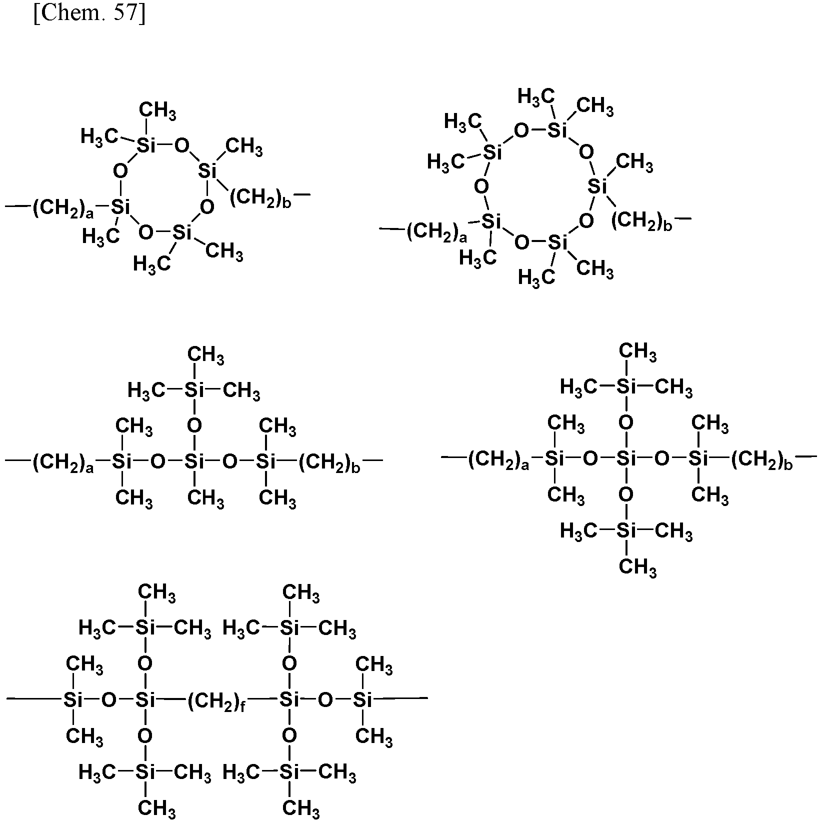 wherein f is an integer of 2 to 4, a, a', and b are each an integer of 1 to 4, c is an integer of 1 to 10, and e is an integer of 1 to 9.

In the formula (4), V is a carbon atom, a silicon atom, a nitrogen atom, or a tri- to octavalent organic group, and is preferably a carbon atom, a silicon atom, a nitrogen atom, -C(O-)=, a tri- to octavalent organic group such as a tri- to hexavalent linear organopolysiloxane residue of 2 to 10 silicon atoms, particularly 2 to 8 silicon atoms, a tri- to hexavalent branched or cyclic organopolysiloxane residue of 3 to 10 silicon atoms, particularly 3 to 8 silicon atoms, a trivalent isocyanuric group, or a trivalent triazine ring-containing group. In addition, the organopolysiloxane residue may contain a silalkylene structure in which two silicon atoms are bonded by an alkylene group, that is, Si-(CH₂)ₓ-Si (wherein x is an integer of 2 to 6).

The organopolysiloxane residue preferably has a C₁-C₈, preferably C₁-C₄ alkyl group such as methyl, ethyl, propyl or butyl, or a phenyl group.

Examples of such V include those shown below. In the following structures, a left bond is bonded to B (or Rf), and the other bonds are bonded to U (or Y) or R'.

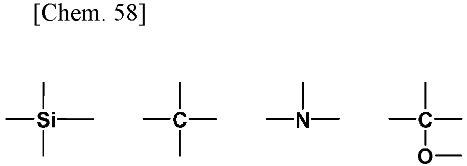

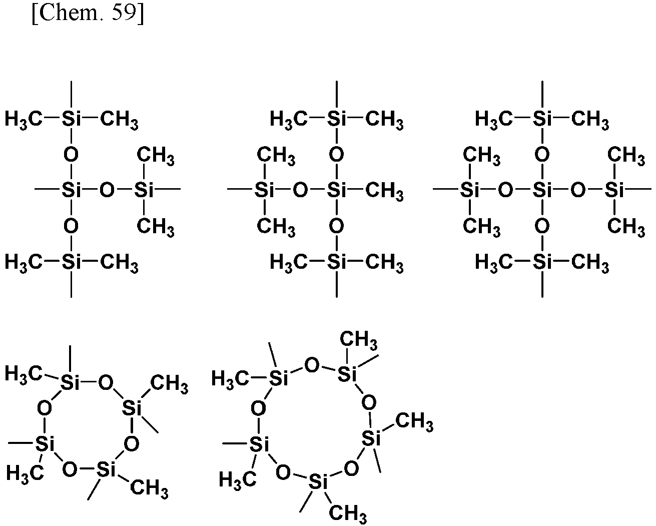

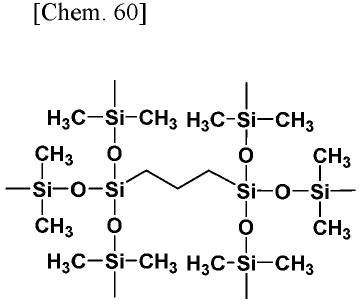

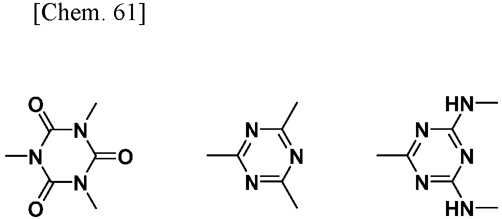

In the formula (4), R' is independently a hydrogen atom, a hydroxy group, a C₁-C₄ alkyl group such as methyl, ethyl, propyl or butyl, a phenyl group, a group having an oxyalkylene group, a C₁-C₄ alkoxy group such as methoxy, ethoxy, propoxy or butoxy, or a halogen group such as fluorine, chlorine, bromine or iodine, preferably a hydrogen atom, a hydroxy group, a methyl group, or a group having an oxyalkylene group.

The group having an oxyalkylene group can be represented by -W'(-(LO)ₖ-R")_{f'}.

Here, W' is a single bond, an oxygen atom, a divalent or trivalent group which is X' or a combination of X' and an oxygen atom, X' is a divalent or trivalent group containing a C₁-C₂₀ divalent hydrocarbon group which may contain a nitrogen atom, a silicon atom, a siloxane bond, a silalkylene bond or a silarylene bond, the silicon atom preferably has a C₁-C₈, preferably C₁-C₄ alkyl group such as methyl, ethyl, propyl or butyl, or a phenyl group, and may contain a hydroxy group or a hydrolyzable group. Also, the alkylene group in the silalkylene bond is preferably a C₂-C₆, preferably C₂-C₄ alkylene group such as ethylene, propylene (trimethylene, methylethylene), butylene (tetramethylene, methylpropylene), or the like.

L is independently a C₁-C₄ alkylene group such as methylene, ethylene, propylene or butylene, and the number of carbon atoms may be single or mixed. k is an integer of 1 to 20, preferably an integer of 1 to 10. R" is a C₁-C₄ alkyl group such as methyl, ethyl, propyl or butyl, or a phenyl group. Inter alia, methyl is preferred. f' is 1 or 2.

Examples of the group having an oxyalkylene group include the following groups: 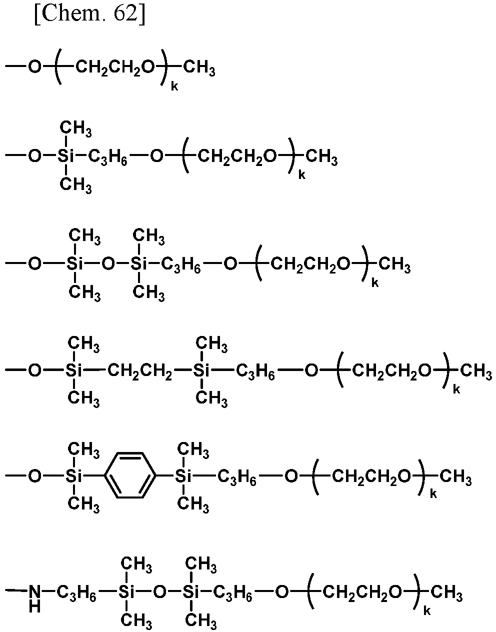 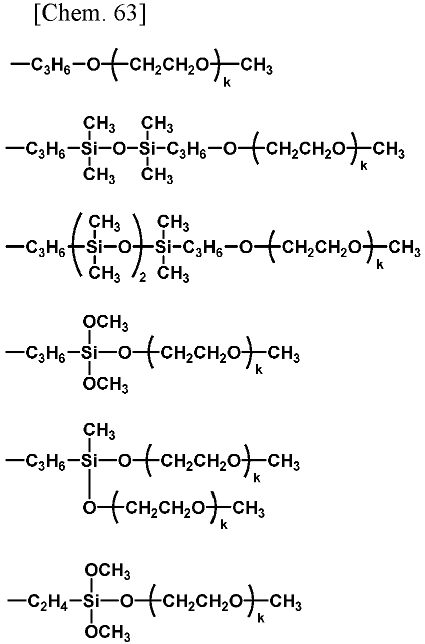 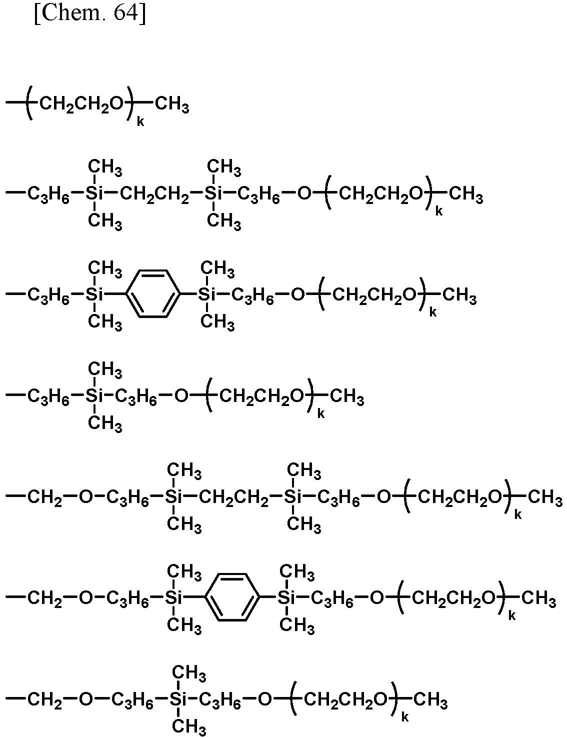 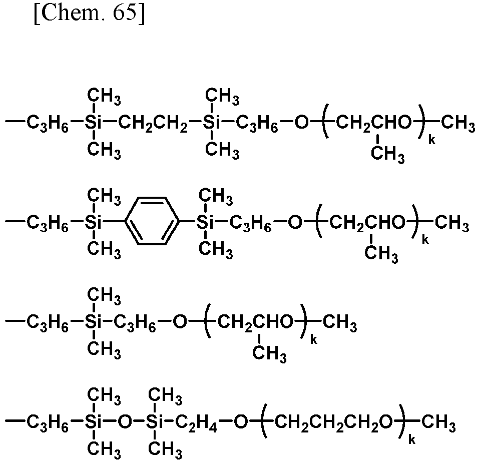 wherein, k is the same as described above.

In the formula (4), U is independently a single bond or a divalent organic group, and is a linking group connecting a V group and a Z group. Therefore, when γ is 0 (that is, the V group does not exist) and/or the Z group is a single bond, U is preferably a single bond. Specifically, the divalent organic group is preferably a group selected from the group consisting of a C₁-C₁₀ alkylene group, an alkylene group containing a C₆-C₈ arylene group, a divalent group having alkylene groups bonded via a diorganosilylene group, a silalkylene structure, or a silarylene structure, a divalent group having a C₁-C₁₀ alkylene group bonded to a bond of a linear organopolysiloxane residue of 2 to 10 silicon atoms or a branched or cyclic organopolysiloxane residue of 3 to 10 silicon atoms, and the divalent organic group may contain an oxygen atom or a sulfur atom.

Here, as the group bonded to a silicon atom of the diorganosilylene group, the silalkylene structure, the silarylene structure, the organopolysiloxane residue, and the like, a C₁-C₈, preferably C₁-C₄ alkyl group such as methyl, ethyl, propyl or butyl, or a phenyl group is preferable. Also, the alkylene group in the silalkylene structure is preferably a C₂-C₆, preferably C₂-C₄ alkylene group such as ethylene, propylene (trimethylene, methylethylene), butylene (tetramethylene, methylpropylene), or the like.

Examples of such U include the following groups in addition to a single bond. In the following structures, a left bond is bonded to V, and a right bond is bonded to Z. 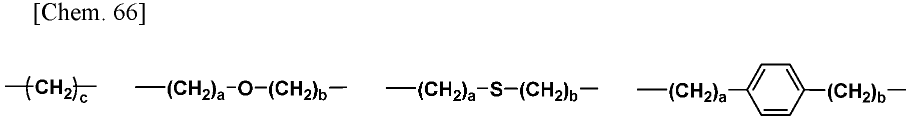 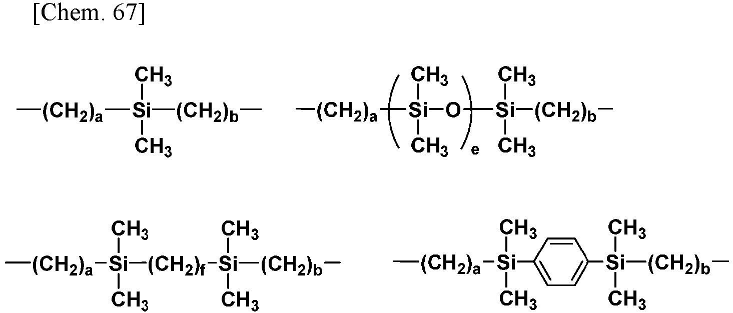 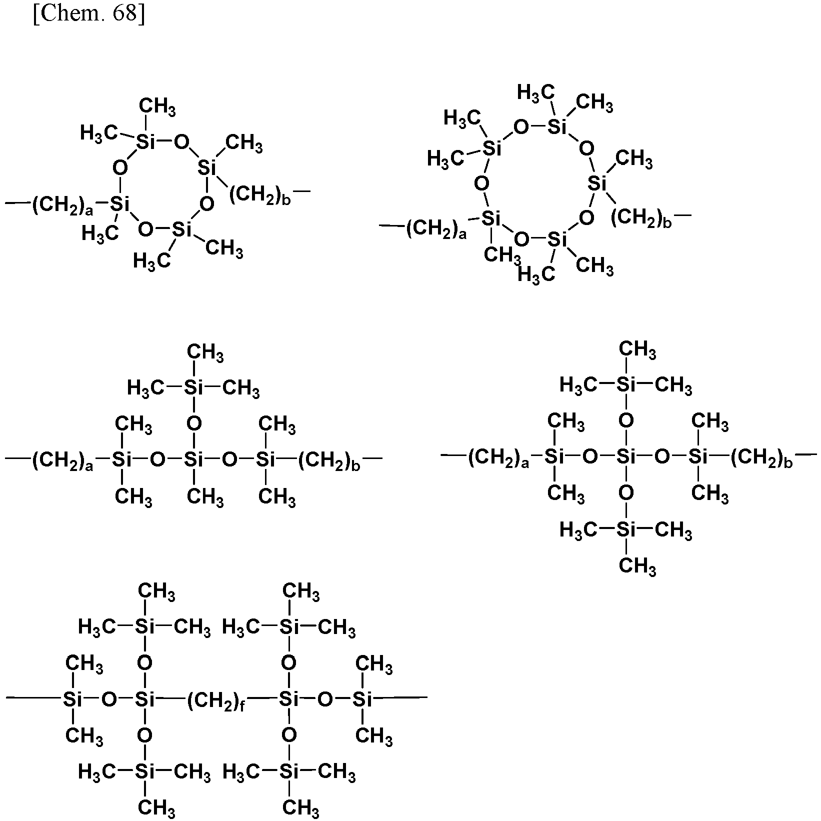 wherein f is an integer of 2 to 4, a and b are each an integer of 1 to 4, c is an integer of 1 to 10, and e is an integer of 1 to 9.

In the formula (4), Z is independently a single bond, or a carbon atom, a silicon atom, a nitrogen atom, or a tri- to octavalent organic group, and is preferably a single bond, a carbon atom, a silicon atom, a nitrogen atom, -C(O-)=, a tri- to octavalent organic group such as a tri- to hexavalent linear organopolysiloxane residue of 2 to 10 silicon atoms, particularly 2 to 8 silicon atoms, a tri- to hexavalent branched or cyclic organopolysiloxane residue of 3 to 10 silicon atoms, particularly 3 to 8 silicon atoms, a trivalent isocyanuric group, or a trivalent triazine ring-containing group. In addition, the organopolysiloxane residue may contain a silalkylene structure in which two silicon atoms are bonded by an alkylene group, that is, Si-(CH₂)ₓ-Si (wherein x is an integer of 2 to 6).

The organopolysiloxane residue preferably has a C₁-C₈, preferably C₁-C₄ alkyl group such as methyl, ethyl, propyl or butyl, or a phenyl group.

Examples of such Z include those shown below in addition to a single bond. In the following structures, a left bond is bonded to U (or B or Rf), and the other bonds are bonded to Y.

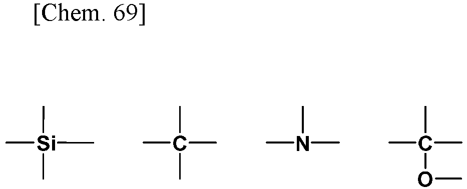

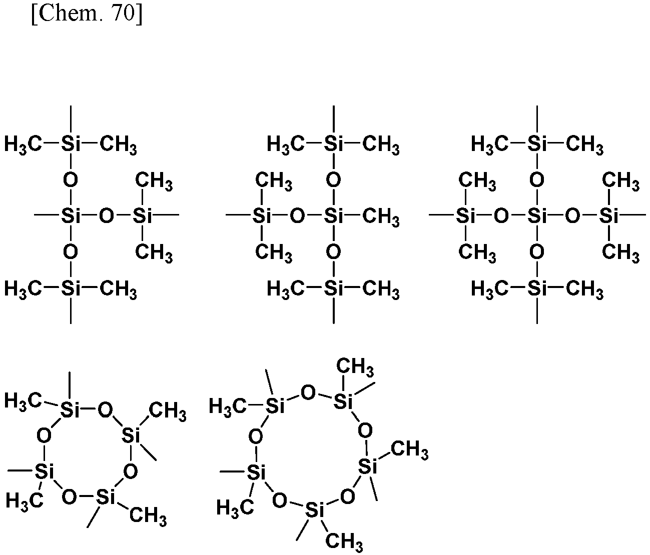

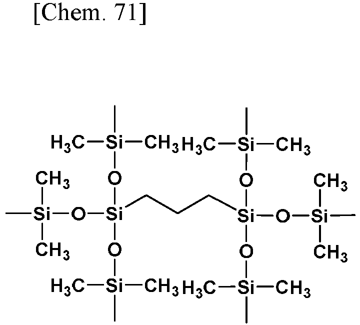

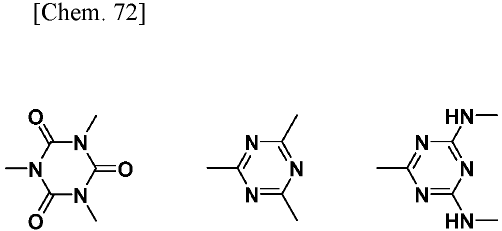

In the formula (4), Y is preferably a C₁-C₂₀ divalent hydrocarbon group, which may independently have at least one selected from an oxygen atom, a sulfur atom, a silicon atom, and a siloxane bond, and is a linking group connecting a Z group (or a V group, a B group, or a Rf group) and a Si group. Specifically, the divalent hydrocarbon group is preferably a group selected from the group consisting of a C₁-C₁₀ alkylene group which may contain an oxygen atom or a sulfur atom, an alkylene group containing a C₆-C₈ arylene group, a divalent group having alkylene groups or an alkylene group and an arylene group bonded via a diorganosilylene group, a silalkylene structure, or a silarylene structure, and a divalent group having a C1-C10 alkylene group bonded to a bond of a linear organopolysiloxane residue of 2 to 10 silicon atoms or a branched or cyclic organopolysiloxane residue of 3 to 10 silicon atoms.

Here, as the group bonded to a silicon atom of the diorganosilylene group, the silalkylene structure, the silarylene structure, the organopolysiloxane residue, and the like, a C₁-C₈, preferably C₁-C₄ alkyl group such as methyl, ethyl, propyl or butyl, or a phenyl group is preferable. Also, the alkylene group in the silalkylene structure is preferably a C₂-C₆, preferably C₂-C₄ alkylene group such as ethylene, propylene (trimethylene, methylethylene), butylene (tetramethylene, methylpropylene), or the like.

Examples of such Y include the following groups. In the following structure, a left bond is bonded to Z (or V, B or Rf), and a right bond is bonded to Si. 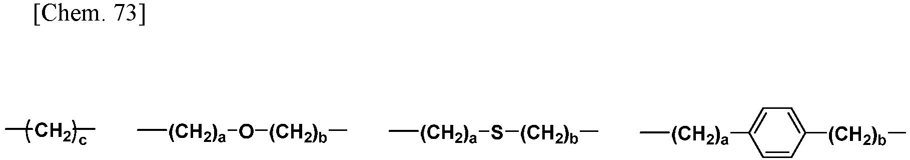 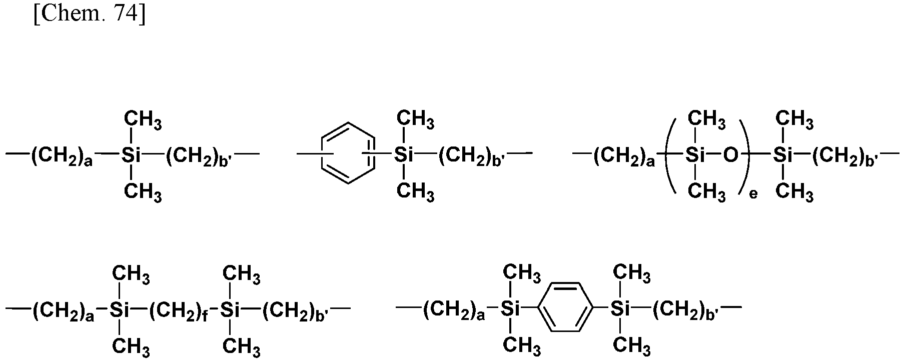 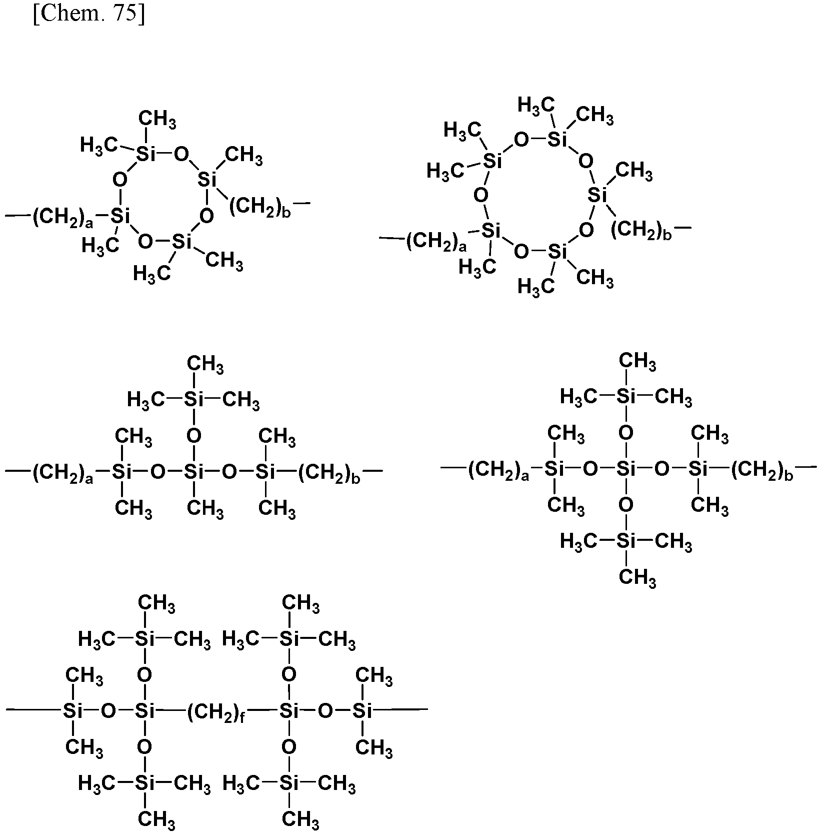 wherein f is an integer of 2 to 4, a and b are each an integer of 1 to 4, b' and c are each an integer of 1 to 10, and e is an integer of 1 to 9.

In the formula (4), R is independently a C₁-C₄ alkyl group such as methyl, ethyl, propyl or butyl, or a phenyl group. Inter alia, methyl is preferred.

Also, X is independently a hydroxy group or a hydrolyzable group, and examples of such X include a hydroxy group, C₁-C₁₀ alkoxy groups such as methoxy, ethoxy, propoxy, isopropoxy, and butoxy, C₂-C₁₀ alkoxyalkoxy groups such as methoxymethoxy and methoxyethoxy, C₁-C₁₀ acyloxy groups such as acetoxy, C₂-C₁₀ alkenyloxy groups such as isopropenoxy, and halogen groups such as chloro, bromo or iodo. Inter alia, methoxy, ethoxy, isopropenoxy and chloro are preferred.

In the formula (4), β is an integer of 1 to 6, preferably 1 or 2, γ is 0 or 1, and δ is an integer of 0 to 6, preferably 0, 1, or 2. When γ is 0, β is 1, and when γ is 1, the sum of β and δ is an integer of 2 to 7 (that is, the valence of V is -1).

Also, n is independently an integer of 1 to 3, preferably 2 or 3 for each bonded silicon atom, and m is independently an integer of 1 to 7, preferably an integer of 1 to 4, more preferably 1 or 3.

Examples of the structure of the fluoropolyether-containing polymer having a silanol group or a hydrolyzable silyl group represented by the formula (1) include the following structures. By changing the combination of Rf, Rf', and A of the formula (1) (B, V, R', U, Z, Y, R, X, β, γ, δ, m, and n of the formula (4)), fluoropolyether-containing polymers having several types of silanol groups or hydrolyzable silyl groups are obtained. 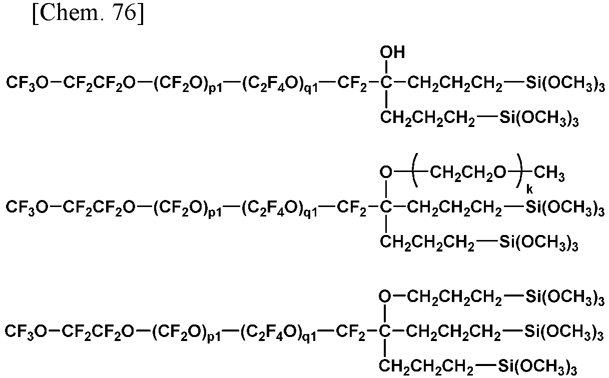 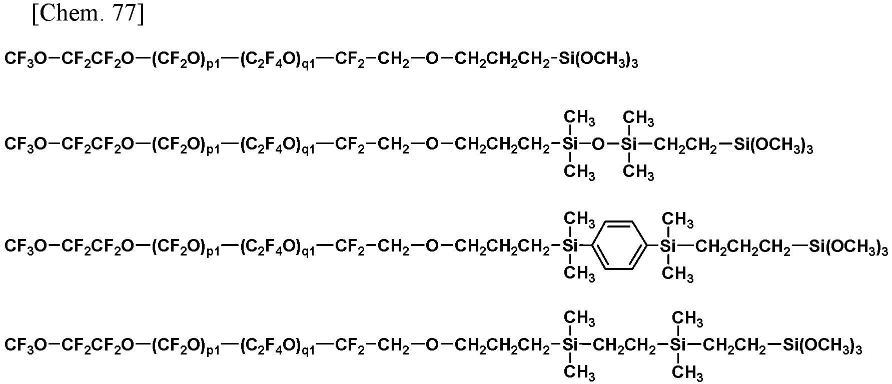 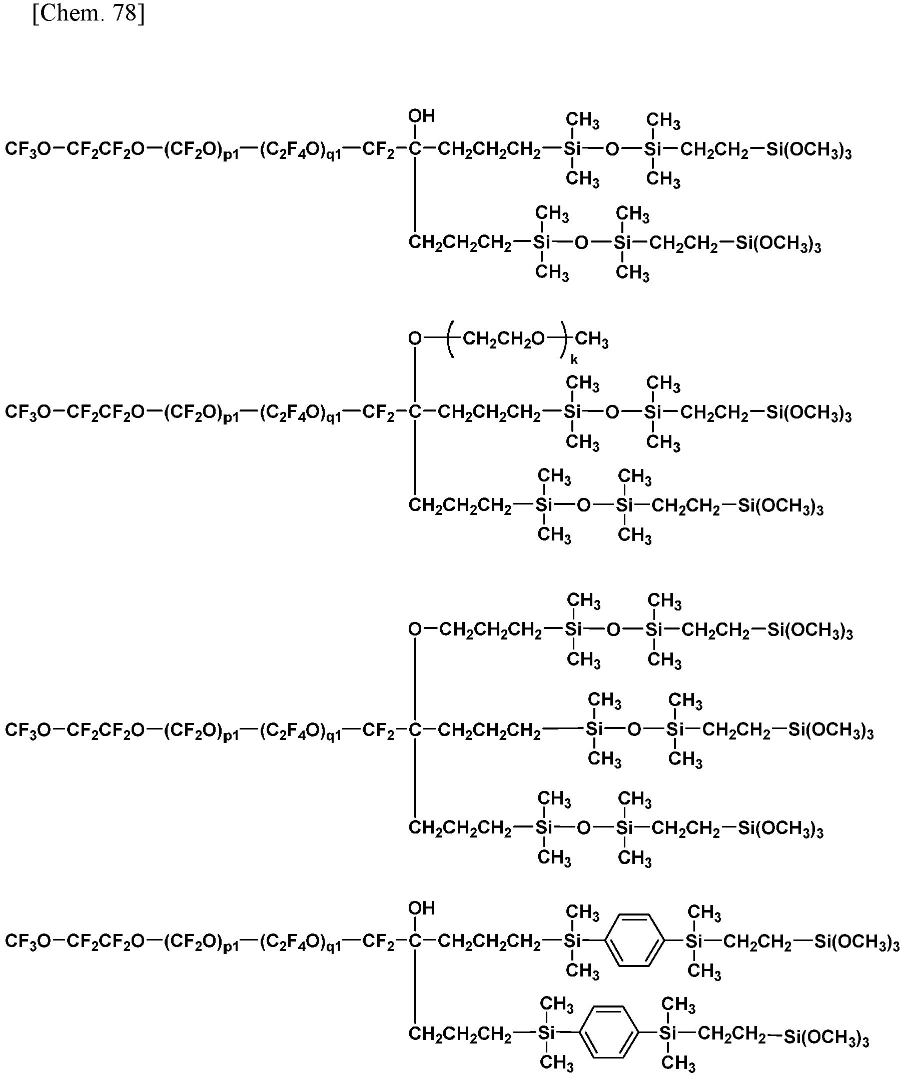 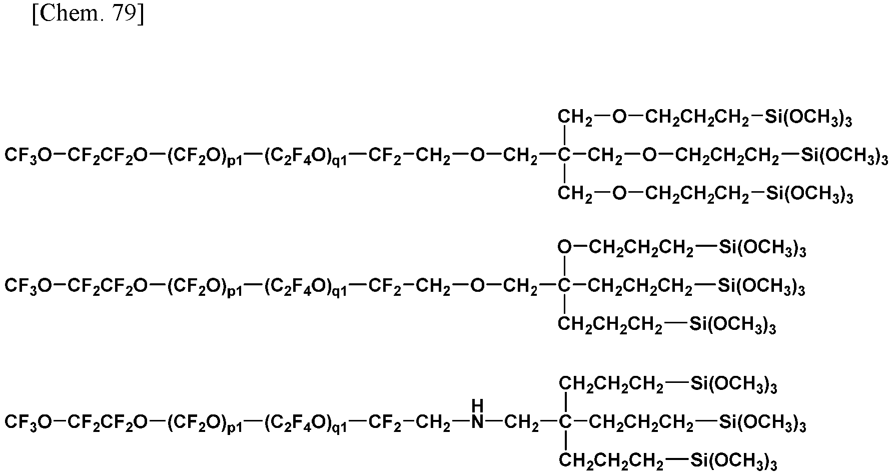 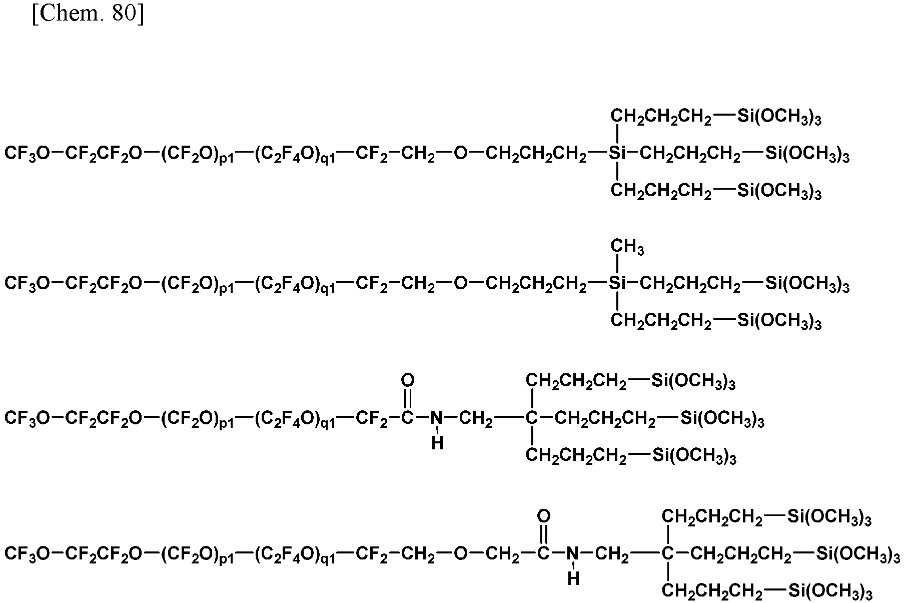 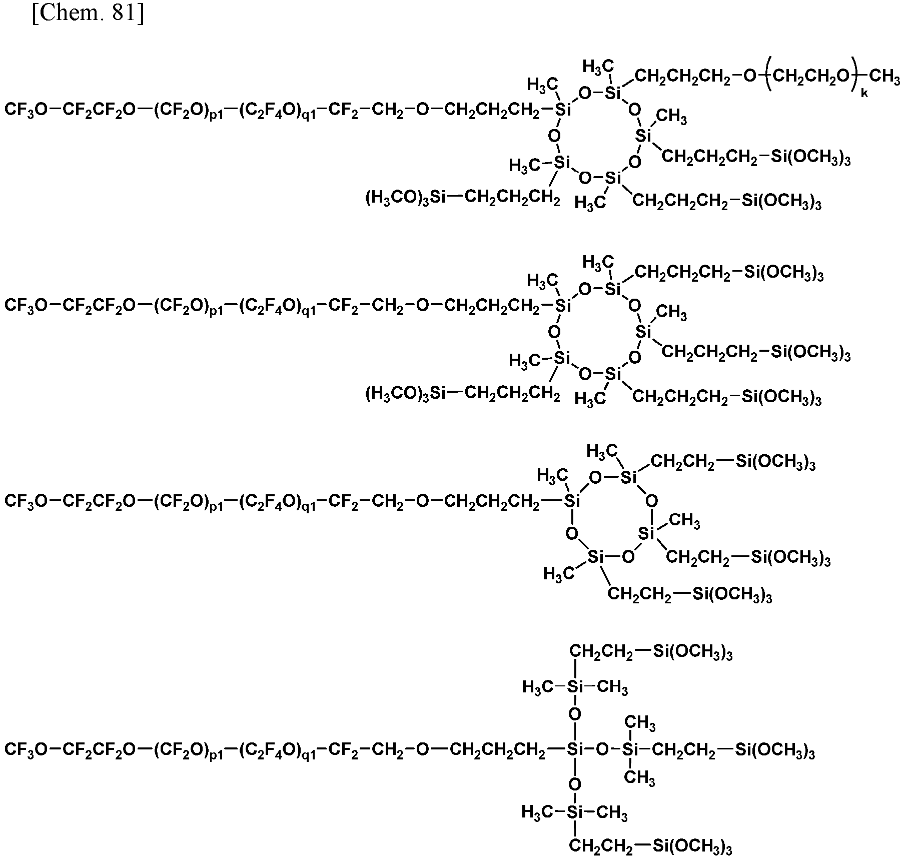 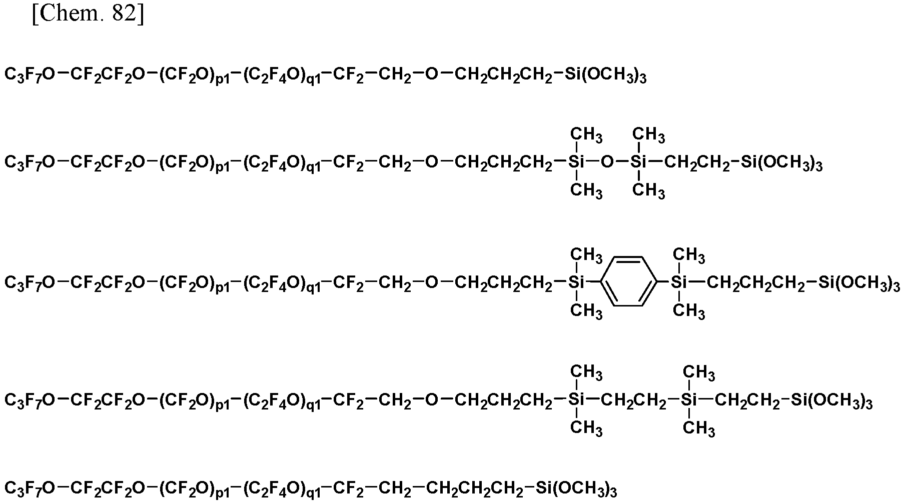 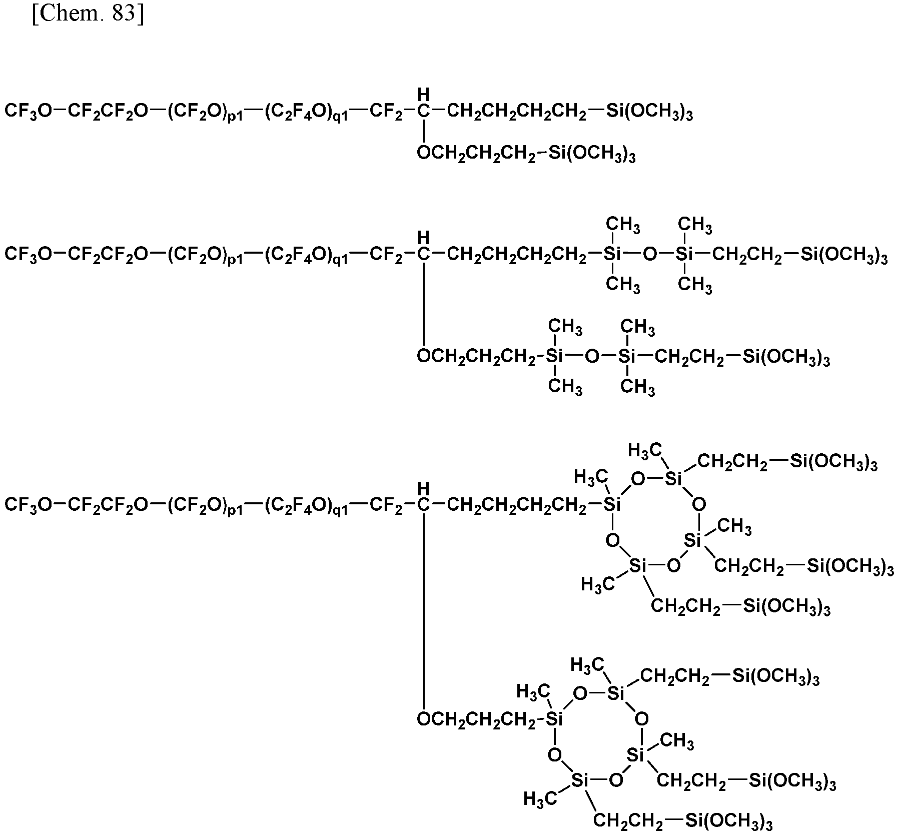 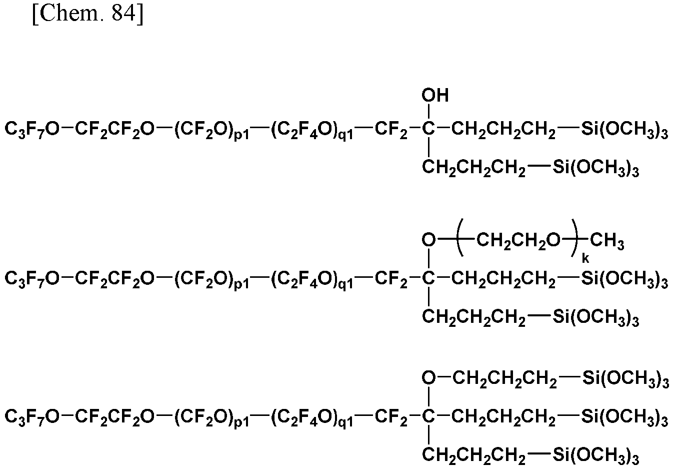 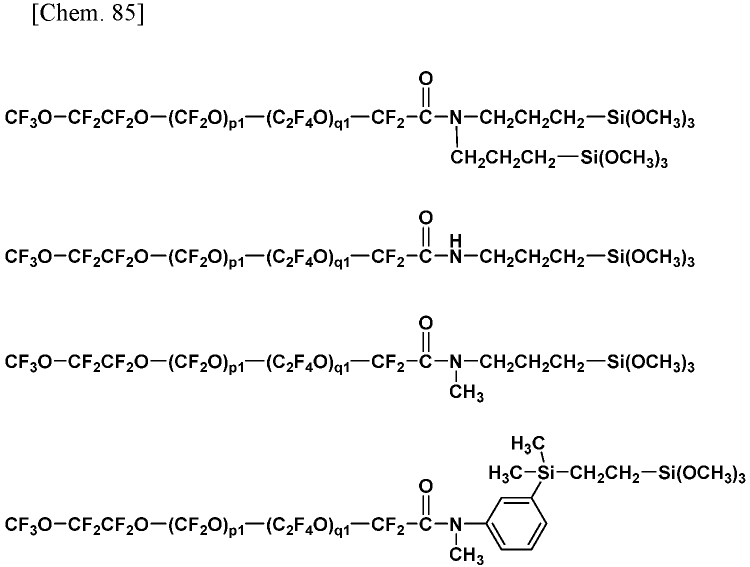 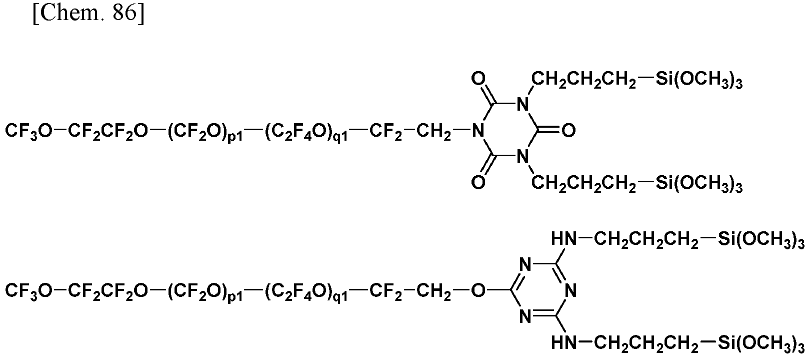 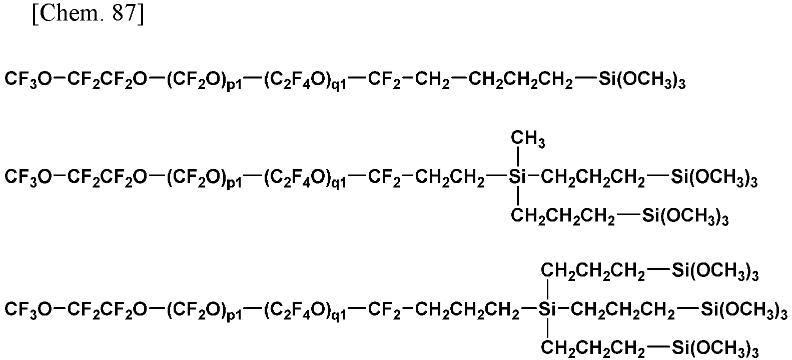 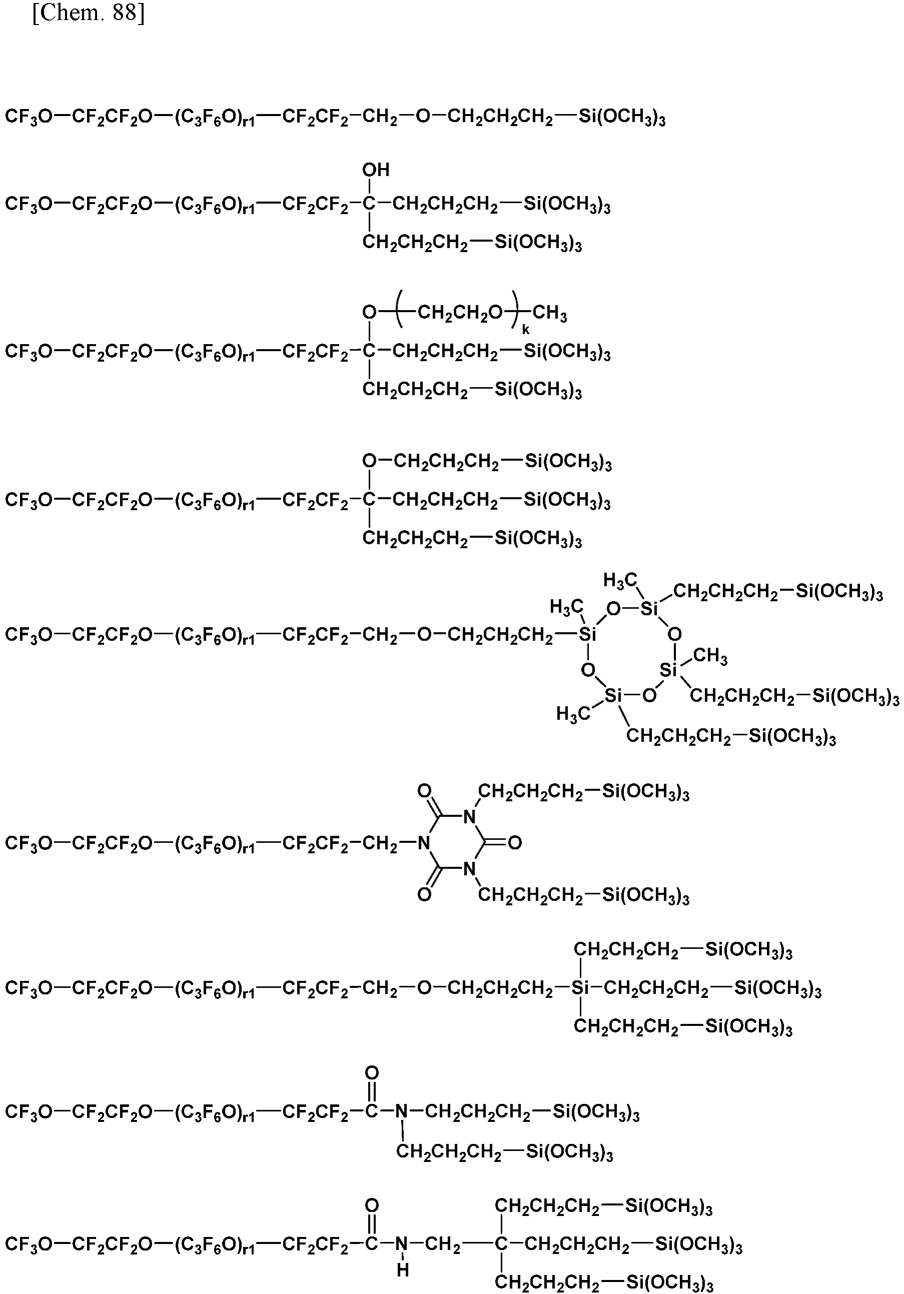 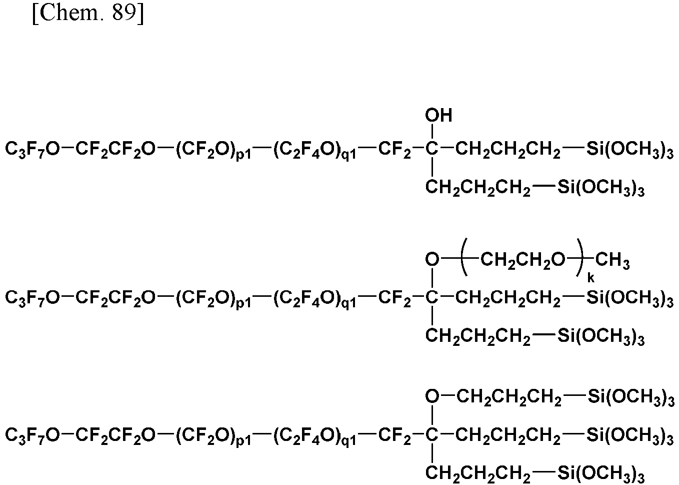 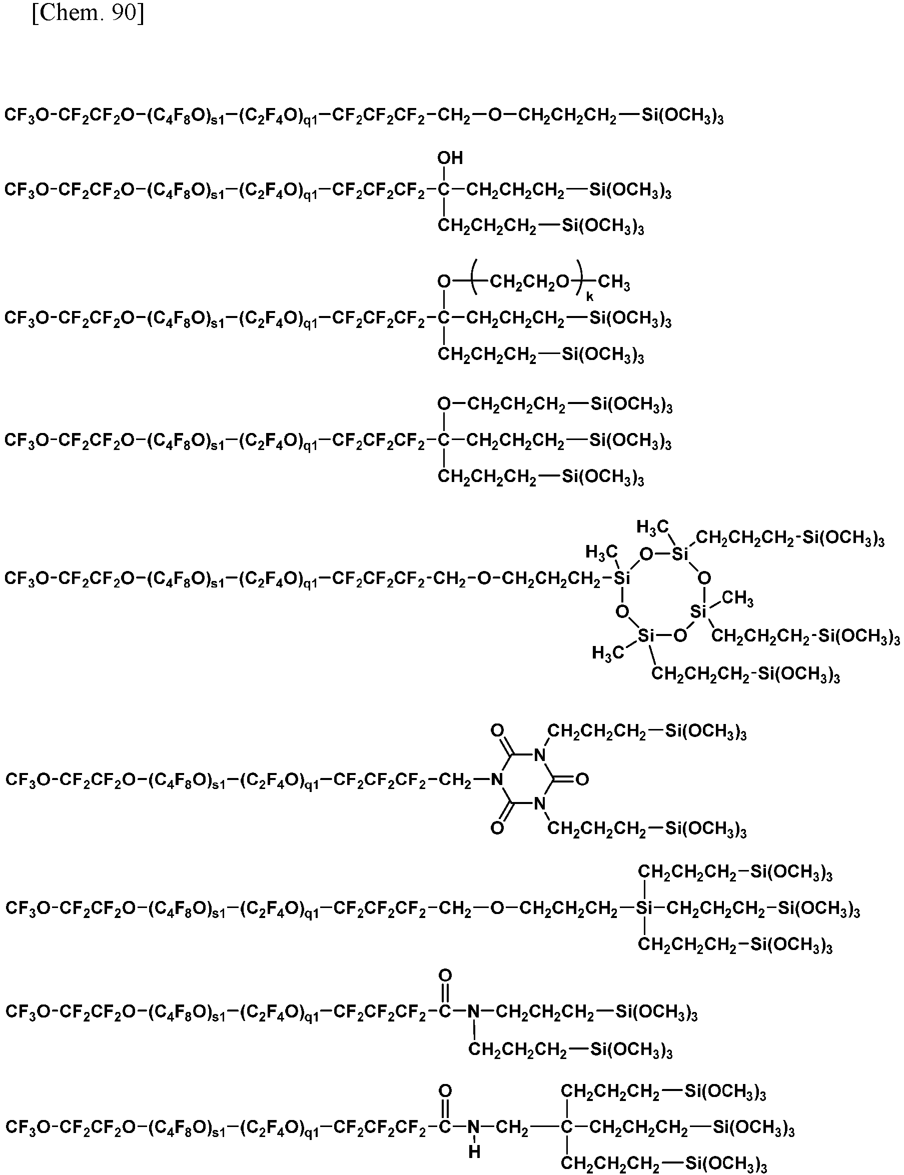 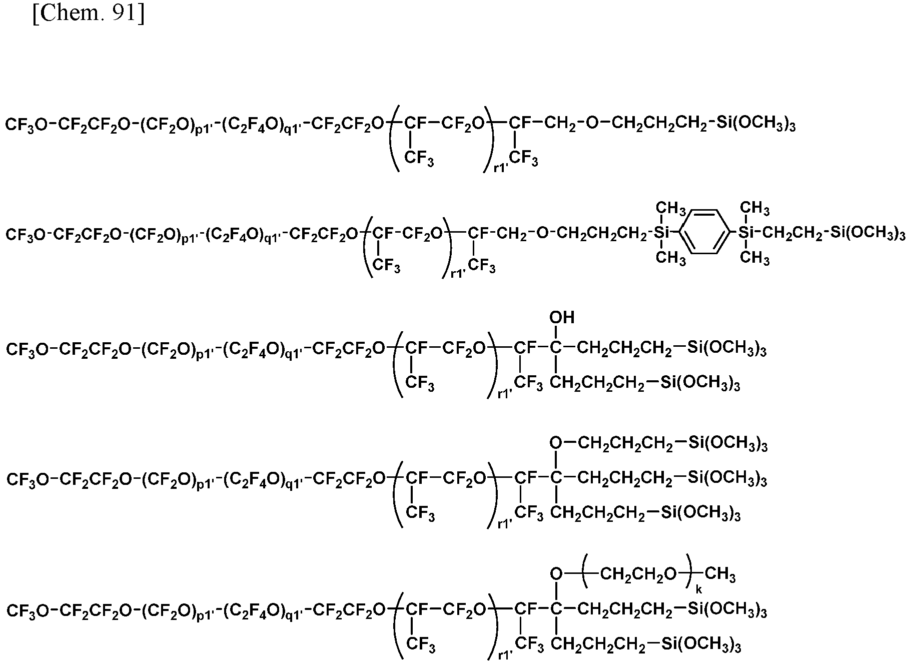 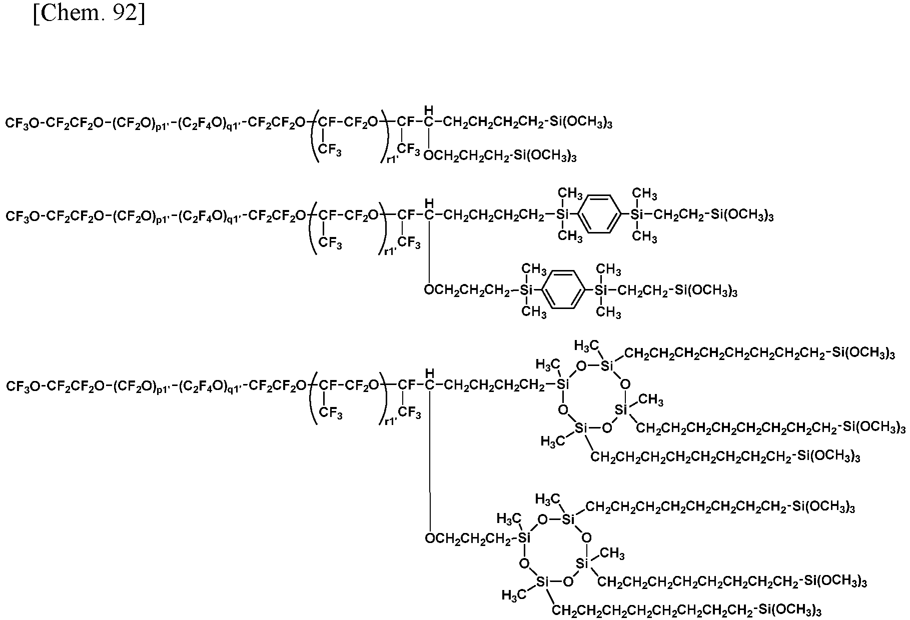 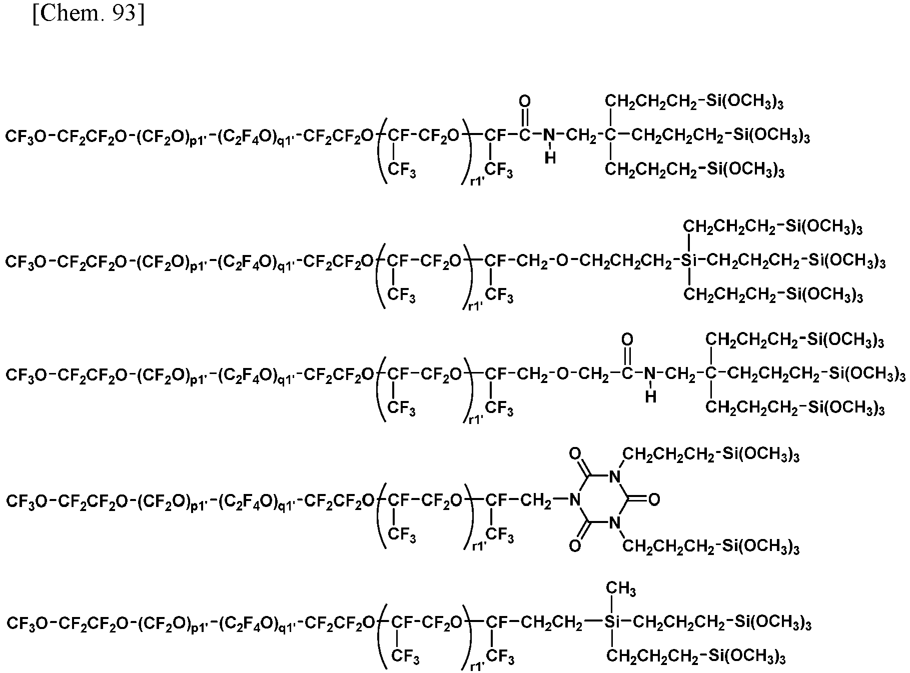 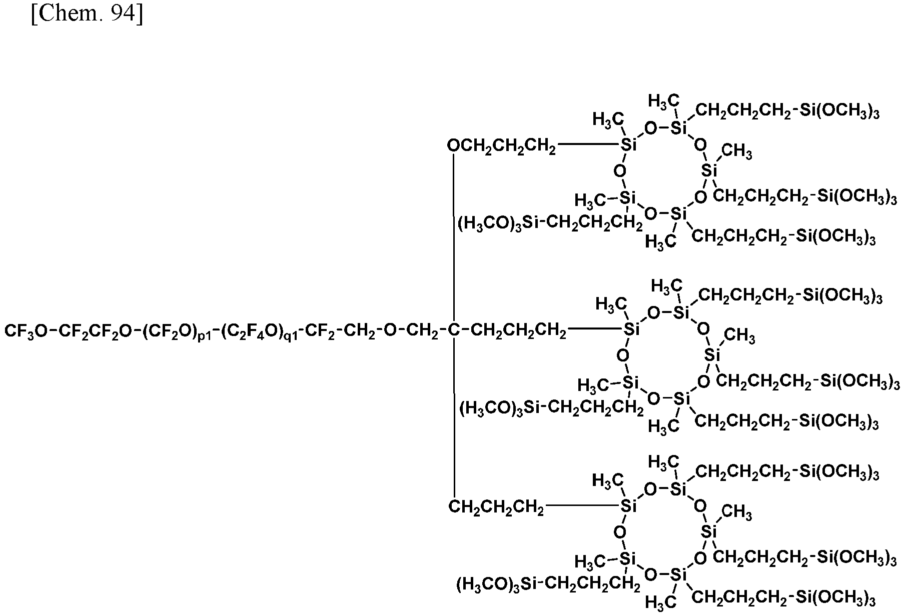 wherein p1, q1, r1, and s1 are each independently an integer of 1 or more, preferably each independently an integer of 1 to 199, more preferably each independently an integer of 2 to 100, provided that the sum of p1, q1, r1, and s1 in each formula is 10 to 200, p1', q1', and r1' are each independently an integer of 1 or more, preferably each independently an integer of 1 to 197, more preferably each independently an integer of 2 to 100, provided that the sum of p1', q1', and r1' in each formula is 9 to 199, individual repeat units shown in parentheses with p1, q1, r1, s1, p1', and q1' may be randomly bonded, and k is an integer of 1 to 20.

Examples of the structure of the fluoropolyether-containing polymer having a silanol group or a hydrolyzable silyl group represented by the formula (2) include the following structures. By changing the combination of Rf, Rf', and A of the formula (2) (B, V, R', U, Z, Y, R, X, β, γ, δ, m, and n of the formula (4)), fluoropolyether-containing polymers having several types of silanol groups or hydrolyzable silyl groups are obtained. 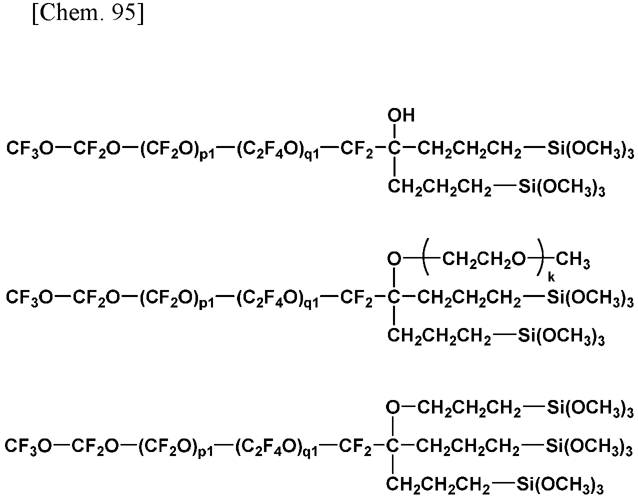 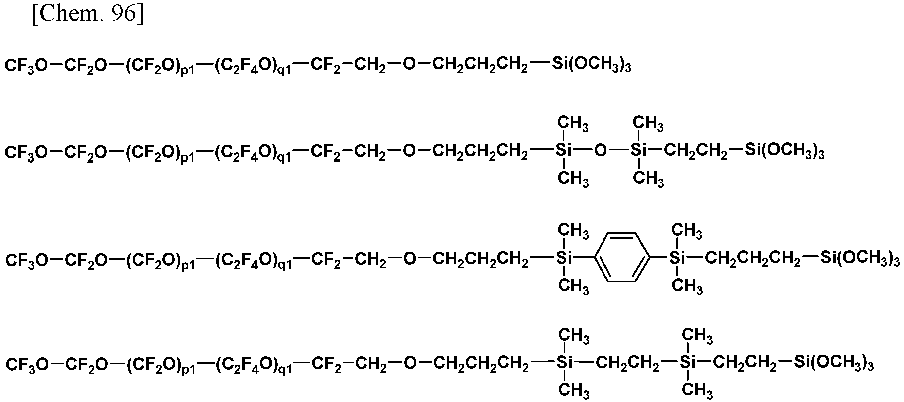 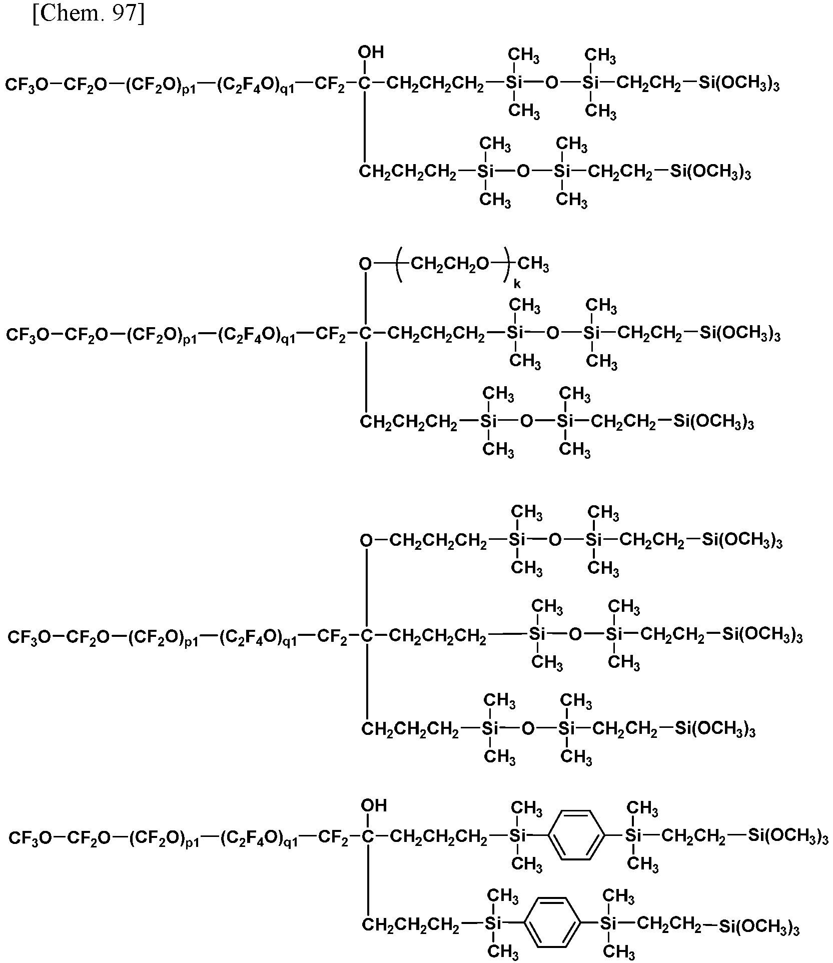 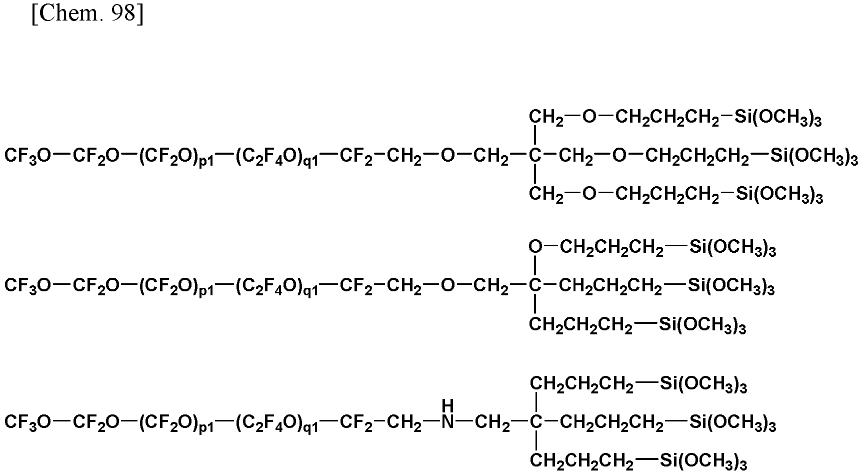 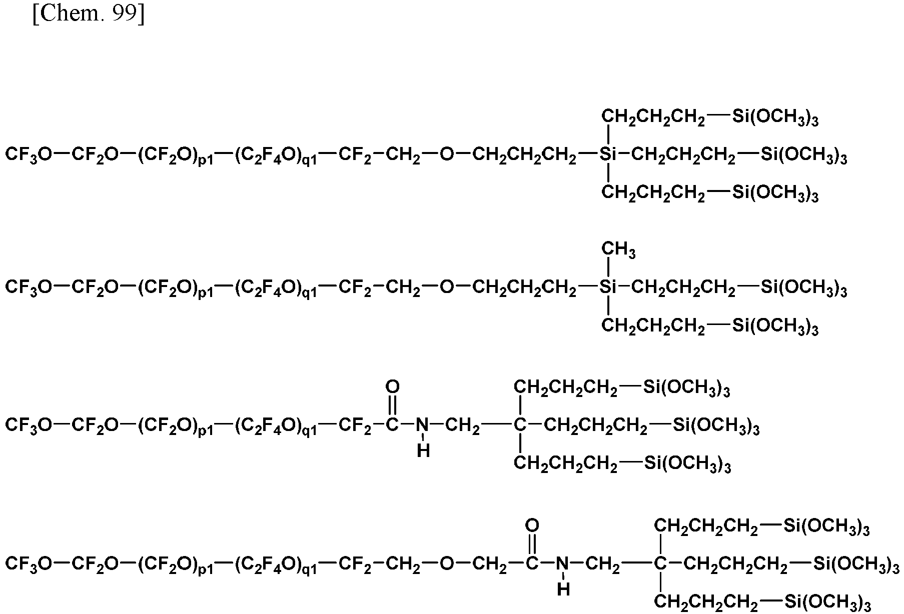 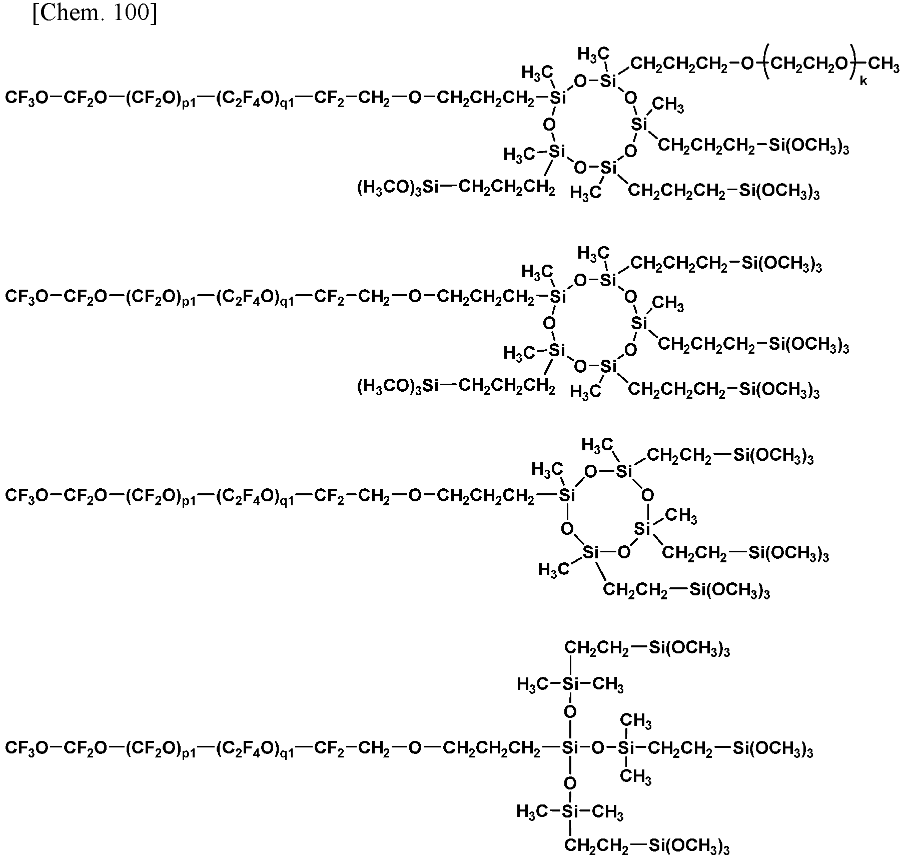 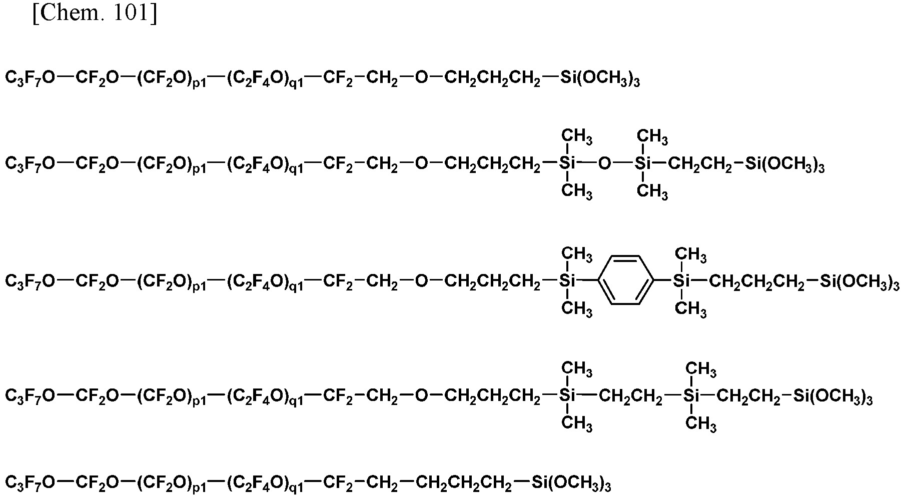 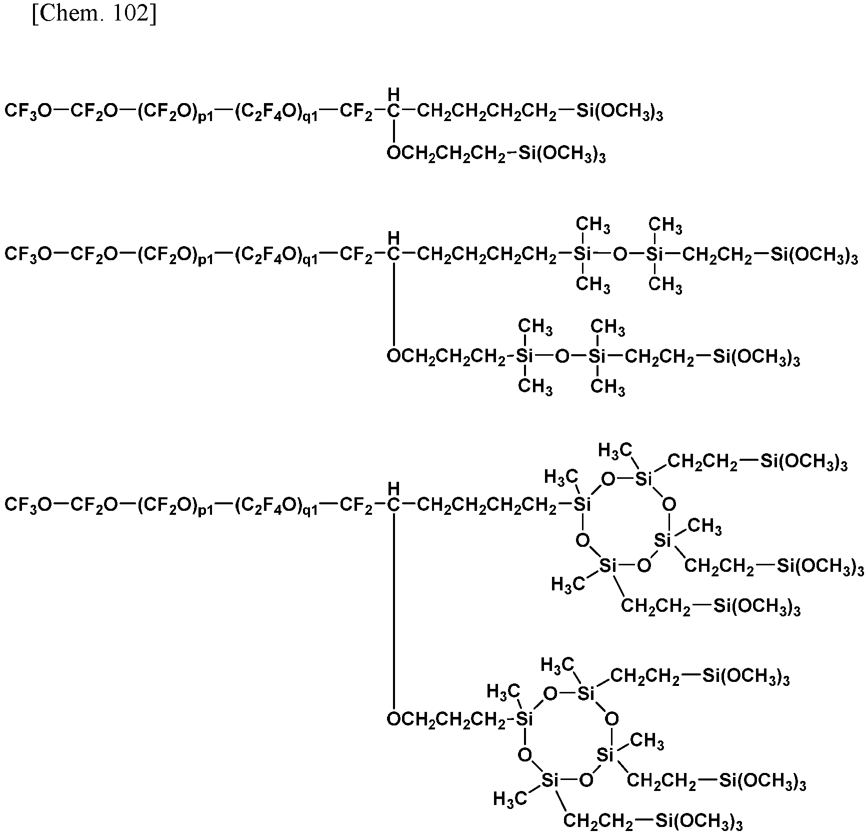 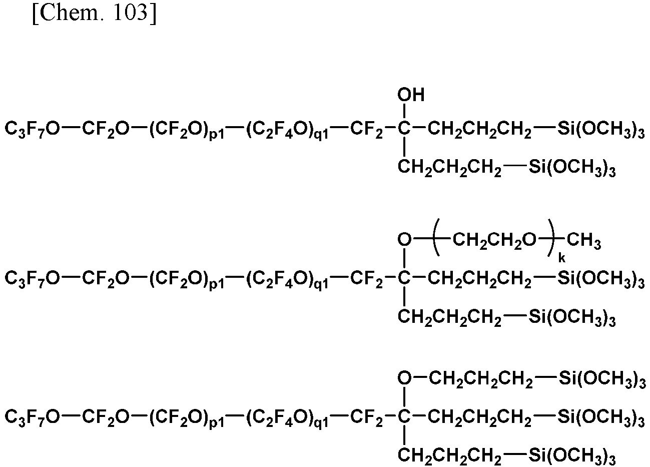 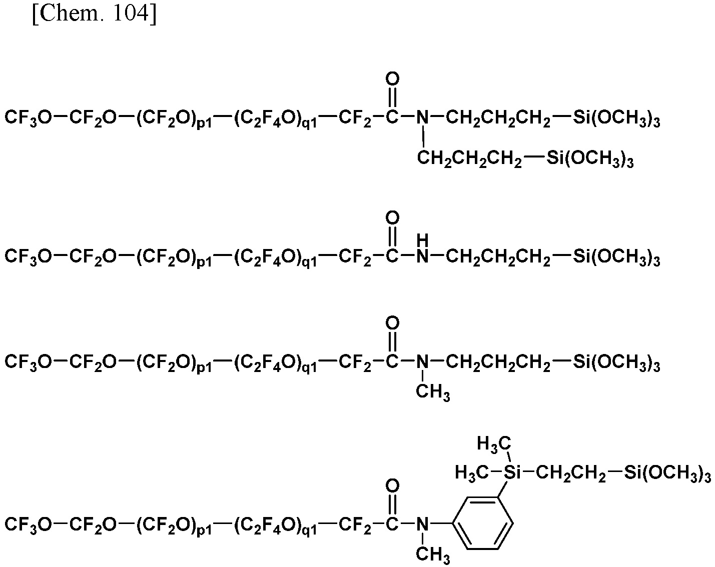 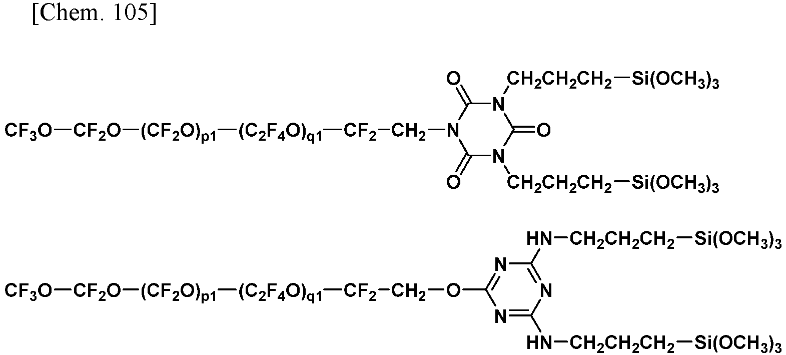 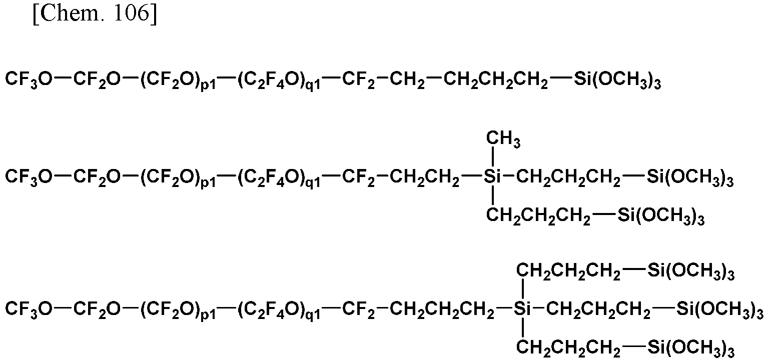 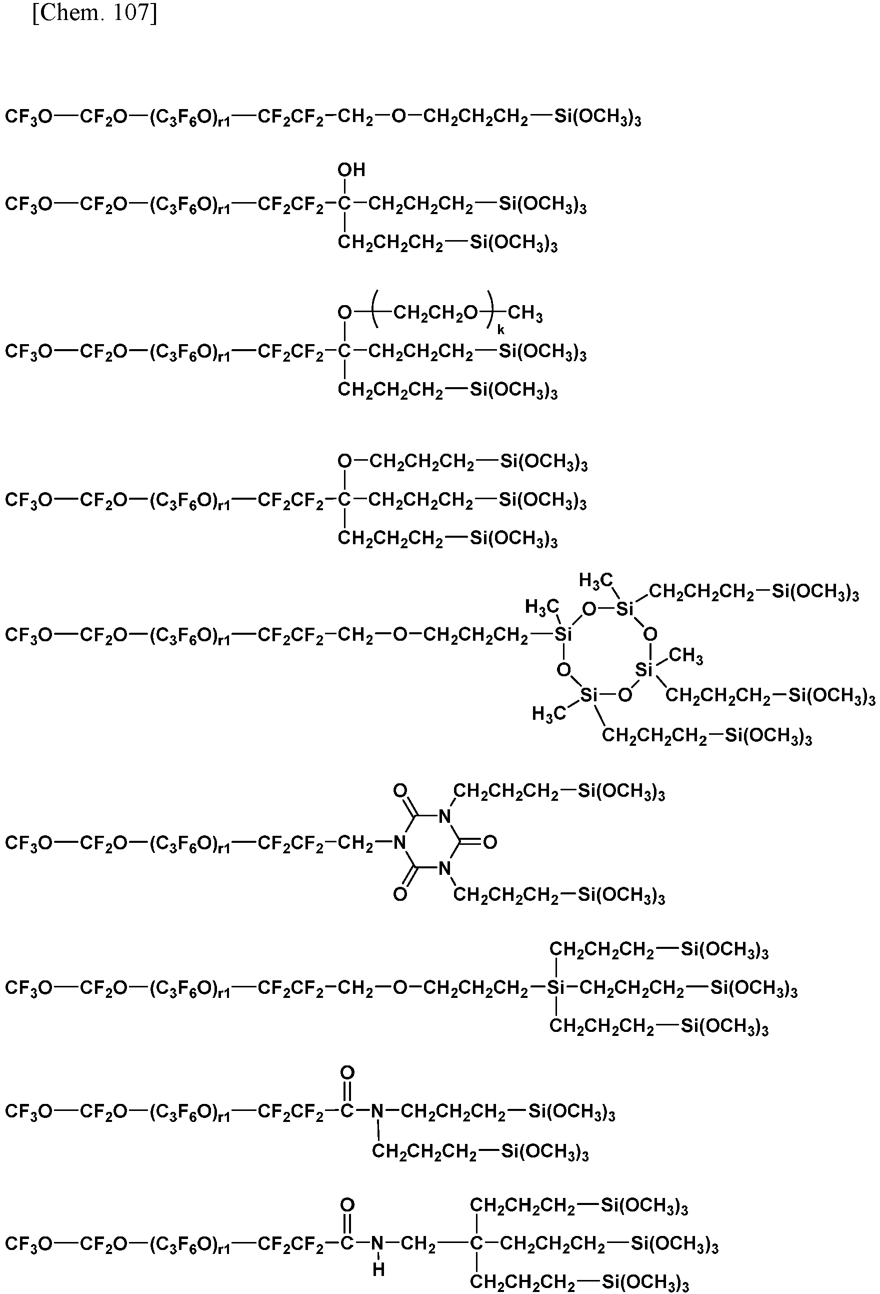 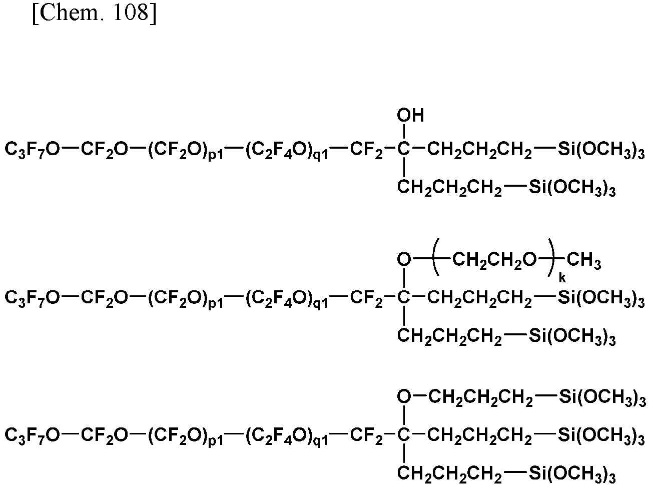 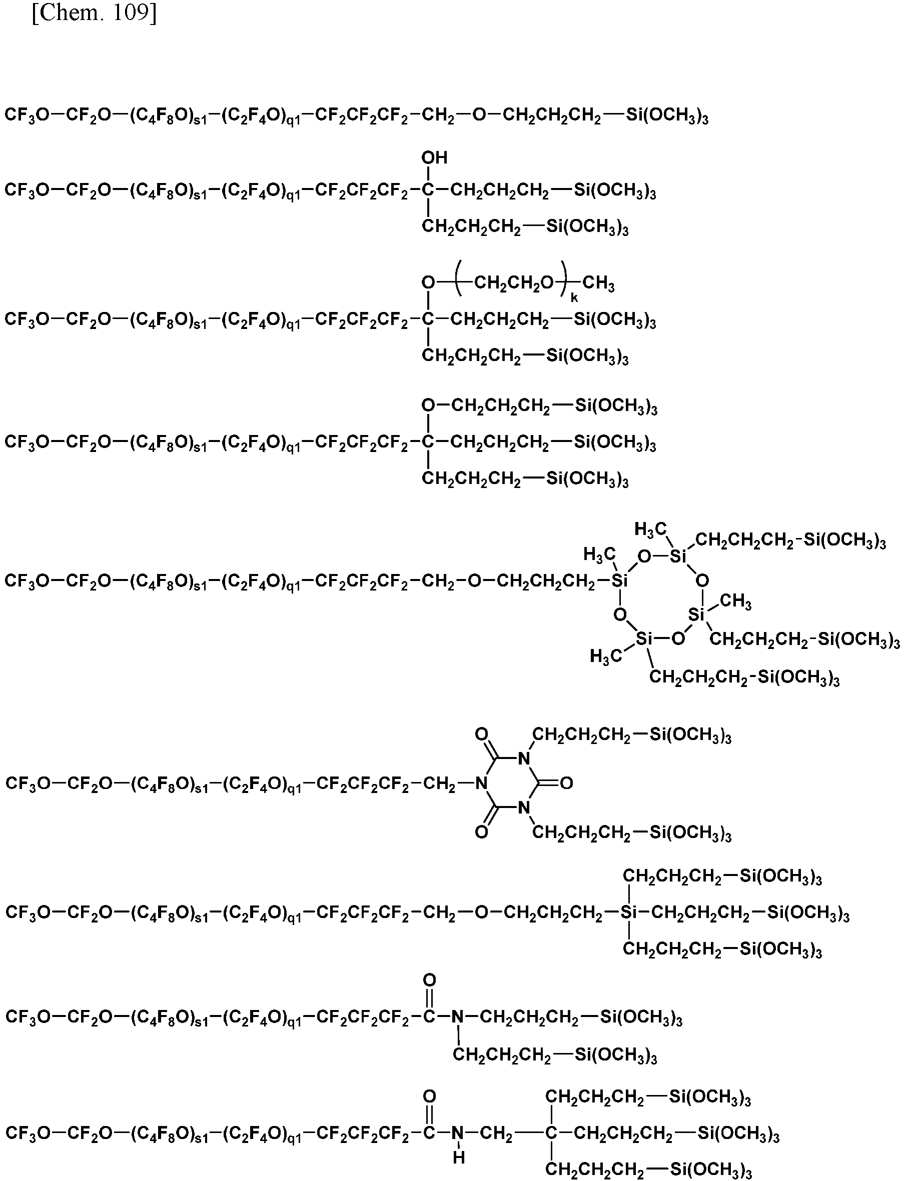 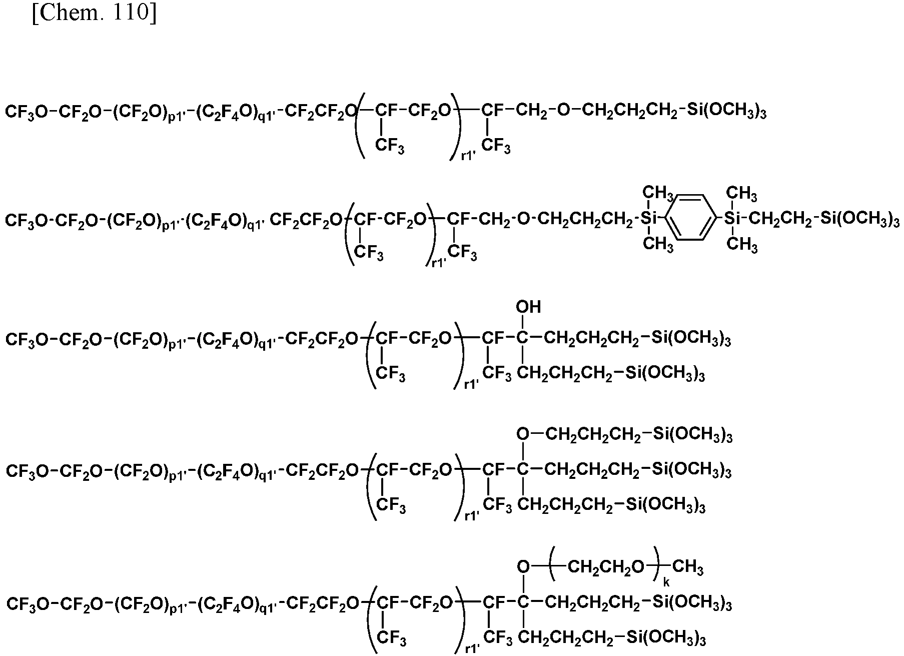 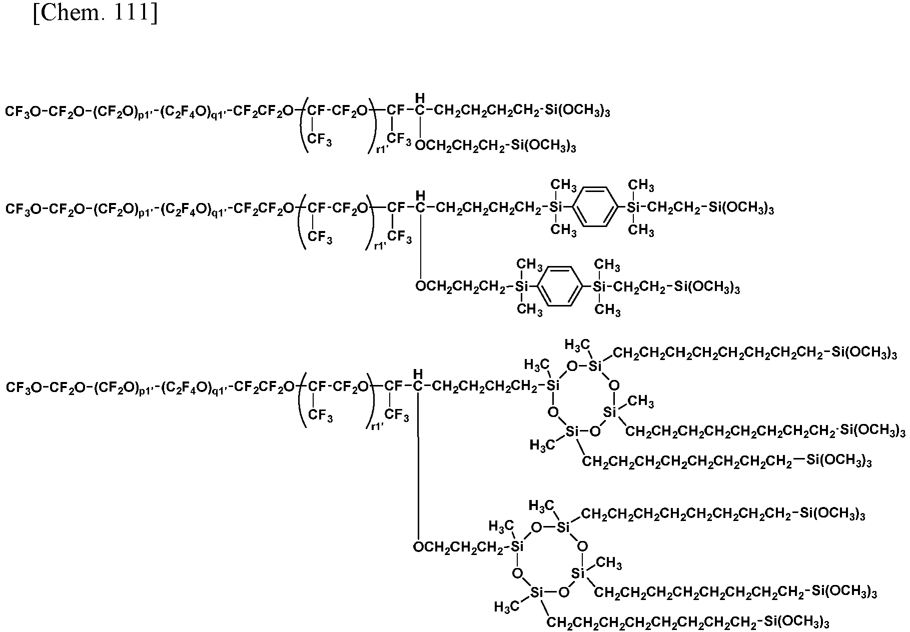 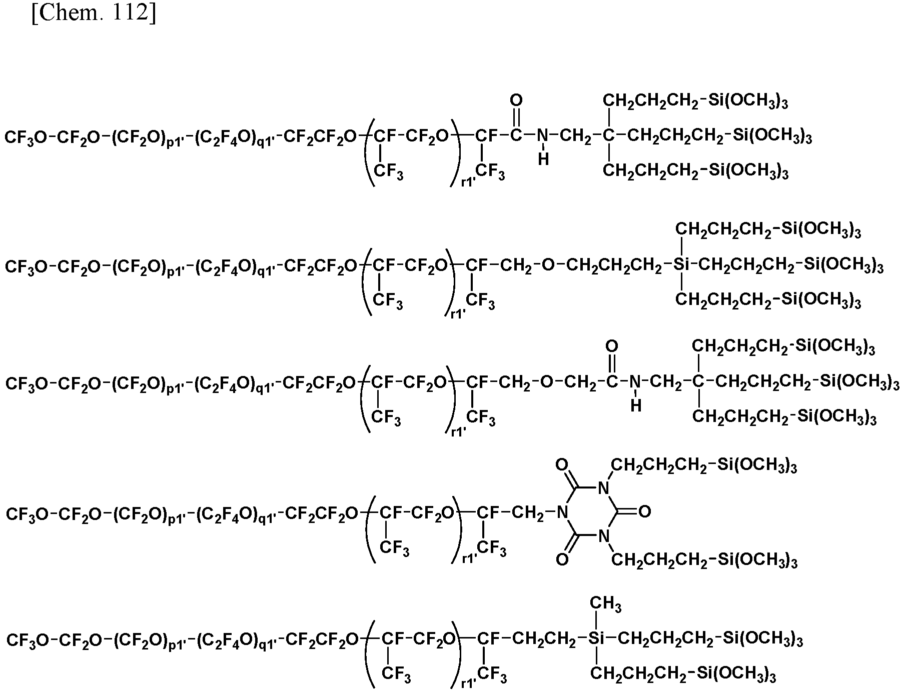 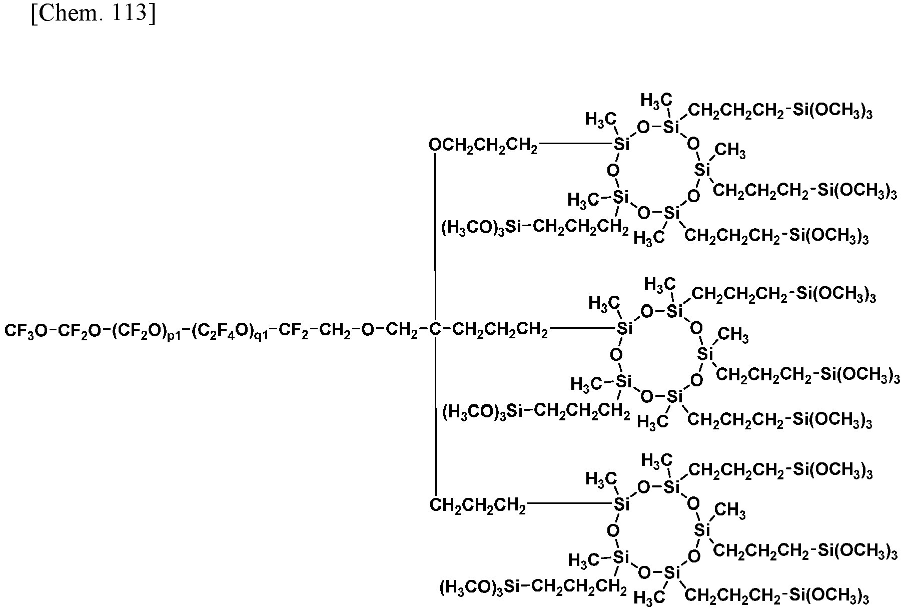 wherein p1, q1, r1, and s1 are each independently an integer of 1 or more, preferably each independently an integer of 1 to 199, more preferably each independently an integer of 2 to 100, provided that the sum of p1, q1, r1, and s1 in each formula is 10 to 200, p1', q1', and r1' are each independently an integer of 1 or more, preferably each independently an integer of 1 to 197, more preferably each independently an integer of 2 to 100, provided that the sum of p1', q1', and r1' in each formula is 9 to 199, individual repeat units shown in parentheses with p1, q1, r1, s1, p1', and q1' may be randomly bonded, and k is an integer of 1 to 20.

Examples of the method for preparing the fluoropolyether-containing polymer having a silanol group or a hydrolyzable silyl group represented by the formula (1) or (2) include the method shown below.

The fluoropolyether-containing polymer having one or more olefin sites at one end of the molecular chain is dissolved in a solvent, for example, a fluorine-based solvent such as 1,3-bis(trifluoromethyl)benzene. For example, an organosilicon compound having a SiH group and a silanol group (a hydroxy group bonded to a silicon atom) or a hydrolyzable silyl group (a silyl group having a halogen atom, an alkoxy group, or the like bonded thereto) in the molecule such as trichlorosilane or trialkoxysilane is mixed therewith. The mixture is aged in the presence of a hydrosilylation catalyst, for example, a toluene solution of chloroplatinic acid/vinyl siloxane complex, at a temperature of 40 to 120°C, preferably 60 to 100°C, more preferably about 80°C for a time of 1 to 72 hours, preferably 20 to 36 hours, more preferably about 24 hours. When a SiH group-containing halogenated (organic) silicon compound such as trichlorosilane is used as the organosilicon compound having a SiH group and a silanol group or a hydrolyzable silyl group in the molecule, the substituent (halogen atom) on the silyl group may be then converted to, for example, an alkoxy group such as a methoxy group as another hydrolyzable group.

Here, in the preparation of the fluoropolyether-containing polymer having a silanol group or a hydrolyzable silyl group represented by the formula (1) or (2), the fluoropolyether-containing polymer having one or more olefin sites at one end of the molecular chain represented by the following general formula (8) can be exemplified as the fluoropolyether-containing polymer having one or more olefin sites at one end of the molecular chain used for preparing the fluoropolyether-containing polymer having a silanol group or a hydrolyzable silyl group represented by the formula (1), and the fluoropolyether-containing polymer having one or more olefin sites at one end of the molecular chain represented by the following general formula (9) can be exemplified as the fluoropolyether-containing polymer having one or more olefin sites at one end of the molecular chain used for preparing the fluoropolyether-containing polymer having a silanol group or a hydrolyzable silyl group represented by the formula (2). 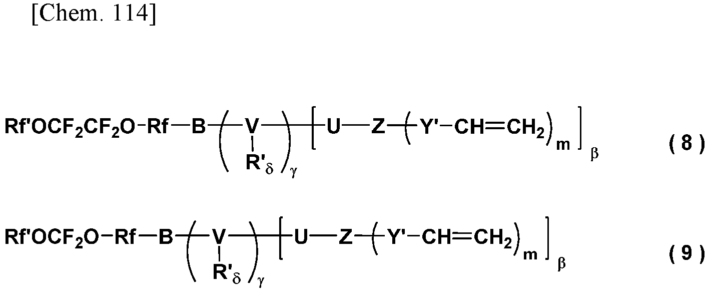 wherein Rf, Rf', B, V, R', U, Z, β, γ, δ, and m are the same as described above, and Y' is independently a single bond or a divalent hydrocarbon group which may contain at least one selected from an oxygen atom, a sulfur atom, a silicon atom, and a siloxane bond.

In the formulae (8) and (9), Y' is independently a single bond, or preferably a C₁-C₁₈ divalent hydrocarbon group which may contain at least one selected from an oxygen atom, a sulfur atom, a silicon atom, and a siloxane bond, and specifically, the divalent hydrocarbon group is preferably a group selected from the group consisting of a C₁-C₈ alkylene group which may contain an oxygen atom or a sulfur atom, an alkylene group containing a C₆-C₈ arylene group, a divalent group having an alkylene group or an arylene group bonded with a diorganosilylene group, a silalkylene structure, or a silarylene structure, and a divalent group having a C₁-C₈ alkylene group bonded to a bond of a linear organopolysiloxane residue of 2 to 10 silicon atoms or a divalent group having a C₁-C₈ alkylene group bonded to a bond of a branched or cyclic organopolysiloxane residue of 3 to 10 silicon atoms. Y' is preferably a C₁-C₆ straight alkylene group.

Examples of the fluoropolyether-containing polymer having one or more olefin sites at one end of the molecular chain represented by the formula (8) include the following. 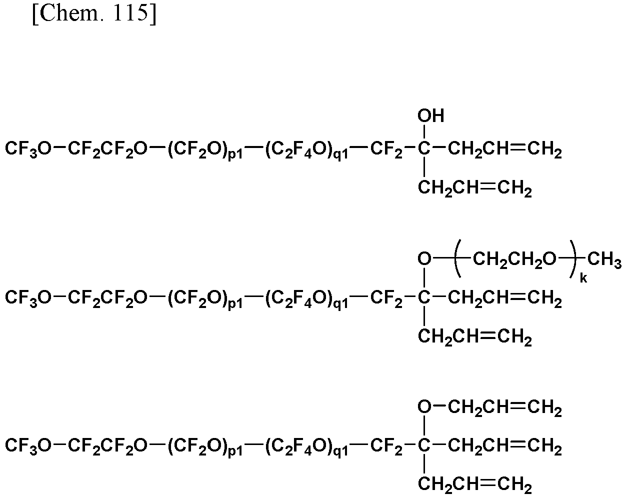 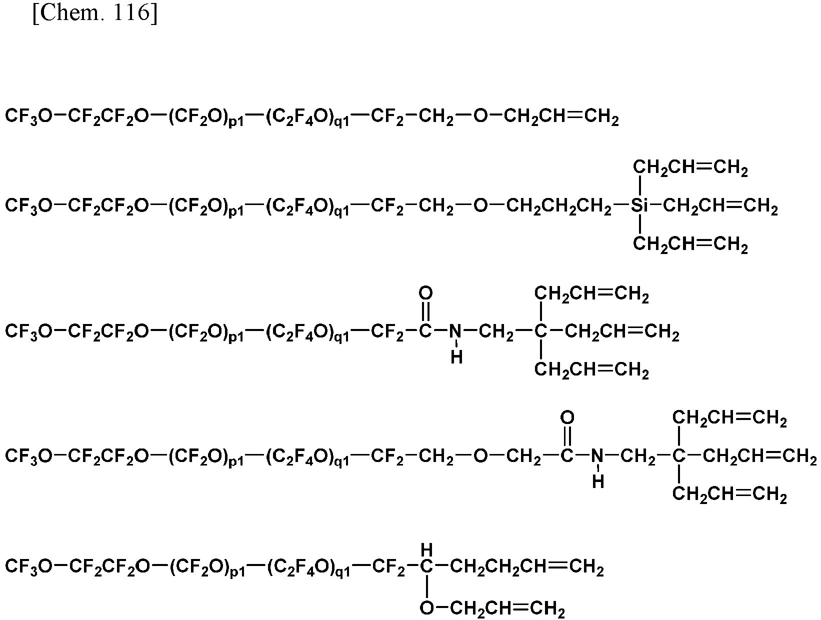 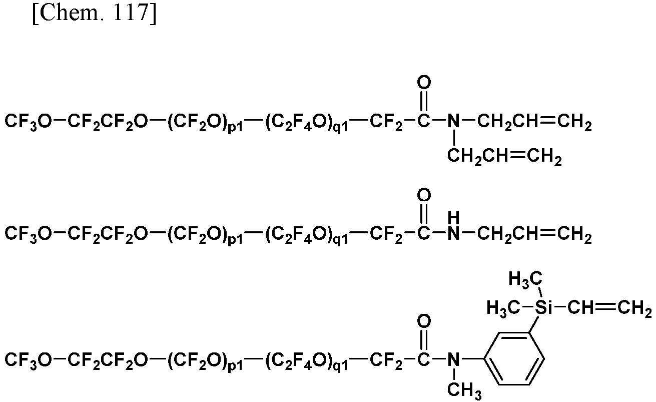 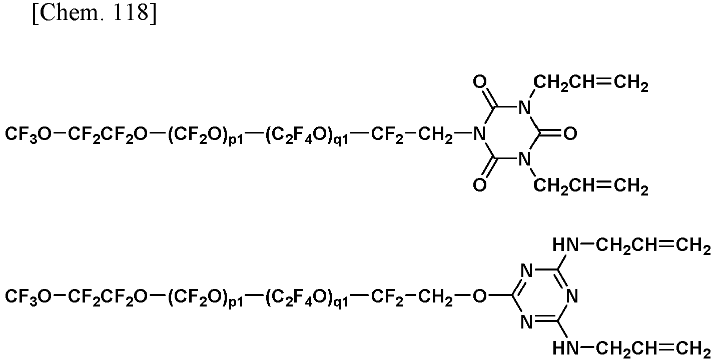 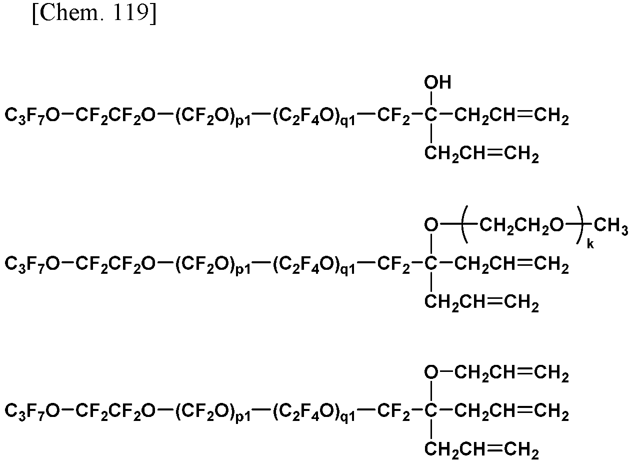 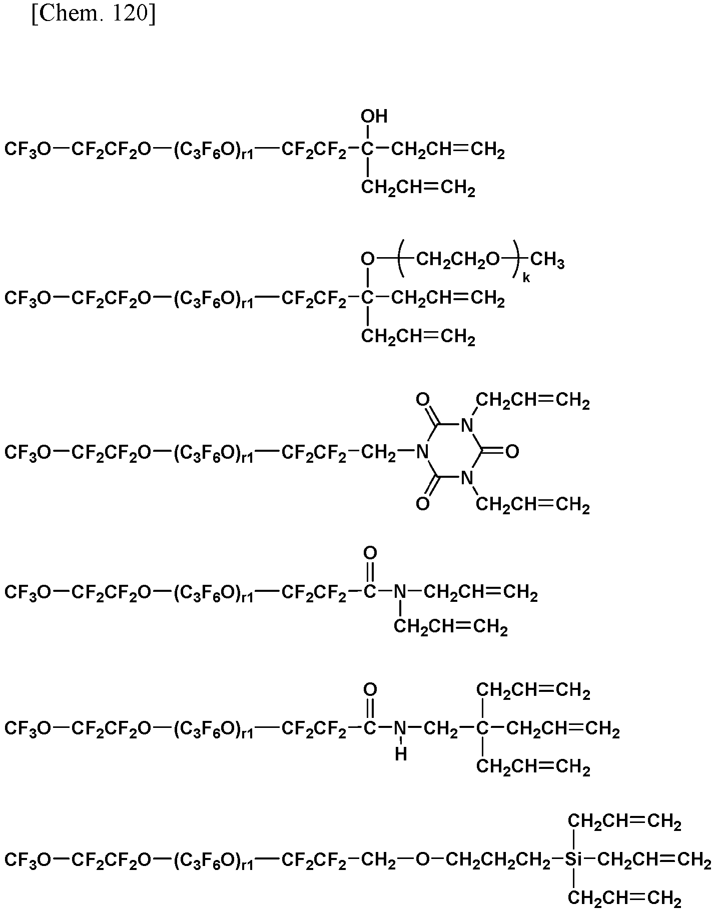 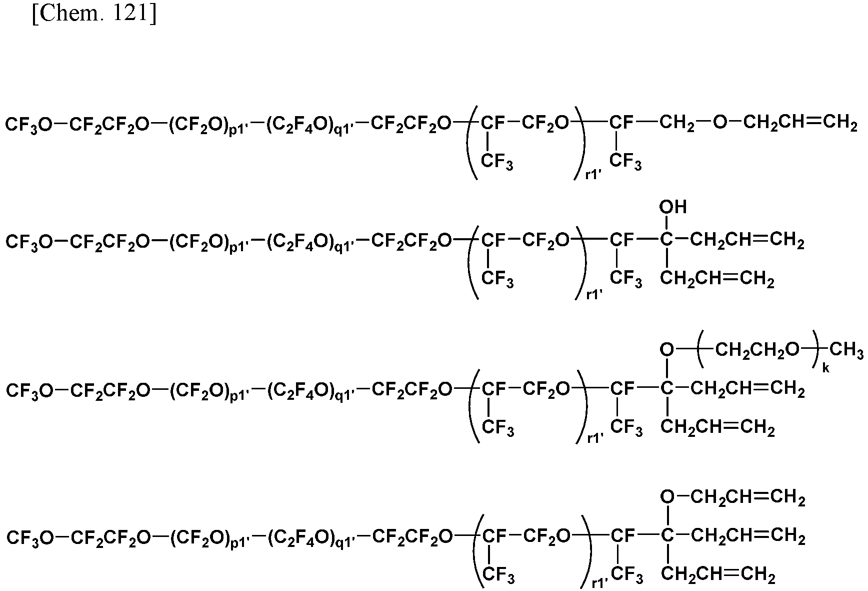 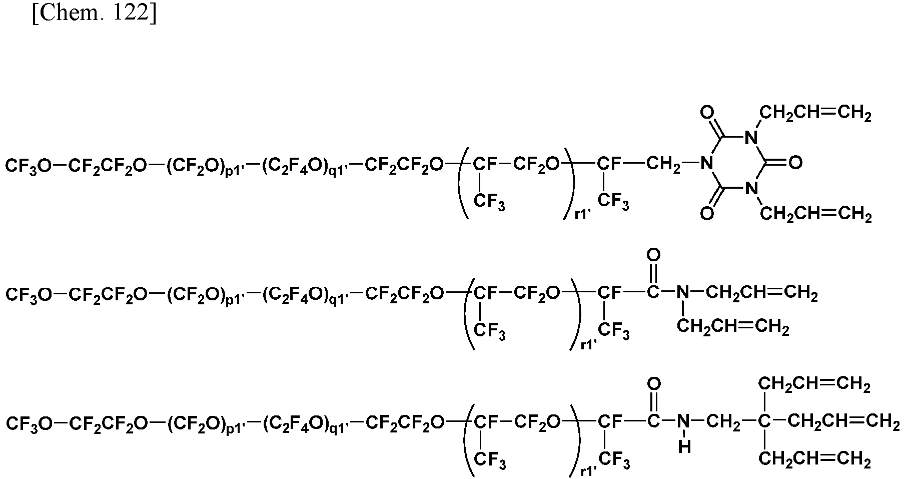 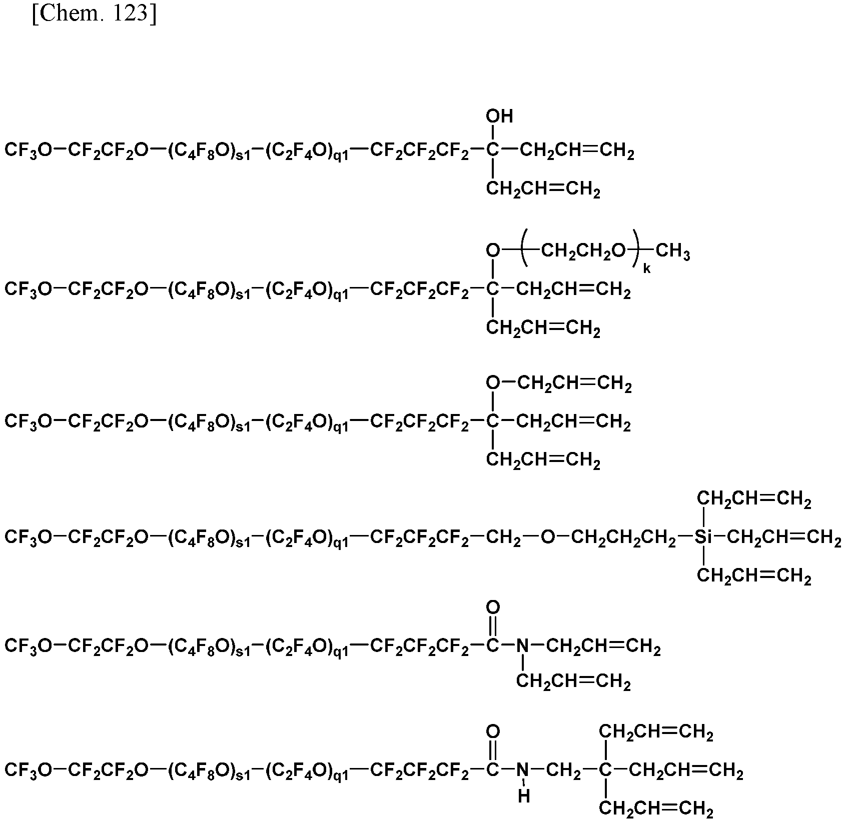 wherein p1, q1, r1, and s1 are each independently an integer of 1 or more, preferably each independently an integer of 1 to 199, more preferably each independently an integer of 2 to 100, provided that the sum of p1, q1, r1, and s1 in each formula is 10 to 200, p1', q1', and r1' are each independently an integer of 1 or more, preferably each independently an integer of 1 to 197, more preferably each independently an integer of 2 to 100, provided that the sum of p1', q1', and r1' in each formula is 9 to 199, individual repeat units shown in parentheses with p1, q1, r1, s1, p1', and q1' may be randomly bonded, and k is an integer of 1 to 20.

Examples of the fluoropolyether-containing polymer having one or more olefin sites at one end of the molecular chain represented by the formula (9) include the following. 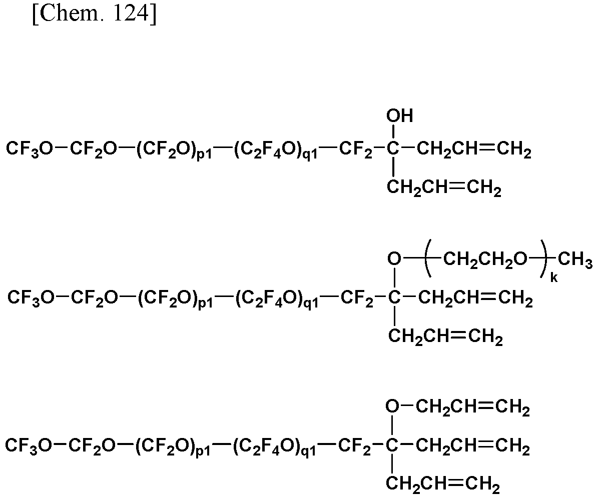 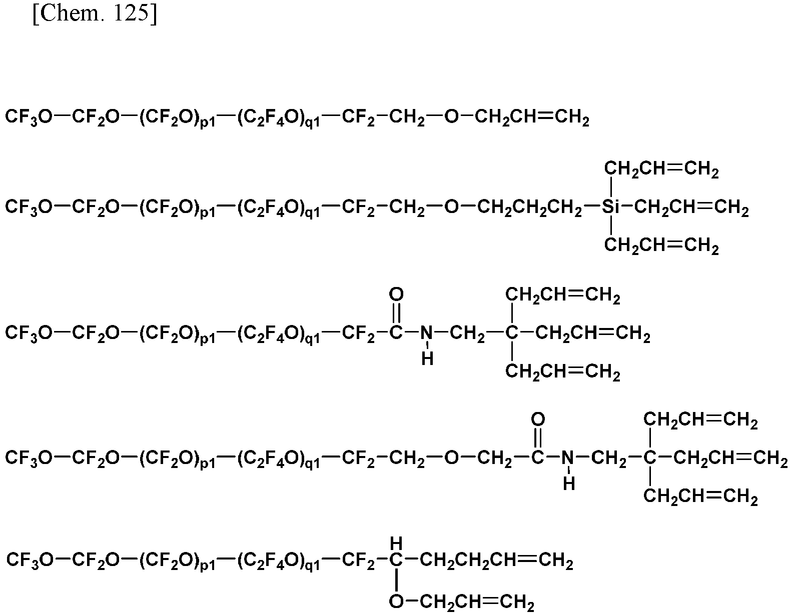 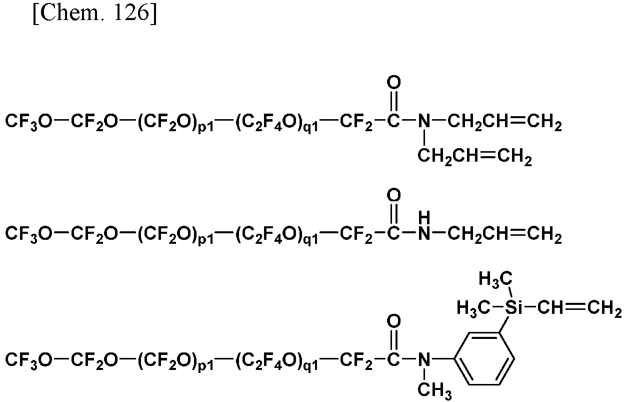 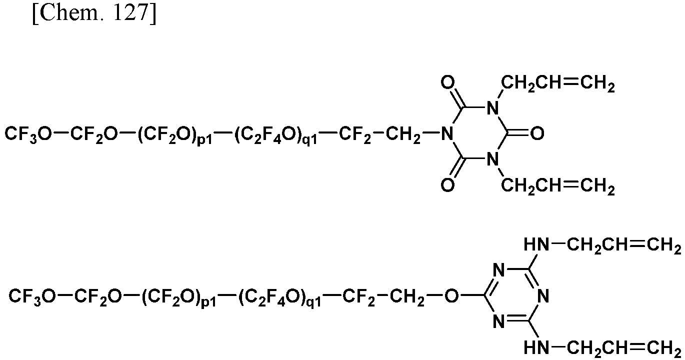 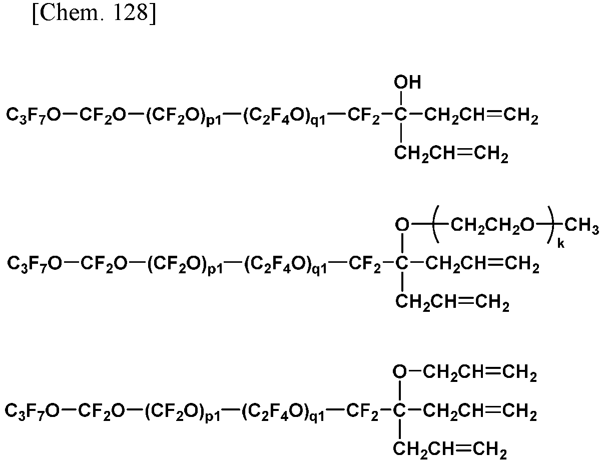 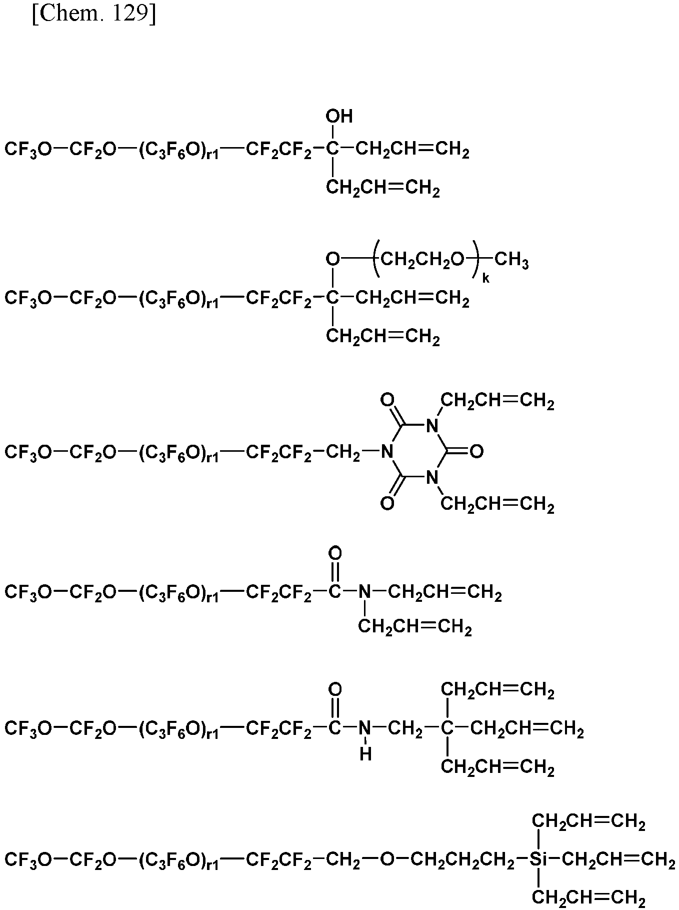 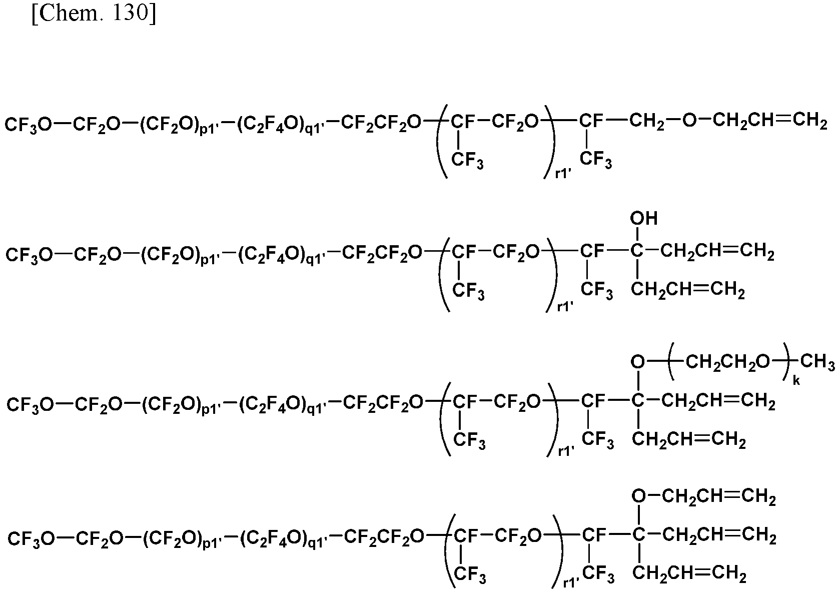 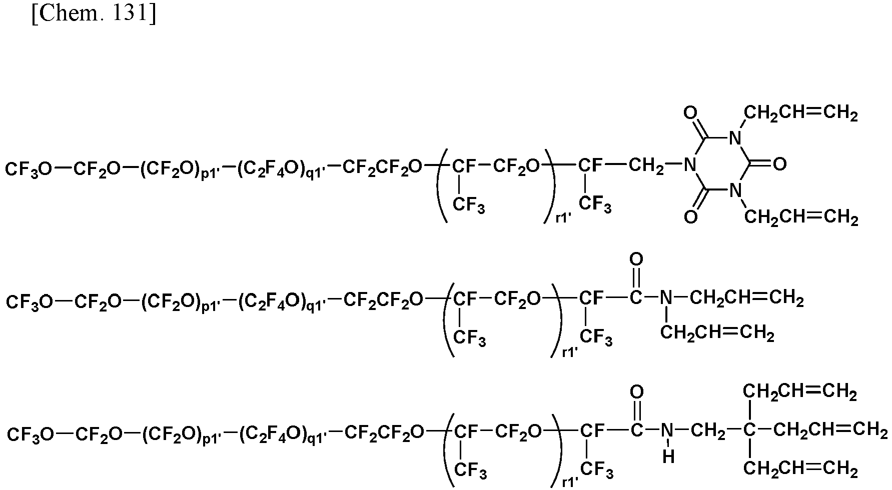 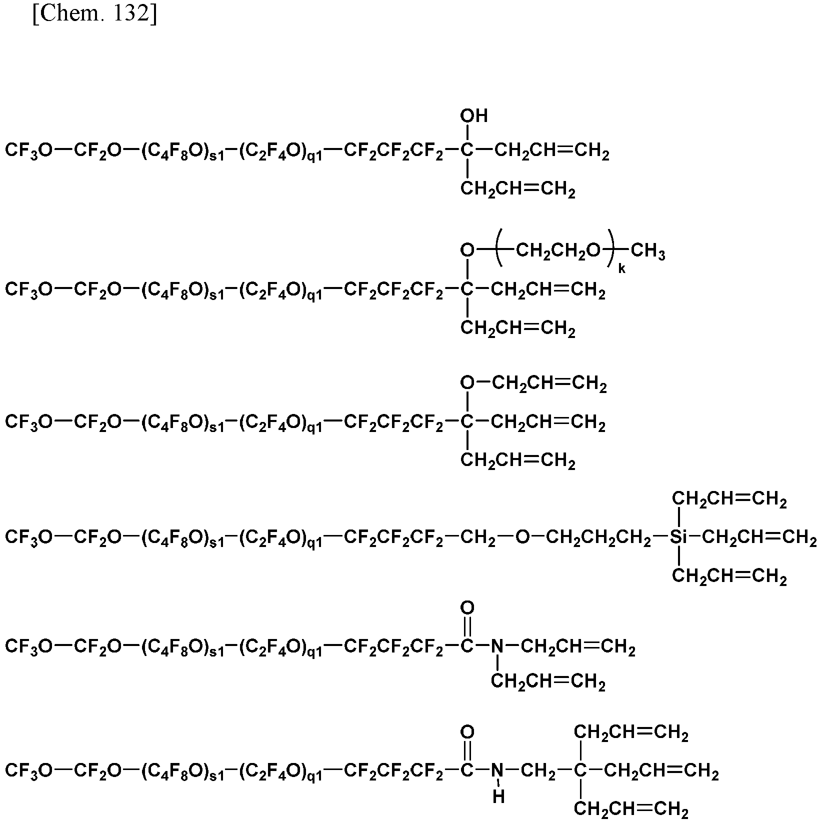 wherein p1, q1, r1, and s1 are each independently an integer of 1 or more, preferably each independently an integer of 1 to 199, more preferably each independently an integer of 2 to 100, provided that the sum of p1, q1, r1, and s1 in each formula is 10 to 200, p1', q1', and r1' are each independently an integer of 1 or more, preferably each independently an integer of 1 to 197, more preferably each independently an integer of 2 to 100, provided that the sum of p1', q1', and r1' in each formula is 9 to 199, individual repeat units shown in parentheses with p1, q1, r1, s1, p1', and q1' may be randomly bonded, and k is an integer of 1 to 20.

In the preparation of the fluoropolyether-containing polymer having a silanol group or a hydrolyzable silyl group represented by the formula (1) or (2), as the organosilicon compound having a SiH group and a silanol group or a hydrolyzable silyl group in the molecule, compounds represented by the following general formulae (10) to (13) are preferred. 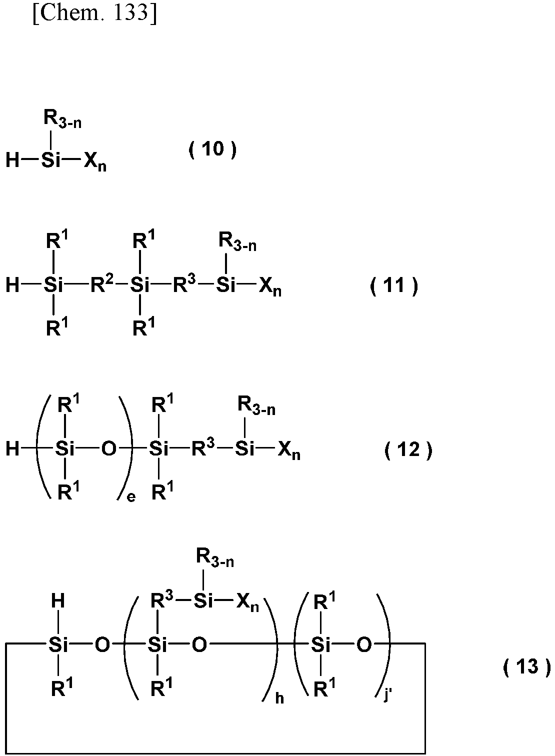 wherein R, X and n are as defined above, R¹ is independently a C₁-C₈ alkyl group or a C₆-C₁₀ aryl group, R² is a C₁-C₄ alkylene group or a C₆-C₁₀ arylene group, R³ is a C₂-C₈ divalent hydrocarbon group, h is 1, j' is an integer of 1 to 8, and h+j' is an integer of 2 to 9, and in the formula (13), individual repeat units shown in parentheses may be randomly bonded.

Here, R¹ which may be the same or different is a C₁-C₈, more preferably C₁-C₄ alkyl group such as methyl, ethyl, propyl or butyl, or a C₆-C₁₀ aryl group such as phenyl, and R¹ may be the same or different.

R² is a C₁-C₄ alkylene group such as methylene, ethylene or propylene (trimethylene, methylethylene), or a C₆-C₁₀ arylene group such as phenylene.

Also, R³ is a C₂-C₈, preferably C₂ or C₃ divalent hydrocarbon group, examples of which include alkylene groups such as methylene, ethylene, propylene (trimethylene, methylethylene), butylene (tetramethylene, methylpropylene), hexamethylene, and octamethylene, arylene groups such as phenylene, or combinations of at least two of the foregoing (e.g., alkylene-arylene groups). Inter alia, ethylene and trimethylene are preferred.

Examples of the organosilicon compound having a SiH group and a silanol group or a hydrolyzable silyl group in the molecule include the following. Examples include trimethoxysilane, triethoxysilane, tripropoxysilane, triisopropoxysilane, tributoxysilane, triisopropenoxysilane, triacetoxysilane, trichlorosilane, tribromosilane, triiodosilane, the following silane or siloxane compounds, and (partial) hydrolysates thereof.

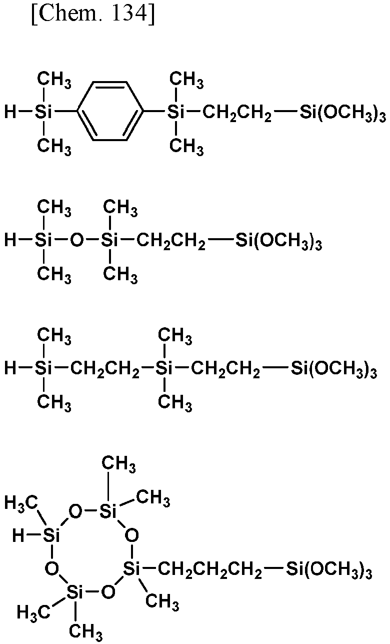

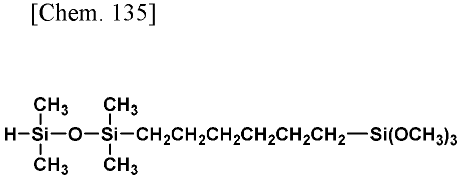

In the preparation of the fluoropolyether-containing polymer having a silanol group or a hydrolyzable silyl group represented by the formula (1) or (2), in the reaction of the fluoropolyether-containing polymer having one or more olefin sites at one end of the molecular chain with the organosilicon compound having a SiH group and a silanol group or a hydrolyzable silyl group in the molecule, the amount of the organosilicon compound having a SiH group and a silanol group or a hydrolyzable silyl group in the molecule used can be 1 to 4 equivalents, more preferably 1.5 to 4 equivalents per equivalent of olefin sites of the fluoropolyether-containing polymer having one or more olefin sites at one end of the molecular chain.

In the preparation of the fluoropolyether-containing polymer having a silanol group or a hydrolyzable silyl group represented by the formula (1) or (2), examples of the solvent include fluorine-based solvents. Examples of the fluorine-based solvent include 1,3-bis(trifluoromethyl)benzene, trifluoromethylbenzene, methyl nonafluorobutyl ether, methyl nonafluoroisobutyl ether, ethyl nonafluorobutyl ether, ethyl nonafluoroisobutyl ether, hydrofluoroether (HFE) solvents (manufactured by 3M, tradename: Novec series) such as 1,1,1,2,3,4,4,5,5,5-decafluoro-3-methoxy-2-(trifluoromethyl)pentane, and perfluoro solvents composed of completely fluorinated compounds (manufactured by 3M, tradename: Fluorinert series).

The amount of the solvent used is 10 to 300 parts by weight, preferably 50 to 150 parts by weight, still more preferably 50 to 100 parts by weight per 100 parts by weight of the fluoropolyether-containing polymer having one or more olefin sites at one end of the molecular chain.

In the preparation of the fluoropolyether-containing polymer having a silanol group or a hydrolyzable silyl group represented by the formula (1) or (2), examples of the hydrosilylation reaction catalyst include the following. Examples include platinum group metal based catalysts such as platinum black, chloroplatinic acid, alcohol-modified chloroplatinic acid, complexes of chloroplatinic acid with olefin, aldehyde, vinyl siloxane, and acetylene alcohol, tetrakis(triphenylphosphine)palladium, and chlorotris(triphenylphosphine)rhodium. Inter alia, platinum compounds such as vinyl siloxane coordination compounds are preferred.

The amount of the hydrosilylation catalyst is used in an amount to provide 0.1 to 100 ppm, and more preferably 1 to 50 ppm of transition metal based on the weight of the fluoropolyether-containing polymer having one or more olefin sites at one end of the molecular chain.

When a SiH group-containing halogenated (organic) silicon compound such as trichlorosilane is used as the organosilicon compound having a SiH group and a silanol group or a hydrolyzable silyl group in the molecule, thereafter, the substituent (halogen atom) on the silyl group may be converted into, for example, an alkoxy group such as a methoxy group as another hydrolyzable group, and examples of a reagent that can be used when the substituent (halogen atom) on the silyl group is converted into another hydrolyzable group include C₁-C₁₀ alcohols such as methanol, ethanol, propanol, isopropanol, and butanol.

The amount used can be 10 to 200 parts by weight, more preferably 40 to 100 parts by weight, still more preferably about 65 parts by weight per 100 parts by weight of an addition reaction product of the fluoropolyether-containing polymer having one or more olefin sites at one end of the molecular chain and the SiH group-containing halogenated (organic) silicon compound.

For example, when a compound represented by the following formula: 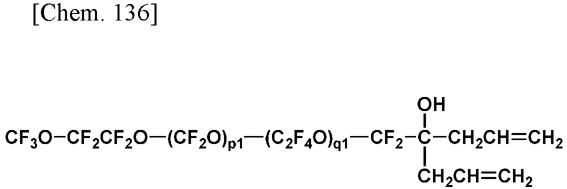 wherein the sum of p1, q1, p1, and q1 is the same as described above, and individual repeat units shown in parentheses with p1 and q1 may be randomly bonded,
is used as the fluoropolyether-containing polymer having one or more olefin sites at one end of the molecular chain represented by the formula (8), and trimethoxysilane is used as the organosilicon compound having a SiH group and a silanol group or a hydrolyzable silyl group in the molecule, a compound represented by the following formula is obtained. 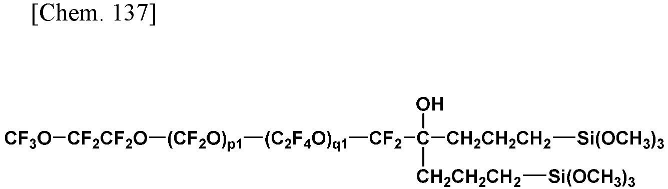 wherein the sum of p1, q1, p1, and q1 is the same as described above, and individual repeat units shown in parentheses with p1 and q1 may be randomly bonded.

For example, when a compound represented by the following formula: 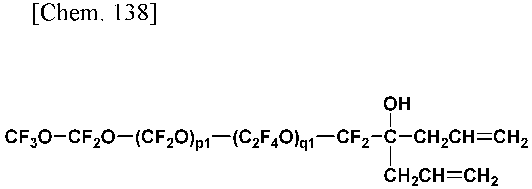 wherein the sum of p1, q1, p1, and q1 is the same as described above, and individual repeat units shown in parentheses with p1 and q1 may be randomly bonded,
is used as the fluoropolyether-containing polymer having one or more olefin sites at one end of the molecular chain represented by the formula (9), and trimethoxysilane is used as the organosilicon compound having a SiH group and a silanol group or a hydrolyzable silyl group in the molecule, a compound represented by the following formula is obtained. 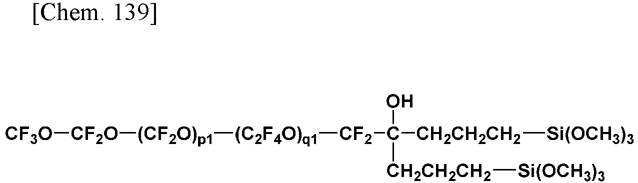 wherein the sum of p1, q1, p1, and q1 is the same as described above, and individual repeat units shown in parentheses with p1 and q1 may be randomly bonded.

Examples of the alternative method for preparing the fluoropolyether-containing polymer having a silanol group or a hydrolyzable silyl group represented by the formula (1) or (2) include the method shown below.

Using a fluoropolyether-containing polymer having one or more SiH groups at one end of the molecular chain as a raw material, for example, a fluoropolyether-containing polymer having three SiH groups at one end of the molecular chain and an organosilicon compound having an olefin site and a silanol group or a hydrolyzable silyl group in the molecule are dissolved in a solvent, for example, a fluorine-based solvent such as 1,3-bis(trifluoromethyl)benzene. The solution is aged in the presence of a hydrosilylation catalyst, for example, a toluene solution of chloroplatinic acid/vinyl siloxane complex, at a temperature of 40 to 120°C, preferably 60 to 100°C, more preferably about 80°C for a time of 1 to 72 hours, preferably 20 to 36 hours, more preferably about 24 hours. As the organosilicon compound having an olefin site and a silanol group or a hydrolyzable silyl group in the molecule, two different compounds can be used. In this case, compounds having different Y moieties in the formula (1) can be produced by stepwise addition.

Here, in the alternative method for preparing the fluoropolyether-containing polymer having a silanol group or a hydrolyzable silyl group represented by the formula (1) or (2), examples of the fluoropolyether-containing polymer having one or more SiH groups at one end of the molecular chain used for preparing the fluoropolyether-containing polymer having a silanol group or a hydrolyzable silyl group represented by the formula (1) include the following. 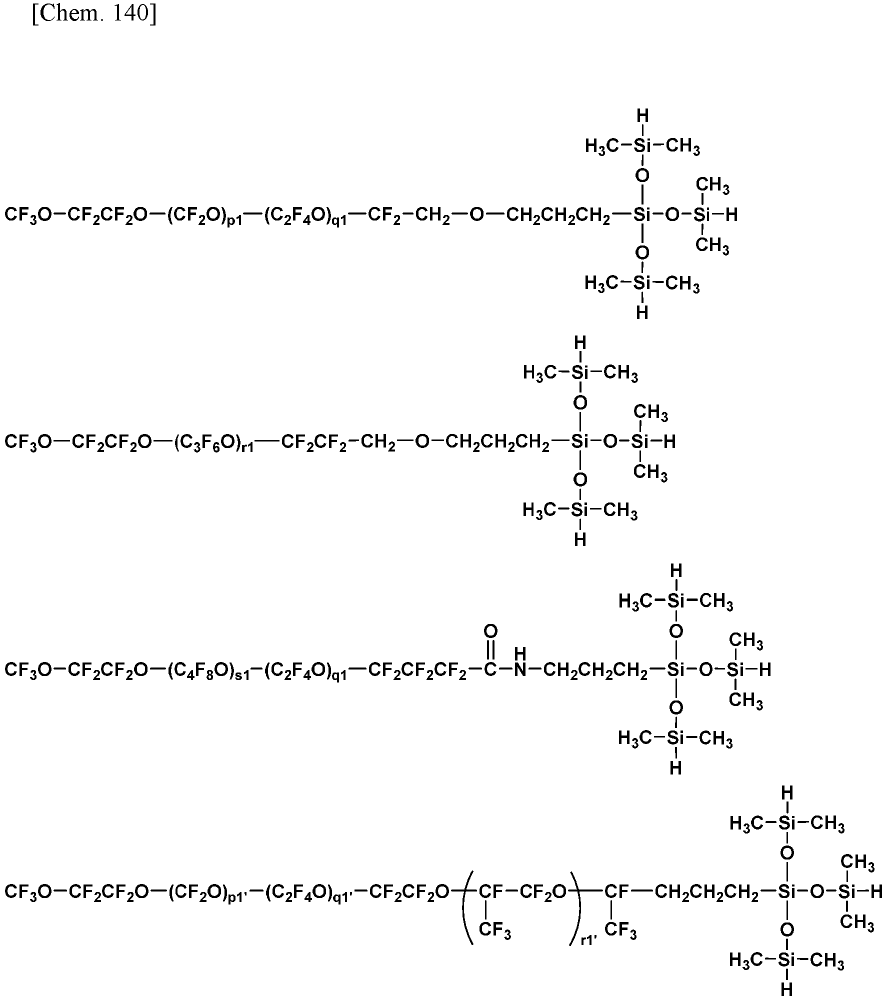 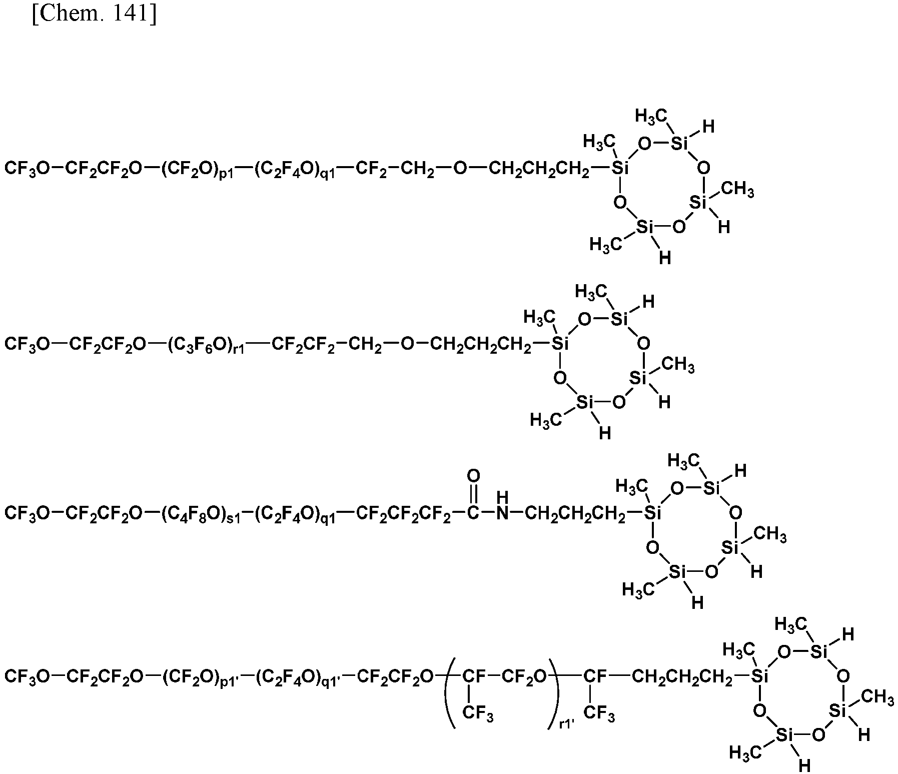 wherein p1, q1, r1, and s1 are each independently an integer of 1 or more, preferably each independently an integer of 1 to 199, more preferably each independently an integer of 2 to 100, provided that the sum of p1, q1, r1, and s1 in each formula is 10 to 200, p1', q1', and r1' are each independently an integer of 1 or more, preferably each independently an integer of 1 to 197, more preferably each independently an integer of 2 to 100, provided that the sum of p1', q1', and r1' in each formula is 9 to 199, and individual repeat units shown in parentheses with p1, q1, r1, s1, p1', and q1' may be randomly bonded.

Further, in the alternative method for preparing the fluoropolyether-containing polymer having a silanol group or a hydrolyzable silyl group represented by the formula (1) or (2), examples of the fluoropolyether-containing polymer having one or more SiH groups at one end of the molecular chain used for preparing the fluoropolyether-containing polymer having a silanol group or a hydrolyzable silyl group represented by the formula (2) include the following. 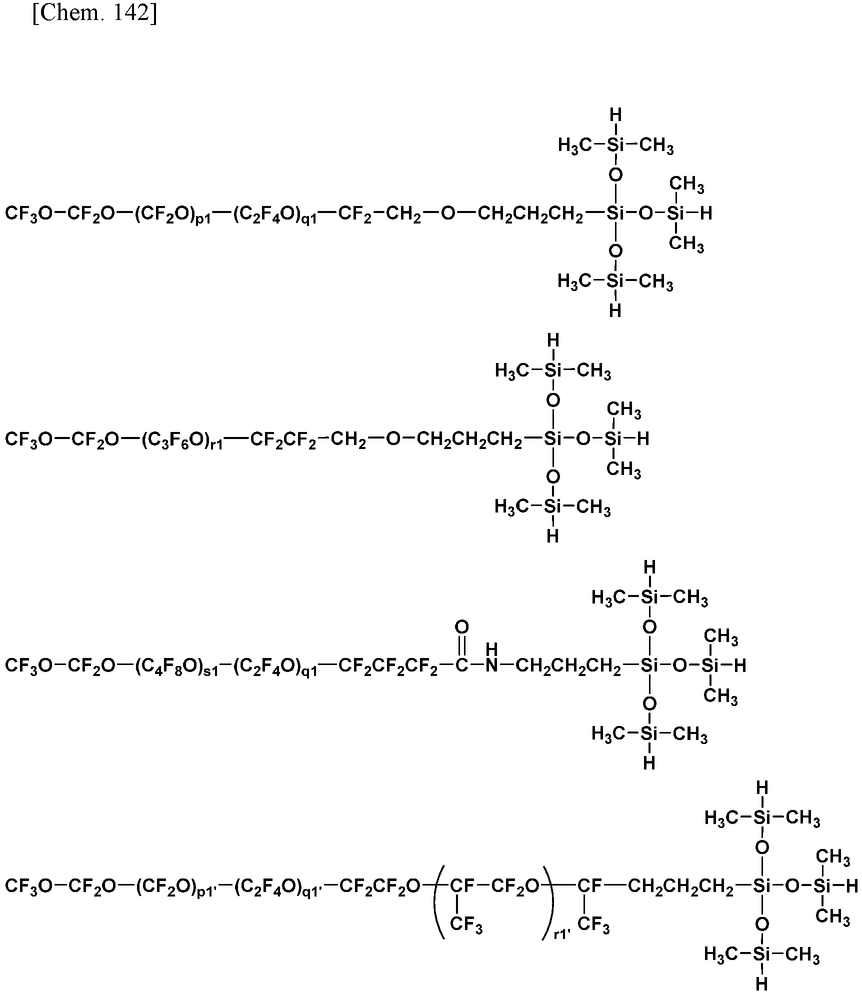 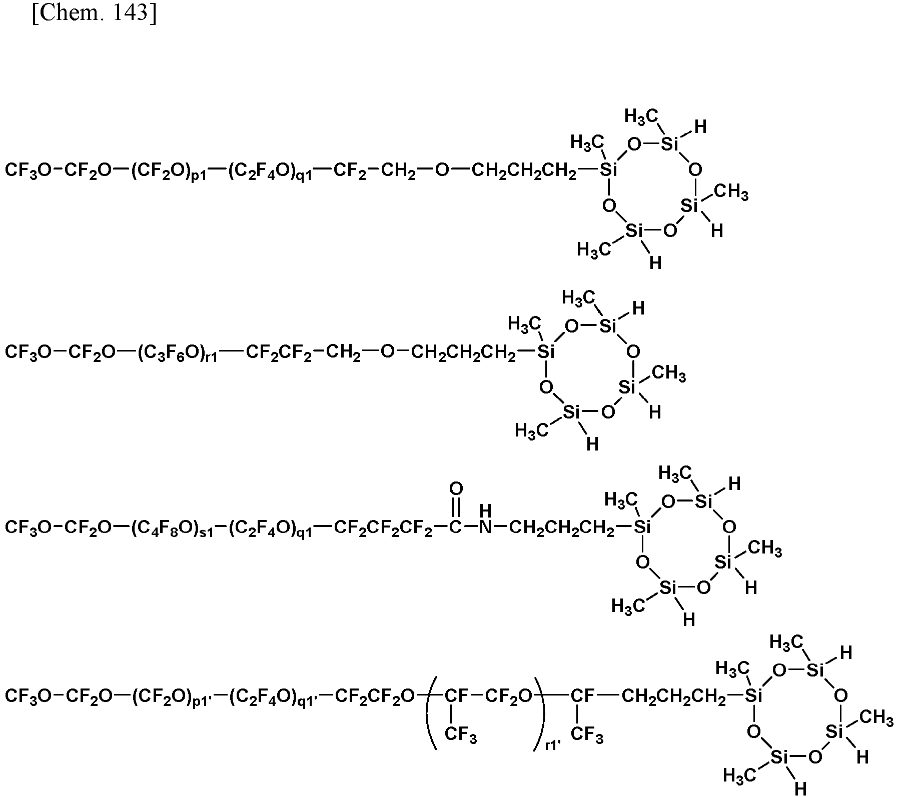 wherein p1, q1, r1, and s1 are each independently an integer of 1 or more, preferably each independently an integer of 1 to 199, more preferably each independently an integer of 2 to 100, provided that the sum of p1, q1, r1, and s1 in each formula is 10 to 200, p1', q1', and r1' are each independently an integer of 1 or more, preferably each independently an integer of 1 to 197, more preferably each independently an integer of 2 to 100, provided that the sum of p1', q1', and r1' in each formula is 9 to 199, and individual repeat units shown in parentheses with p1, q1, r1, s1, p1', and q1' may be randomly bonded.

In the alternative method for preparing the fluoropolyether-containing polymer having a silanol group or a hydrolyzable silyl group represented by the formula (1) or (2), as the organosilicon compound having an olefin site and a silanol group or a hydrolyzable silyl group in the molecule to be reacted with the fluoropolyether-containing polymer having one or more SiH groups at one end of the molecular chain, a compound represented by the following general formula (14) is preferred. 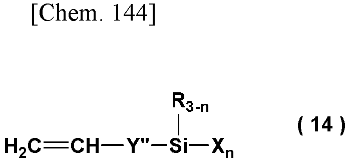 wherein R, X and n are as defined above, and Y" is a single bond or a divalent hydrocarbon group which may contain at least one selected from an oxygen atom, a sulfur atom, a silicon atom, and a siloxane bond.

In the formula (14), Y" is a single bond, or preferably a C₁-C₁₈ divalent hydrocarbon group which may contain at least one selected from an oxygen atom, a sulfur atom, a silicon atom, and a siloxane bond, and specifically, the divalent hydrocarbon group is preferably a group selected from the group consisting of a C₁-C₈ alkylene group which may contain an oxygen atom or a sulfur atom, an alkylene group containing a C₆-C₈ arylene group, a divalent group having an alkylene group bonded with a diorganosilylene group, a silalkylene structure, or a silarylene structure, and a divalent group having a C₁-C₁₀ alkylene group bonded to a bond of a linear organopolysiloxane residue of 2 to 10 silicon atoms or a branched or cyclic organopolysiloxane residue of 3 to 10 silicon atoms. Y" is preferably a single bond or a C₁-C₆ straight alkylene group.

Examples of the organosilicon compound having an olefin site and a silanol group or a hydrolyzable silyl group in the molecule include the following. Examples include vinyltrimethoxysilane, allyltrimethoxysilane, hexenyltrimethoxysilane, octenyltrimethoxysilane, vinyltriethoxysilane, allyltriethoxysilane, hexenyltriethoxysilane, octenyltriethoxysilane, vinyltriisopropoxysilane, allyltriisopropoxysilane, vinyltributoxysilane, allyltributoxysilane, vinyltriacetoxysilane, allyltriacetoxysilane, vinyltrichlorosilane, vinyltribromosilane, vinyltriiodosilane, the following silane or siloxane compounds, and (partial) hydrolysates thereof.

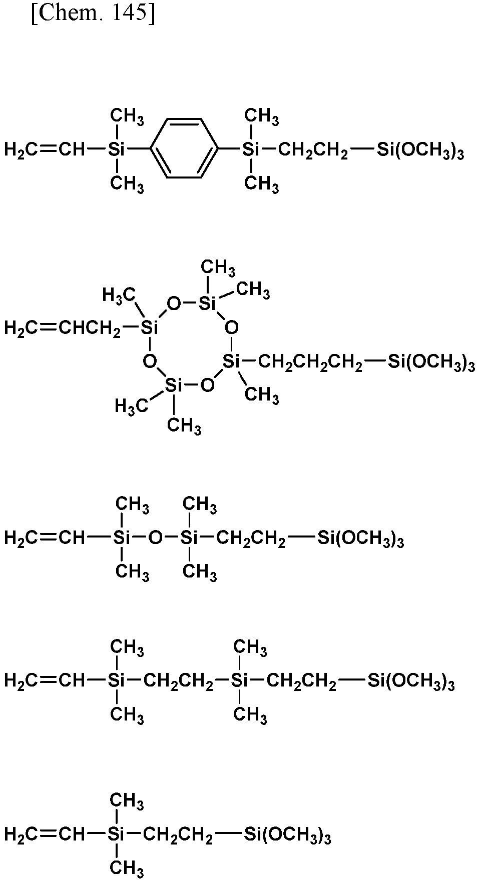

The amount of the organosilicon compound having an olefin site and a silanol group or a hydrolyzable silyl group in the molecule used can be 1 to 4 equivalents, more preferably 1.5 to 2.5 equivalents, still more preferably about 2 equivalents per equivalent of SiH groups in the fluoropolyether-containing polymer having one or more SiH groups at one end of the molecular chain.

Examples of the hydrosilylation reaction catalyst used in the alternative method for preparing the fluoropolyether-containing polymer having a silanol group or a hydrolyzable silyl group represented by the formula (1) or (2) can include the same hydrosilylation reaction catalysts as exemplified in the preparation method described above, and as the compounding amount, the hydrosilylation reaction catalyst can be used in an amount of 0.1 to 100 ppm, more preferably 0.3 to 50 ppm of transition metal based on the weight of the fluoropolyether-containing polymer having one or more SiH groups at one end of the molecular chain.

Examples of the solvent used in the alternative method for preparing the fluoropolyether-containing polymer having a silanol group or a hydrolyzable silyl group represented by the formula (1) or (2) can include the same solvents as exemplified in the preparation method described above, and as the compounding amount, 10 to 300 parts by weight, preferably 50 to 150 parts by weight, more preferably about 100 parts by weight can be used per 100 parts by weight of the fluoropolyether-containing polymer having one or more SiH groups at one end of the molecular chain.

The fluorine-containing composition of the present invention includes the component (A) that is a fluoropolyether-containing polymer having a silanol group or a hydrolyzable silyl group represented by the above formula (1) and/or a partial (hydrolytic) condensate thereof and the component (B) that is a fluoropolyether-containing polymer having a silanol group or a hydrolyzable silyl group represented by the above formula (2) and/or a partial (hydrolytic) condensate thereof.

Here, the "partial (hydrolytic) condensate" is obtained by partially condensing a hydroxy group of the fluoropolyether-containing polymer having a silanol group represented by the general formula (1) or (2) or a hydroxy group resulting from partial hydrolysis of a hydrolyzable group of the fluoropolyether-containing polymer having a hydrolyzable silyl group represented by the general formula (1) or (2) in advance by a known method.

In the fluorine-containing composition of the present invention, the molar ratio of the component (A) to the component (B) [(A)/(B)] is 1.2 to 4.0, preferably 1.2 to 3.2, more preferably 1.2 to 2.5. When the ratio (A)/(B) is less than 1.2, either or both of chemical resistance and heat resistance of a cured film obtained by curing the fluorine-containing composition of the present invention are deteriorated, and their respective durability cannot be achieved. When the ratio (A)/(B) exceeds 4.0, the slipperiness of the cured film is deteriorated. However, when the component (C) described later is contained, the slipperiness may be maintained even when the ratio (A)/(B) exceeds 4.0, but either or both of chemical resistance and heat resistance are deteriorated, and their respective durability cannot be achieved.

The fluorine-containing composition of the present invention may further contain, as the component (C), a fluoropolyether-containing polymer represented by the following general formula (5):
[Chem. 146]

A'-Rf¹-A' (5)

wherein Rf¹ is a divalent fluorooxyalkylene-containing polymer residue having the following formula (7): 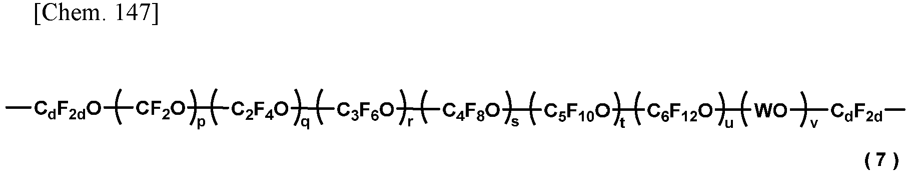 wherein W is the same as above, d is independently the same as above for each unit, p, q, r, s, t, u, v, and p+q+r+s+t+u+v are the same as above, each of these units may be linear or branched, and individual repeat units shown in parentheses with p, q, r, s, t, u, and v may be randomly bonded,
and A' is a fluorine atom.

In the formula (5), Rf¹ is a divalent fluorooxyalkylene-containing polymer residue represented by the formula (7).

In the formula (7), W, d, p, q, r, s, t, u, v, and p+q+r+s+t+u+v are the same as described above, and each of these units may be linear or branched. Also, individual repeat units shown in parentheses with p, q, r, s, t, u, and v may be randomly bonded.

Specific examples of Rf¹ include those shown below. 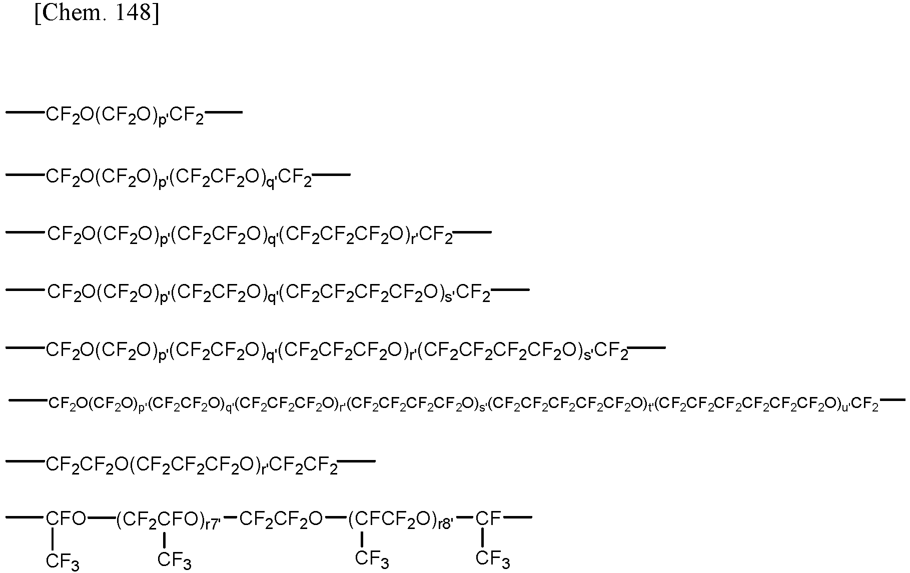 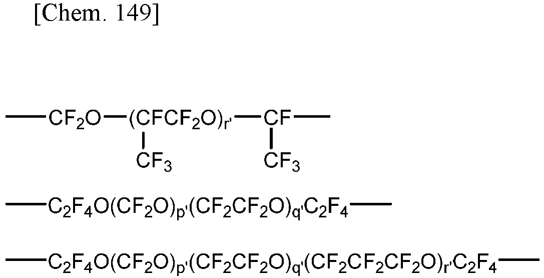 wherein p', q', r', s', t', and u' are each independently an integer of 1 or more, preferably each independently an integer of 1 to 195, more preferably each independently an integer of 2 to 100, and the sum of p', q', r', s', t', and u' in each formula is 10 to 200, r7' and r8' are each independently an integer of 1 or more, preferably each independently an integer of 1 to 199, more preferably each independently an integer of 2 to 100, and the sum of r7' and r8' is 9 to 199, and individual repeat units shown in parentheses with p', q', r', s', t', and u' may be randomly bonded.

Examples of the fluoropolyether-containing polymer represented by the formula (5) include those shown below.

[Chem. 150] CF₃O-(CF₂O)ₚ₁-(C₂F₄O)_{q1}-CF₃

wherein the sum of p1, q1, p1, and q1 is the same as described above, and individual repeat units shown in parentheses with p1 and q1 may be randomly bonded.

When the component (C) is blended, the content thereof is preferably 0.1 to 500 parts by weight, more preferably 1 to 100 parts by weight, still more preferably 5 to 50 parts by weight, per 100 parts by weight of the total of the component (A) and the component (B). When the content exceeds 500 parts by weight, the durability (abrasion resistance) of a cured film obtained by curing the fluorine-containing composition of the present invention may be deteriorated.

The fluorine-containing composition of the present invention may further contain, as the component (D), a fluoropolyether-containing polymer having a silanol group or a hydrolyzable silyl group represented by the following general formula (6) and/or a partial (hydrolytic) condensate thereof.
[Chem. 151]

A-Rf¹-A (6)

wherein Rf¹ and A are the same as described above.

In the formula (6), Rf¹ is a divalent fluorooxyalkylene-containing polymer residue represented by the above formula (7), and is exemplified by those similar to those exemplified for Rf¹ of the formula (5).

In addition, A is a monovalent group represented by the above formula (4), and is exemplified by those similar to those exemplified for A in the formulae (1) and (2). A at both ends may be the same or different, and may be the same or different from A in the formulae (1) and (2).

Examples of the fluoropolyether-containing polymer represented by the formula (6) include those shown below. 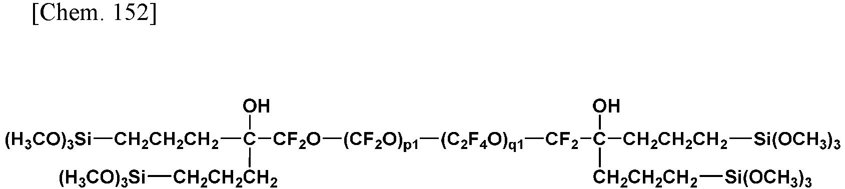 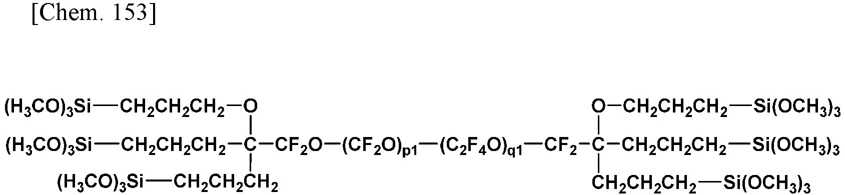 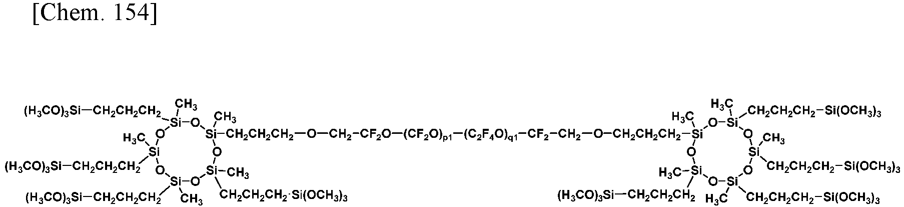 wherein the sum of p1, q1, p1, and q1 is the same as described above, and individual repeat units shown in parentheses with p1 and q1 may be randomly bonded.

When the component (D) is blended, the content thereof is preferably 0.1 to 500 parts by weight, more preferably 1 to 100 parts by weight, still more preferably 5 to 50 parts by weight, per 100 parts by weight of the total of the component (A) and the component (B). When the content exceeds 500 parts by weight, the slipperiness of the surface of a cured film obtained by curing the fluorine-containing composition of the present invention may be deteriorated.

The fluorine-containing composition of the present invention may further contain an unreacted raw material or a reaction intermediate at the time of synthesis of the fluoropolyether-containing polymer having a silanol group or a hydrolyzable silyl group represented by the formula (1) or (2).

The fluorine-containing composition of the present invention can be obtained by uniformly mixing the above components (A) and (B), and as necessary, the components (C) and (D) and the other components by a conventional method.

Here, the total amount of the components (A) and (B) in the fluorine-containing composition (that is, the content of the fluoropolyether-containing polymer having a silanol group or a hydrolyzable silyl group represented by the general formula (1) or (2) and/or a partial (hydrolytic) condensate thereof) is preferably 50 to 100 wt%, more preferably 60 to 100 wt%, still more preferably 80 to 100 wt%.

The present invention further provides a surface treatment agent containing the fluorine-containing composition described above.

To the surface treatment agent, a hydrolytic condensation catalyst may be added as necessary. Suitable hydrolytic condensation catalysts include organotin compounds such as dibutyltin dimethoxide and dibutyltin dilaurate, organotitanium compounds such as tetra-n-butyl titanate, organic acids such as acetic acid, methanesulfonic acid, and fluorine modified carboxylic acids, and inorganic acids such as hydrochloric acid and sulfuric acid. Of these, acetic acid, tetra-n-butyl titanate, dibutyltin dilaurate, and fluorine-modified carboxylic acids are desirable.

The hydrolytic condensation catalyst is added in a catalytic amount, typically 0.01 to 5 parts by weight, particularly 0.1 to 1 parts by weight per 100 parts by weight of the fluorine-containing composition (in particular, the total of the components (A), (B), and (D)).

The surface treatment agent may further comprise a solvent. Suitable solvents include fluorine-modified aliphatic hydrocarbon solvents such as perfluoroheptane, perfluorooctane, and tridecafluorooctane; fluorine-modified aromatic hydrocarbon solvents such as 1,3-bis(trifluoromethyl)benzene; fluorine-modified ether solvents such as methyl perfluorobutyl ether, methyl perfluorohexyl ether, ethyl perfluorobutyl ether, and perfluoro(2-butyltetrahydrofuran), methyl perfluoroheptenyl ether, and 1,1,2,2-tetrafluoroethyl-2,2,2-trifluoroethyl ether; fluorine-modified alkylamine solvents such as perfluorotributylamine and perfluorotripentylamine; hydrocarbon solvents such as petroleum benzine, toluene, and xylene; ketone solvents such as acetone, methyl ethyl ketone, and methyl isobutyl ketone. Of these, fluorine-modified solvents are desirable for solubility and wettability, and 1,3-bis(trifluoromethyl)benzene, perfluoro(2-butyltetrahydrofuran), perfluorotributylamine, ethyl perfluorobutyl ether, methyl perfluorohexyl ether, tridecafluorooctane, and 1,1,2,2-tetrafluoroethyl-2,2,2-trifluoroethyl ether are particular preferred.

The solvents may be used in admixture of two or more while it is preferred that the fluorine-containing composition be uniformly dissolved in the solvent. An optimum concentration of the fluorine-containing composition to be dissolved in the solvent varies with a treatment method, and the amount which is easy to weigh may be chosen. In the case of direct coating, the concentration of the fluorine-containing composition (in particular, the total of the components (A) to (D)) is preferably 0.01 to 10 parts by weight, particularly preferably 0.05 to 5 parts by weight per 100 parts by weight of the total of the solvent and the fluorine-containing composition (in particular, the total of the solvent and the components (A) to (D)). In the case of evaporation treatment, the concentration of the fluorine-containing composition (in particular, the total of the components (A) to (D)) is preferably 0.01 to 40 parts by weight, particularly preferably 0.1 to 30 parts by weight per 100 parts by weight of the total of the solvent and the fluorine-containing composition (in particular, the total of the solvent and the components (A) to (D)).

The surface treatment agent of the present invention may be applied to a substrate by any well-known techniques such as brush coating, dipping, spraying and evaporation. In the case of evaporation, the heating mode may be either resistance heating or EB heating and is not particularly limited. The curing temperature varies with a particular curing technique. For example, in the case of direct coating (brush coating, dipping or spraying), suitable curing conditions include a temperature of 25 to 200°C, particularly 25 to 150°C for 30 minutes to 36 hours, particularly 1 to 24 hours. In addition, in the case of application by evaporation, the temperature is desirably in the range of 20 to 200°C for 1 to 24 hours. The coating agent may be under humid conditions. The cured film typically has a thickness of typically 0.1 to 100 nm, particularly 1 to 20 nm although the thickness depends on the type of substrate. The film thickness can be measured by means such as a spectral reflectance method, an X-ray reflectance method, a spectroscopic ellipsometry method, or a fluorescent X-ray method. Also, in the case of spray coating, for example, a procedure involving diluting the agent with a fluorine-based solvent having water previously added thereto, for thereby effecting hydrolysis to generate Si-OH, and thereafter, spraying the dilution is recommended because the coating rapidly cures.

The substrate to be treated with the surface treatment agent of the present invention is not particularly limited, and may be made of any desired materials including paper, fabric, metals, metal oxides, glass, plastics, ceramics, and quartz. The surface treatment agent of the present invention is effective for endowing the substrate with water/oil repellency. In particular, the surface treatment agent is advantageously used for the treatment of SiO₂-deposited glass, strengthened glass, a lens substrate, or a quartz substrate film.

Articles which may be treated with the surface treatment agent of the present invention include car navigation systems, mobile phones, smartphones, digital cameras, digital video cameras, PDA, portable audio players, car audio players, game consoles, eyeglass lenses, camera lenses, lens filters, sunglasses, medical instruments (e.g., gastroscopes), copiers, personal computers, LC displays, organic EL displays, plasma displays, touch panel displays, protective film, antireflective film, and other optical articles. The surface treatment agent of the present invention is effective for preventing fingerprints and sebum from adhering to the articles and also for imparting scratch resistance. Therefore, it is particularly useful as a water/oil-repellent layer on touch panel displays and antireflective films.

The surface treatment agent of the present invention is also used for anti-staining coatings on sanitary ware such as bathtubs and washbowls; anti-staining coatings on glazing or strengthened glass and head lamp covers in transport vehicles such as automobiles, trains and aircraft; water/oil repellent coatings on building exteriors; coatings for preventing oil contamination on kitchen ware; anti-staining, anti-sticking, anti-graffiti coatings in telephone booths; anti-fingerprint coatings on artistic objects; anti-fingerprint coatings on compact discs and DVD's; mold parting agents; paint additives; and resin modifiers. The agent is also effective for modifying the flow and dispersion of inorganic fillers, and for improving the lubricity of tape and film.

### EXAMPLES

Examples and Comparative Examples are given below for illustrating the present invention, but the present invention is not limited by Examples. The number of repetitions of each fluorooxyalkylene unit in the fluorooxyalkylene-containing polymer residue is a numerical average value calculated from ¹⁹F-NMR. Also, in the following formulae, individual repeat units shown in parentheses with p1 and q1, and p1' and q1' are randomly bonded. In the following examples, wt% represents % by weight. Further, the film thickness is a value measured by a spectroscopic ellipsometry method using a spectroscopic ellipsometer.

The following compounds were used as components (A).

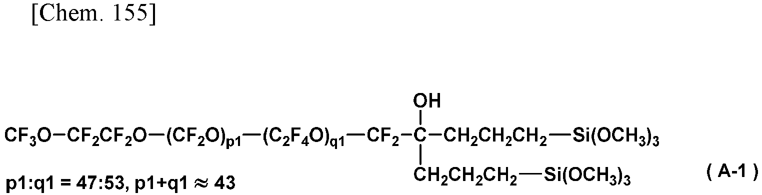

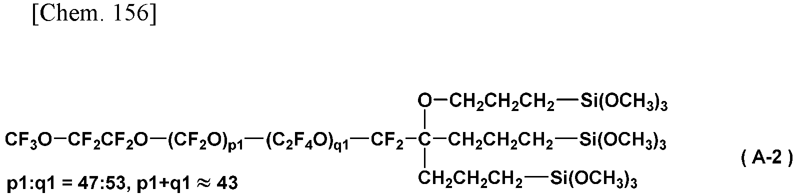

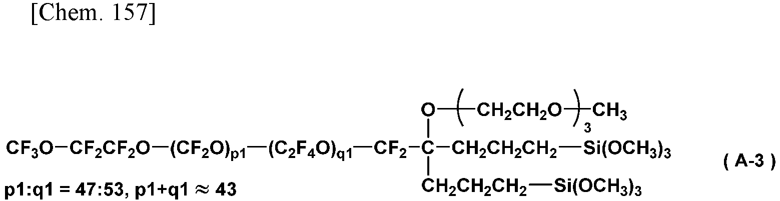

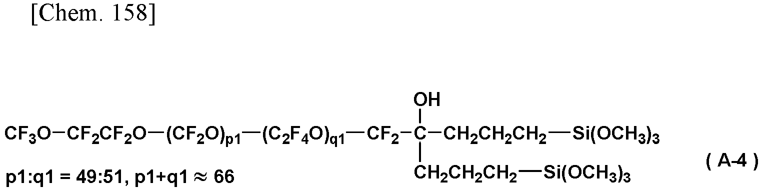

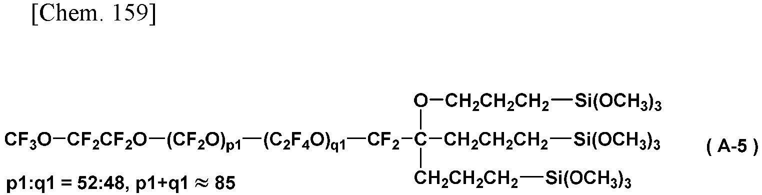

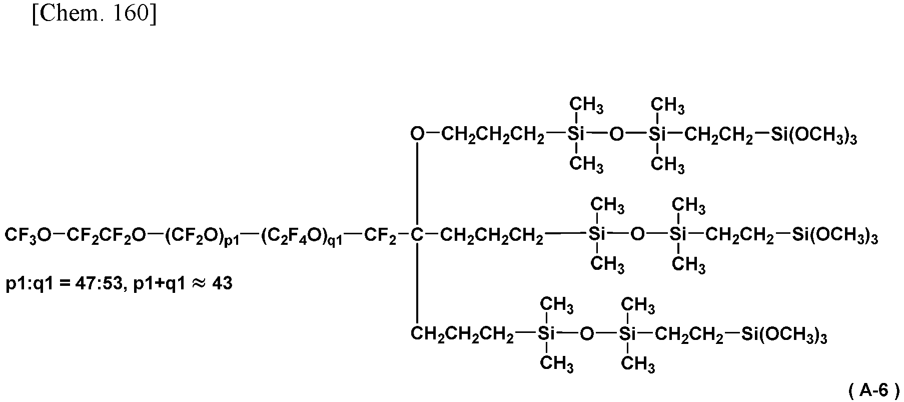

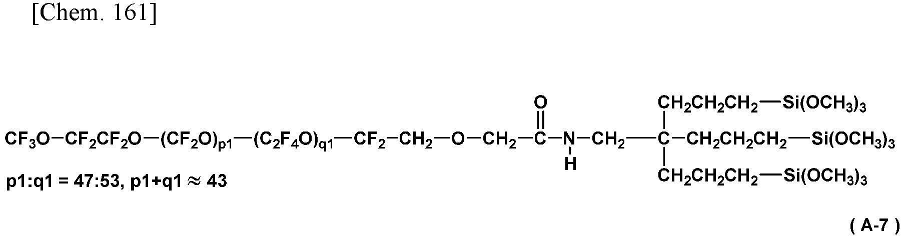

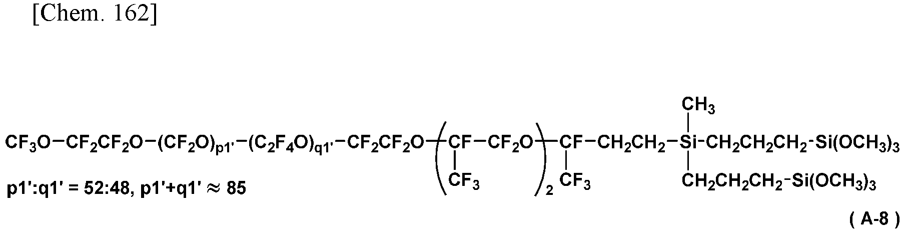

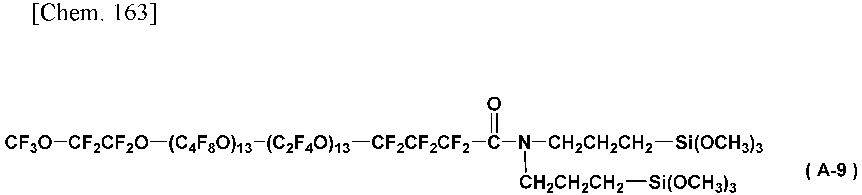

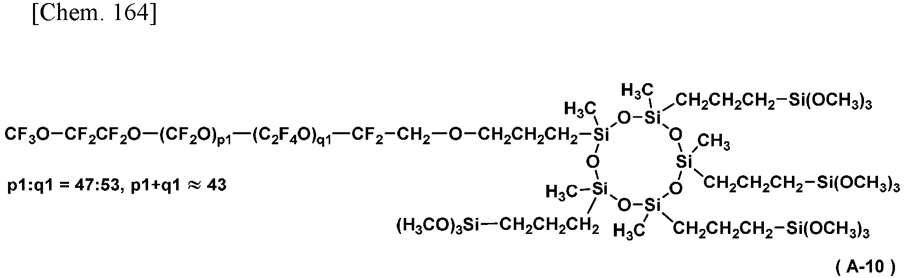

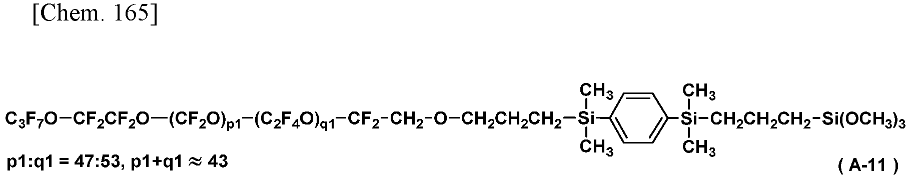

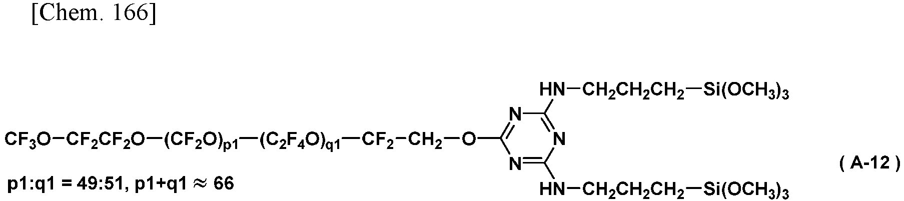

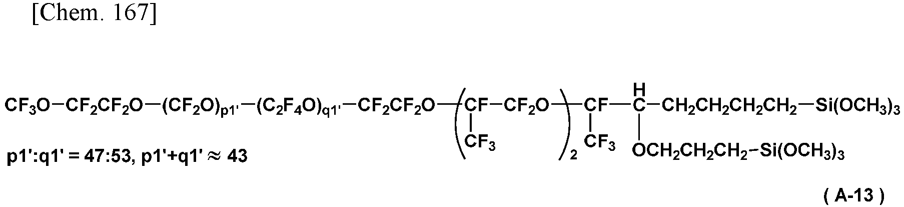

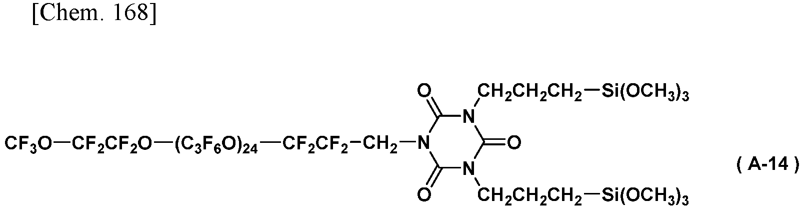

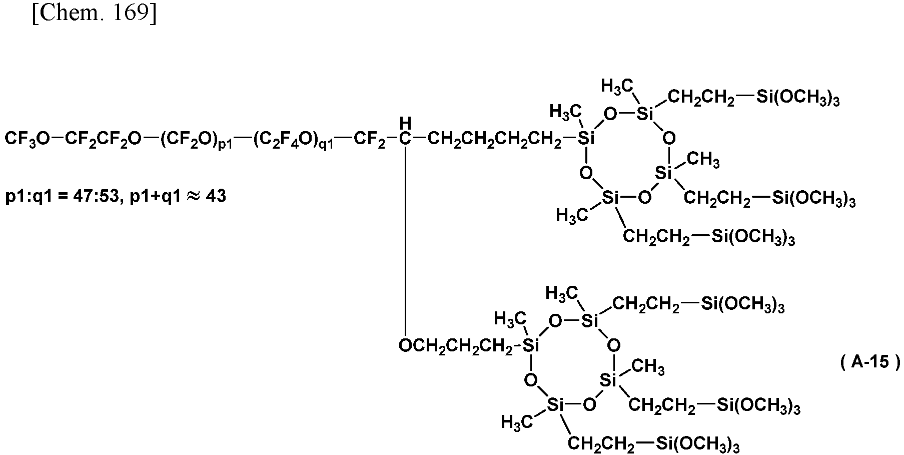

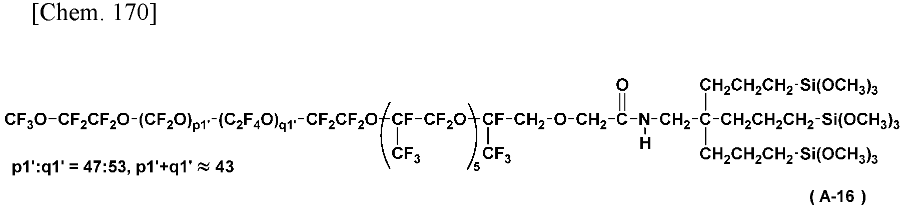

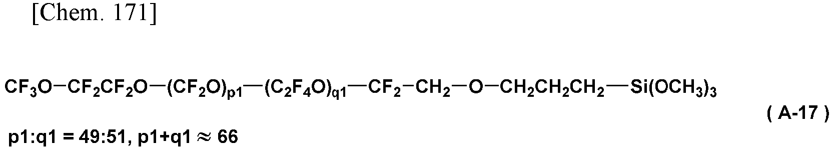

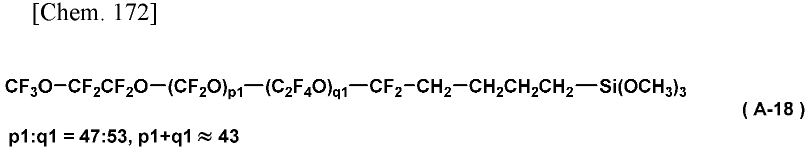

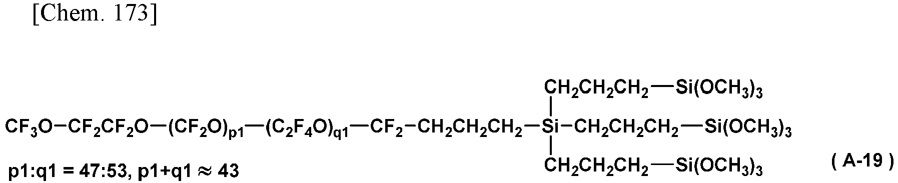

The following compounds were used as components (B). 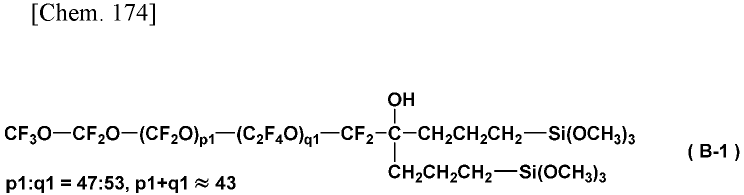 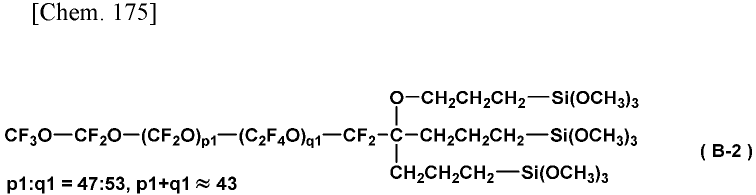 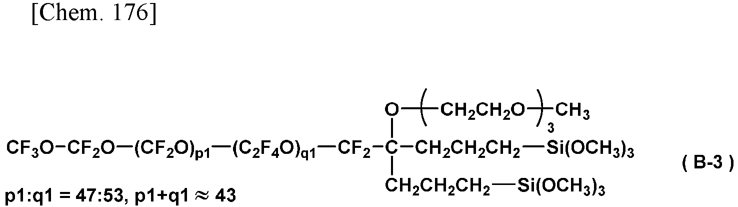 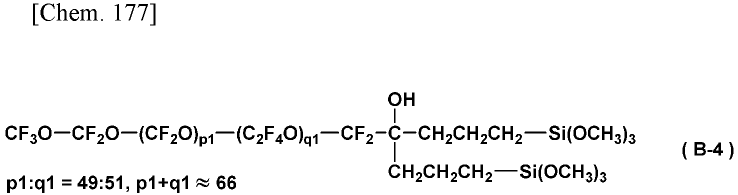 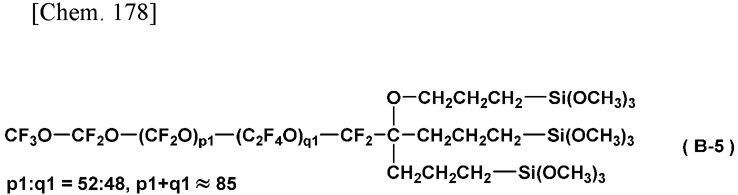 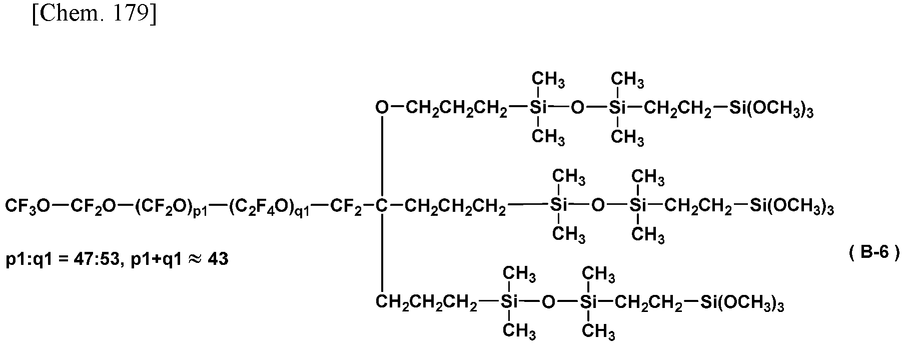 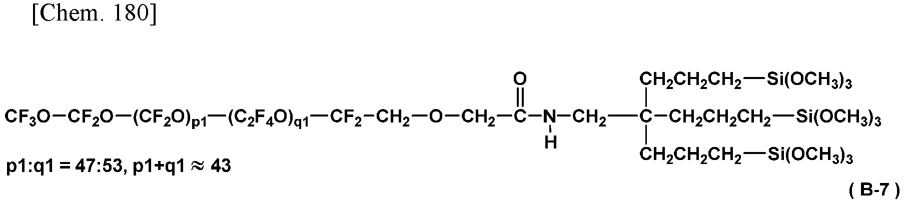 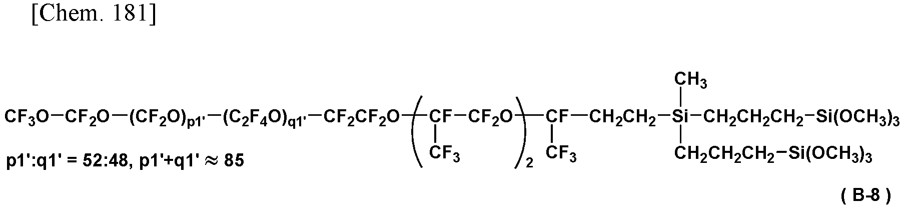 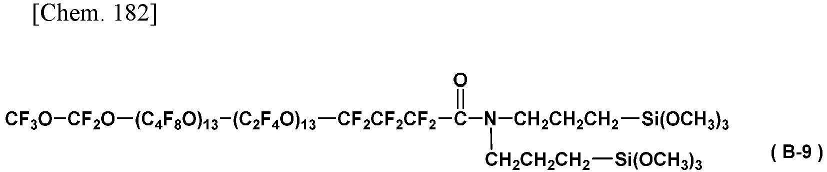 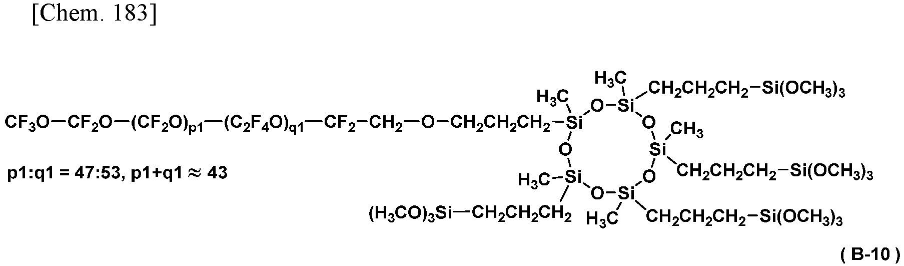 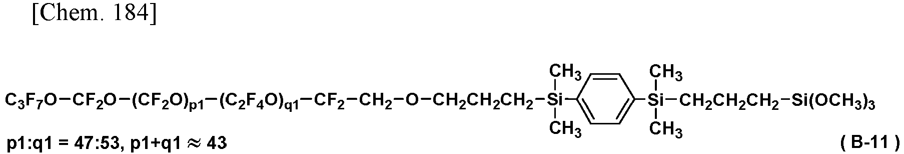 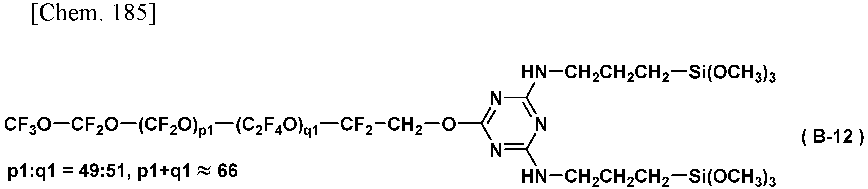 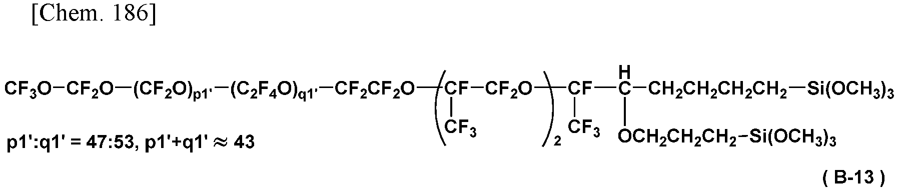 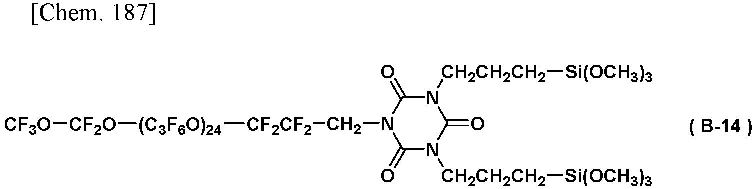 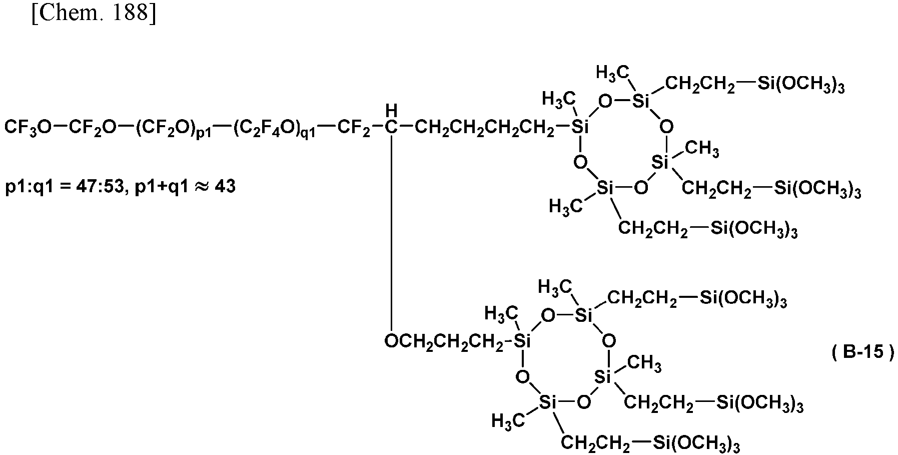 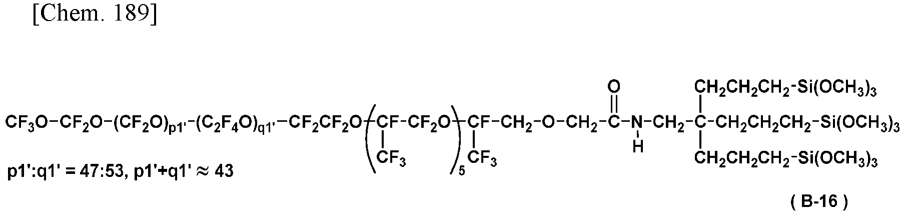 [Chem. 190]

CF₃O-CF₂O-(CF₂O)ₚ₁-(C₂F₄O)_{q1}-CF₂-CH₂-O-CH₂CH₂CH₂-Si(OCH₃)₃ (B-17)

p1:q1 = 47:53, p1+q1 ≈ 43
[Chem. 191]

CF₃O-CF₂O-(CF₂O)ₚ₁-(C₂F₄O)_{q1}-CF₂-CH₂-CH₂CH₂CH₂-Si(OCH₃)₃ (B-18)

p1:q1 = 49:51, p1+q1 ≈ 66

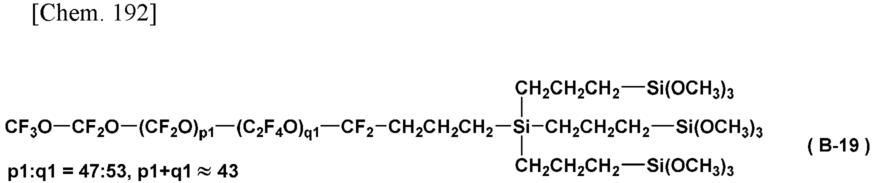

The following compounds were used as components (C).
[Chem. 193]

CF₃O-(CF₂O)ₚ₁-(C₂F₄O)_{q1}-CF₃ (C-1)

p1:q1 = 47:53, p1+q1 ≈ 43
[Chem. 194]

CF₃O-(CF₂O)ₚ₁-(C₂F₄O)_{q1}-CF₃ (C-2)

p1:q1 = 52:48, p1+q1 ≈ 85

The following compounds were used as components (D).

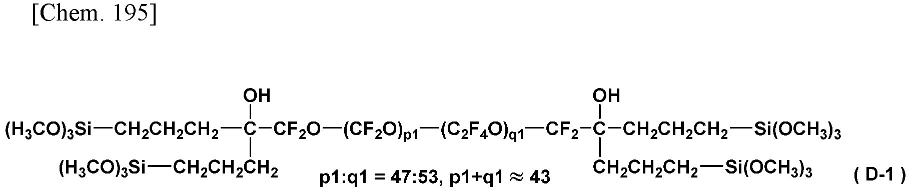

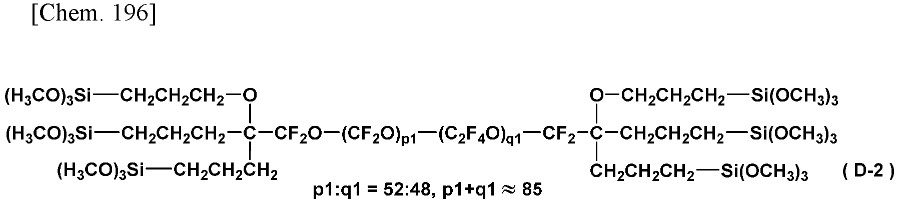

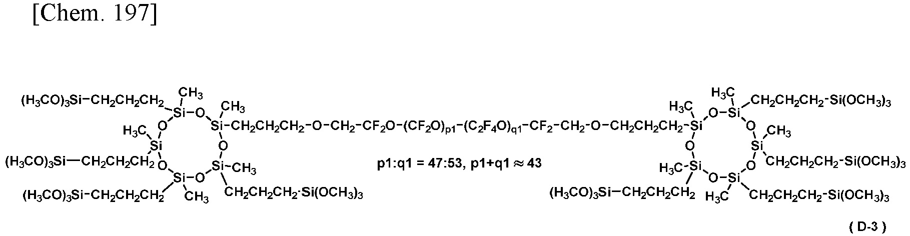

For dilution, the following solvents were used.
Novec 7200 (manufactured by 3M, methyl perfluorobutyl ether),
Novec 7300 (manufactured by 3M, methyl perfluorohexyl ether),
ASAHIKLIN AC-6000 (manufactured by AGC Inc., tridecafluorooctane),
ASAHIKLIN AE-3000
   (manufactured by AGC Inc., 1, 1,2,2-tetrafluoroethyl-2,2,2-trifluoroethyl ether),
Opteon SF10
   (manufactured by Chemours-Mitsui Fluoroproducts Co., Ltd., methyl perfluoroheptenyl ether)

### [Examples 1 to 7, Comparative Examples 1 to 7]

Mixtures of the components (A) to (D) (fluorine-containing compositions) were diluted with a diluent solvent so as to be 20 wt% in terms of solid content (that is, the total weight of the components (A) to (D)) to prepare surface treatment agents. The mixtures of the components (A) to (D) (the fluorine-containing compositions) were prepared at composition ratios in Table 1 (provided that molar ratios for compounding ratios of the component (A) to the component (B)).

**[Table 1]**

| | Solvent | (A) | (B) | (C) | (D) | Molar ratio (A)/(B) | |
|---|---|---|---|---|---|---|---|
| Example 1 | Novec 7200 | A-1 | B-1 | | | 2.0 | |
| Example 2 | Novec 7200 | A-1 | B-1 | | | 3.0 | |
| Example 3 | Novec 7200 | A-1 | B-1 | | | 3.6 | |
| Example 4 | Novec 7200 | A-1 | B-1 | | | 1.5 | |
| Example 5 | Novec 7200 | A-1 | B-1 | C-1 | | 2.0 | C-1 content: 20 wt% in mixture |
| Example 6 | Novec 7200 | A-1 | B-1 | | D-1 | 1.8 | D-1 content: 20 wt% in mixture |
| Example 7 | Novec 7200 | A-1 | B-1 | C-1 | D-1 | 2.0 | C-1 content: 10 wt% in mixture |
| | | | | | | | D-1 content: 10 wt% in mixture |
| Comparative Example 1 | Novec 7200 | A-1 | B-1 | | | 1.0 | |
| Comparative Example 2 | Novec 7200 | A-1 | B-1 | | | 4.2 | |
| Comparative Example 3 | Novec 7200 | A-1 | B-1 | C-1 | | 1.0 | C-1 content: 20 wt% in mixture |
| Comparative Example 4 | Novec 7200 | A-1 | B-1 | | D-1 | 1.1 | D-1 content: 20 wt% in mixture |
| Comparative Example 5 | Novec 7200 | A-1 | B-1 | C-1 | D-1 | 1.0 | C-1 content: 10 wt% in mixture |
| | | | | | | | D-1 content: 10 wt% in mixture |
| Comparative Example 6 | Novec 7200 | A-1 | | | | - | |
| Comparative Example 7 | Novec 7200 | | B-1 | | | - | |

### [Examples 8 to 14, Comparative Examples 8 to 12]

Mixtures of the components (A) to (D) (fluorine-containing compositions) were diluted with a diluent solvent so as to be 0.1 wt% in terms of solid content (that is, the total weight of the components (A) to (D)) to prepare surface treatment agents. The mixtures of the components (A) to (D) (the fluorine-containing compositions) were prepared at composition ratios in Table 2 (provided that molar ratios for compounding ratios of the component (A) to the component (B)).

**[Table 2]**

| | Solvent | (A) | (B) | (C) | (D) | Molar ratio (A)/(B) | |
|---|---|---|---|---|---|---|---|
| Example 8 | AC-6000 | A-5 | B-5 | | | 1.9 | |
| Example 9 | AC-6000 | A-5 | B-5 | | | 3.0 | |
| Example 10 | AC-6000 | A-5 | B-5 | | | 3.5 | |
| Example 11 | AC-6000 | A-5 | B-5 | | | 1.4 | |
| Example 12 | AC-6000 | A-5 | B-5 | C-2 | | 1.9 | C-2 content: 20 wt% in mixture |
| Example 13 | AC-6000 | A-5 | B-5 | | D-2 | 1.9 | D-2 content: 20 wt% in mixture |
| Example 14 | AC-6000 | A-5 | B-5 | C-2 | D-2 | 2.3 | C-2 content: 10 wt% in mixture |
| | | | | | | | D-2 content: 10 wt% in mixture |
| Comparative Example 8 | AC-6000 | A-5 | B-5 | | | 0.9 | |
| Comparative Example 9 | AC-6000 | A-5 | B-5 | | | 4.1 | |
| Comparative Example 10 | AC-6000 | A-5 | B-5 | C-2 | D-2 | 1.0 | C-2 content: 10 wt% in mixture |
| | | | | | | | D-2 content: 10 wt% in mixture |
| Comparative Example 11 | AC-6000 | A-5 | | | | - | |
| Comparative Example 12 | AC-6000 | | B-5 | | | - | |

### [Examples 15 to 20, Comparative Examples 13 to 17]

Mixtures of the components (A) to (D) (fluorine-containing compositions) were diluted with a diluent solvent so as to be 20 wt% in terms of solid content (that is, the total weight of the components (A) to (D)) to prepare surface treatment agents. The mixtures of the components (A) to (D) (the fluorine-containing compositions) were prepared at composition ratios in Table 3 (provided that molar ratios for compounding ratios of the component (A) to the component (B)).

**[Table 3]**

| | Solvent | (A) | (B) | (C) | (D) | Molar ratio (A)/(B) | |
|---|---|---|---|---|---|---|---|
| Example 15 | AE-3000 | A-10 | B-10 | | | 2.0 | |
| Example 16 | AE-3000 | A-10 | B-10 | | | 3.6 | |
| Example 17 | AE-3000 | A-10 | B-10 | | | 1.6 | |
| Example 18 | AE-3000 | A-10 | B-10 | C-1 | | 2.0 | C-1 content: 20 wt% in mixture |
| Example 19 | AE-3000 | A-10 | B-10 | | D-3 | 2.0 | D-3 content: 20 wt% in mixture |
| Example 20 | AE-3000 | A-10 | B-10 | C-1 | D-3 | 2.1 | C-1 content: 10 wt% in mixture |
| | | | | | | | D-3 content: 10 wt% in mixture |
| Comparative Example 13 | AE-3000 | A-10 | B-10 | | | 1.1 | |
| Comparative Example 14 | AE-3000 | A-10 | B-10 | | | 4.1 | |
| Comparative Example 15 | AE-3000 | A-10 | B-10 | C-1 | | 4.1 | C-1 content: 20 wt% in mixture |
| Comparative Example 16 | AE-3000 | A-10 | B-10 | | D-3 | 4.1 | D-3 content: 20 wt% in mixture |
| Comparative Example 17 | AE-3000 | A-10 | B-10 | C-1 | D-3 | 4.1 | C-1 content: 10 wt% in mixture |
| | | | | | | | D-3 content: 10 wt% in mixture |

### [Examples 21 to 39, Comparative Examples 18 to 22]

Mixtures of the components (A) and (B) (fluorine-containing compositions) were diluted with a diluent solvent so as to be 20 wt% in terms of solid content (that is, the total weight of the component (A) and the component (B)) to prepare surface treatment agents. The mixtures of the components (A) and (B) (the fluorine-containing compositions) were prepared at composition ratios in Table 4 (molar ratios).

**[Table 4]**

| | Solvent | (A) | (B) | Molar ratio (A)/(B) |
|---|---|---|---|---|
| Example 21 | AE-3000 | A-2 | B-2 | 2.0 |
| Example 22 | Novec 7200 | A-3 | B-3 | 2.1 |
| Example 23 | Novec 7300 | A-4 | B-4 | 1.8 |
| Example 24 | AE-3000 | A-6 | B-6 | 2.0 |
| Example 25 | Novec 7200 | A-7 | B-7 | 1.9 |
| Example 26 | Opteon SF10 | A-8 | B-8 | 2.0 |
| Example 27 | Novec 7300 | A-9 | B-9 | 2.2 |
| Example 28 | Novec 7200 | A-11 | B-11 | 1.5 |
| Example 29 | Opteon SF10 | A-12 | B-12 | 2.0 |
| Example 30 | AE-3000 | A-13 | B-13 | 2.1 |
| Example 31 | Novec 7200 | A-14 | B-14 | 2.7 |
| Example 32 | Novec 7200 | A-15 | B-15 | 1.9 |
| Example 33 | Opteon SF10 | A-16 | B-16 | 3.0 |
| Example 34 | Novec 7200 | A-17 | B-17 | 3.5 |
| Example 35 | Novec 7300 | A-18 | B-18 | 2.0 |
| Example 36 | Novec 7200 | A-19 | B-19 | 1.9 |
| Example 37 | Novec 7200 | A-1 | B-11 | 2.6 |
| Example 38 | Novec 7200 | A-3 | B-14 | 1.6 |
| Example 39 | Novec 7300 | A-9 | B-16 | 2.1 |
| Comparative Example 18 | AE-3000 | A-2 | B-2 | 1.1 |
| Comparative Example 19 | Novec 7200 | A-7 | B-7 | 1.0 |
| Comparative Example 20 | Novec 7300 | A-9 | B-9 | 1.1 |
| Comparative Example 21 | Novec 7200 | A-14 | B-14 | 4.2 |
| Comparative Example 22 | AE-3000 | A-1 | B-11 | 1.1 |

### Formation of cured film

Cured films were prepared using the surface treatment agents prepared in Examples 1 to 39 and Comparative Examples 1 to 22. Onto glass having an outermost surface coated with SiO₂ in a thickness of 10 nm (Gorilla manufactured by Corning), each surface treatment agent was deposited by vacuum evaporation under conditions including pressure 2.0×10⁻² Pa and heating temperature 700°C. The deposit was cured in an atmosphere of 25°C and relative humidity 50% for 12 hours, obtaining a cured film of 10 nm thick.

### Evaluation of water/oil repellency

### [Evaluation of initial water/oil repellency]

Using a contact angle meter Drop Master (manufactured by Kyowa Interface Science Co., Ltd.), the glass on which the cured film was formed prepared above was measured for a contact angle with pure water (droplet: 2 µl) and oleic acid (droplet: 7 µl) as an index of water/oil repellency (temperature 25°C, relative humidity 40%). The results are shown in Tables 5 to 8.

At the initial, all the films of Examples and Comparative Examples showed excellent water repellency.

### [Evaluation criteria for water/oil repellency]

Water contact angle of 110° or more and oleic acid contact angle of 70° or more: A

Water contact angle less than 110° or oleic acid contact angle less than 70°: B

### Evaluation of slipperiness

For the glass on which the cured film was formed prepared above, the dynamic friction coefficient was measured under the following conditions as evaluation of slipperiness. The test environmental conditions are temperature 25°C and relative humidity 40%.

The results are shown in Tables 5 to 8.

### [Measurement of dynamic friction coefficient]

| | |
|---|---|
| Rubbing material: | BEMCOT |
| Contact area: | 3 cm² |
| Moving distance (one way): | 10 mm |
| Moving speed: | 500 mm/min |
| Load: | 100 gf/3 cm² |
| Number of tests: | 5 (average value of five sheets of glass was calculated) |

| | |
|---|---|
| Average of 0.02 to 0.03: | A |
| Average exceeding 0.03: | B |

### Evaluation of abrasion resistance

Using a friction tester (manufactured by Shinto Scientific Co., Ltd.), the glass on which the cured film was formed prepared above was rubbed under the conditions shown below. Thereafter, the cured film was similarly measured for a contact angle with water (water repellency) as evaluation of abrasion resistance. The test environmental conditions are temperature 25°C and relative humidity 40%. The results are shown in Tables 5 to 8.

### [Steel wool abrasion conditions]

| | |
|---|---|
| Steel wool: | Bonster #0000 |
| Contact area: | 1 cm² |
| Moving distance (one way): | 40 mm |
| Moving speed: | 4,800 mm/min |
| Load: | 1 kgf/6 mmφ |
| Number of abrasion: | 3,000 times |

### [Evaluation criteria for abrasion resistance]

Water contact angle after 3,000 cycles of abrasion

| | |
|---|---|
| 110° or more: | A |
| Less than 110°: | B |

### Evaluation of chemical resistance

The glass on which the cured film was formed prepared above was immersed in an alkaline solution under the following conditions, and then subjected to a steel wool abrasion test under the conditions described in [Steel wool abrasion conditions] above. The test environmental conditions are temperature 25°C and relative humidity 40%. The results are shown in Tables 5 to 8.

### [Chemical immersion conditions]

| | |
|---|---|
| Alkali: | sodium hydroxide |
| Concentration: | 0.4 wt% |
| Temperature: | 55°C |
| Time: | 4 hours |

### [Evaluation criteria for chemical resistance]

Water contact angle after 3,000 cycles of abrasion

| | |
|---|---|
| 110° or more: | A |
| Less than 110°: | B |

### Evaluation of heat resistance

The glass on which the cured film was formed prepared above was heated under the following conditions, and then subjected to a steel wool abrasion test under the conditions described in [Steel wool abrasion conditions] above. The test environmental conditions are temperature 25°C and relative humidity 40%. The results (contact angle with water after abrasion) are shown in Tables 5 to 8.

### [Heating conditions]

| | |
|---|---|
| Temperature: | 200°C |
| Time: | 30 minutes |

### [Evaluation criteria of heat resistance]

### Water contact angle after 3,000 cycles of abrasion

| | |
|---|---|
| 110° or more: | A |
| Less than 110°: | B |

The surface treatment agents of Examples 1 to 39 and Comparative Examples 1, 3, 5, 7, 8, 10, 12, 13, 15, 17, 18 to 20, and 22 are excellent in water/oil repellency, slipperiness, and initial abrasion durability. On the other hand, in Comparative Examples 2, 9, 14 to 17, and 21 in which the molar ratio of (A)/(B) is more than 4.0 and Comparative Examples 6 and 11 in which only the component (A) is used, water/oil repellency and initial abrasion durability are exhibited, but at least any one of slipperiness, chemical resistance, and heat resistance is poor. Among Comparative Examples 1, 3 to 5, 8, 10, 13, 18 to 20, and 22 in which the molar ratio of (A)/(B) is less than 1.2, and Comparative Examples 7 and 12 in which only the component (B) is used, Comparative Examples 1, 3, 5, 7, 8, 10, 12, 13, 18 to 20, and 22 are excellent in water/oil repellency, slipperiness, and initial abrasion durability as described above, but cannot achieve both chemical resistance and heat resistance, and Comparative Example 4 is poor in slipperiness and chemical resistance. On the other hand, Examples 1 to 39 are excellent in water/oil repellency, slipperiness, and initial abrasion durability, and can achieve both chemical resistance and heat resistance.

**[Table 5]**

| | Water/oil repellency | Slipperiness | Abrasion resistance | Chemical resistance | Heat resistance |
|---|---|---|---|---|---|
| Example 1 | A | A | A | A | A |
| Example 2 | A | A | A | A | A |
| Example 3 | A | A | A | A | A |
| Example 4 | A | A | A | A | A |
| Example 5 | A | A | A | A | A |
| Example 6 | A | A | A | A | A |
| Example 7 | A | A | A | A | A |
| Comparative Example 1 | A | A | A | A | B |
| Comparative Example 2 | A | B | A | A | A |
| Comparative Example 3 | A | A | A | B | B |
| Comparative Example 4 | A | B | A | B | A |
| Comparative Example 5 | A | A | A | B | B |
| Comparative Example 6 | A | B | A | A | A |
| Comparative Example 7 | A | A | A | B | B |

**[Table 6]**

| | Water/oil repellency | Slipperiness | Abrasion resistance | Chemical resistance | Heat resistance |
|---|---|---|---|---|---|
| Example 8 | A | A | A | A | A |
| Example 9 | A | A | A | A | A |
| Example 10 | A | A | A | A | A |
| Example 11 | A | A | A | A | A |
| Example 12 | A | A | A | A | A |
| Example 13 | A | A | A | A | A |
| Example 14 | A | A | A | A | A |
| Comparative Example 8 | A | A | A | A | B |
| Comparative Example 9 | A | B | A | A | A |
| Comparative Example 10 | A | A | A | B | B |
| Comparative Example 11 | A | B | A | A | A |
| Comparative Example 12 | A | A | A | B | B |

**[Table 7]**

| | Water/oil repellency | Slipperiness | Abrasion resistance | Chemical resistance | Heat resistance |
|---|---|---|---|---|---|
| Example 15 | A | A | A | A | A |
| Example 16 | A | A | A | A | A |
| Example 17 | A | A | A | A | A |
| Example 18 | A | A | A | A | A |
| Example 19 | A | A | A | A | A |
| Example 20 | A | A | A | A | A |
| Comparative Example 13 | A | A | A | A | B |
| Comparative Example 14 | A | B | A | A | A |
| Comparative Example 15 | A | A | A | A | B |
| Comparative Example 16 | A | B | A | B | A |
| Comparative Example 17 | A | A | A | B | B |

**[Table 8]**

| | Water/oil repellency | Slipperiness | Abrasion resistance | Chemical resistance | Heat resistance |
|---|---|---|---|---|---|
| Example 21 | A | A | A | A | A |
| Example 22 | A | A | A | A | A |
| Example 23 | A | A | A | A | A |
| Example 24 | A | A | A | A | A |
| Example 25 | A | A | A | A | A |
| Example 26 | A | A | A | A | A |
| Example 27 | A | A | A | A | A |
| Example 28 | A | A | A | A | A |
| Example 29 | A | A | A | A | A |
| Example 30 | A | A | A | A | A |
| Example 31 | A | A | A | A | A |
| Example 32 | A | A | A | A | A |
| Example 33 | A | A | A | A | A |
| Example 34 | A | A | A | A | A |
| Example 35 | A | A | A | A | A |
| Example 36 | A | A | A | A | A |
| Example 37 | A | A | A | A | A |
| Example 38 | A | A | A | A | A |
| Example 39 | A | A | A | A | A |
| Comparative Example 18 | A | A | A | B | B |
| Comparative Example 19 | A | A | A | B | B |
| Comparative Example 20 | A | A | A | B | B |
| Comparative Example 21 | A | B | A | A | A |
| Comparative Example 22 | A | A | A | B | B |

## Claims

1. A fluorine-containing composition comprising the following component (A) and component (B):
(A) a fluoropolyether-containing polymer having a silanol group or a hydrolyzable silyl group having the following general formula (1) and/or a partial (hydrolytic) condensate thereof
(B) a fluoropolyether-containing polymer having a silanol group or a hydrolyzable silyl group having the following general formula (2) and/or a partial (hydrolytic) condensate thereof
[Chem. 1]
Rf'OCF₂CF₂O-Rf-A (1)
Rf'OCF₂O-Rf-A (2)
wherein Rf is a divalent fluorooxyalkylene-containing polymer residue having the following general formula (3): 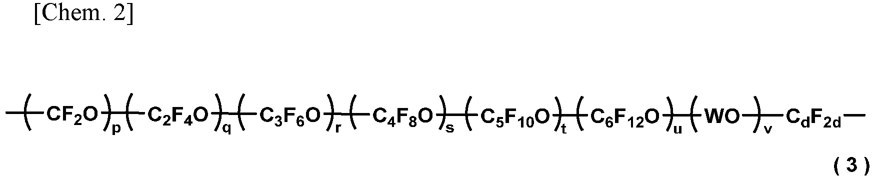 wherein W is a fluoroalkylene group containing at least one hydrogen atom, d is an integer of 1 to 6, p, q, r, s, t, u, and v are each independently an integer of 0 to 450, and p+q+r+s+t+u+v is 10 to 450, and each of these units may be linear or branched, and individual repeat units shown in parentheses with p, q, r, s, t, u, and v may be randomly bonded,
Rf' is a fluoroalkyl group terminated with a -CF₃ group, and
A is a monovalent group having the following formula (4): 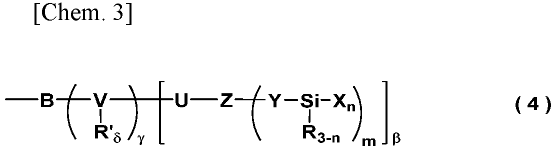 wherein B is a single bond or a divalent organic group, V is a carbon atom, a silicon atom, a nitrogen atom, or a tri- to octavalent organic group, R' is independently a hydrogen atom, a hydroxy group, a C₁-C₄ alkyl group, a phenyl group, a group having an oxyalkylene group, a C₁-C₄ alkoxy group, or a halogen group, U is independently a single bond or a divalent organic group, Z is independently a single bond, or a carbon atom, a silicon atom, a nitrogen atom, or a tri- to octavalent organic group, Y is independently a divalent hydrocarbon group which may contain at least one selected from an oxygen atom, a sulfur atom, a silicon atom, and a siloxane bond, R is independently a C₁-C₄ alkyl group or a phenyl group, X is independently a hydroxy group or a hydrolyzable group, n is independently an integer of 1 to 3 for each bonded silicon atom, m is independently an integer of 1 to 7, β is an integer of 1 to 6, γ is 0 or 1, δ is an integer of 0 to 6, when γ is 0, β is 1, and when γ is 1, the sum of β and δ is an integer of 2 to 7,
wherein a molar ratio of the component (A) to the component (B) [(A)/(B)] is 1.2 to 4.0.

2. The fluorine-containing composition of claim 1, further comprising the following component (C) and/or component (D):
(C) a fluoropolyether-containing polymer having the following general formula (5)
(D) a fluoropolyether-containing polymer having a silanol group or a hydrolyzable silyl group having the following general formula (6) and/or a partial (hydrolytic) condensate thereof
[Chem. 4]
A'-Rf¹-A' (5)
A-Rf¹-A (6)
wherein Rf¹ is a divalent fluorooxyalkylene-containing polymer residue having the following formula (7): 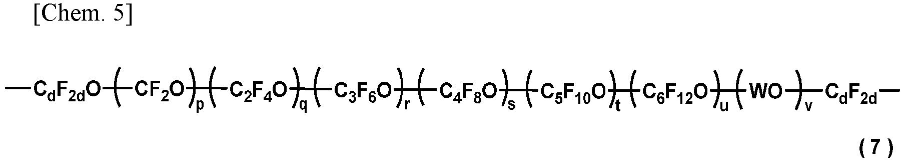 wherein W is a fluoroalkylene group containing at least one hydrogen atom, d is independently an integer of 1 to 6 for each unit, p, q, r, s, t, u, and v are each independently an integer of 0 to 450, and p+q+r+s+t+u+v is 10 to 450, and each of these units may be linear or branched, and individual repeat units shown in parentheses with p, q, r, s, t, u, and v may be randomly bonded,
A' is a fluorine atom, and
A is independently the same as described above.

3. The fluorine-containing composition of claim 1, wherein in the formulae (1) and (2), B in the formula (4) is a divalent group which may contain at least one of an oxygen atom, a sulfur atom, secondary amine, tertiary amine, ketone, amide, thioamide, and an ester group, selected from the group consisting of a single bond, a C₁-C₁₀ alkylene group, an alkylene group containing a C₆-C₈ arylene group, a divalent group having alkylene groups bonded via a diorganosilylene group, a silalkylene structure, or a silarylene structure, a divalent group having a C₁-C₁₀ alkylene group bonded to a bond of a linear organopolysiloxane residue of 2 to 10 silicon atoms or a branched or cyclic organopolysiloxane residue of 3 to 10 silicon atoms, a carbonyl group, and an amide group.

4. The fluorine-containing composition of claim 1, wherein in the formulae (1) and (2), γ in the formula (4) is 1, and V in the formula (4) is any one selected from the group consisting of a carbon atom, a silicon atom, a nitrogen atom, -C(O-)=, a tri- to hexavalent linear organopolysiloxane residue of 2 to 10 silicon atoms, a tri- to hexavalent branched or cyclic organopolysiloxane residue of 3 to 10 silicon atoms, a trivalent isocyanuric group, and a trivalent triazine ring-containing group.

5. The fluorine-containing composition of claim 1, wherein in the formulae (1) and (2), Y in the formula (4) is a group selected from the group consisting of a C₁-C₁₀ alkylene group which may contain an oxygen atom or a sulfur atom, an alkylene group containing a C₆-C₈ arylene group, a divalent group having alkylene groups or an alkylene group and an arylene group bonded via a diorganosilylene group, a silalkylene structure, or a silarylene structure, and a divalent group having a C₁-C₁₀ alkylene group bonded to a bond of a linear organopolysiloxane residue of 2 to 10 silicon atoms or a branched or cyclic organopolysiloxane residue of 3 to 10 silicon atoms.

6. The fluorine-containing composition of claim 1, wherein in the formulae (1) and (2), U in the formula (4) is any one selected from the group consisting of a single bond, a C₁-C₁₀ alkylene group which may contain an oxygen atom and a sulfur atom, an alkylene group containing a C₆-C₈ arylene group, a divalent group having alkylene groups bonded via a diorganosilylene group, a silalkylene structure, or a silarylene structure, and a divalent group having a C₁-C₁₀ alkylene group bonded to a bond of a linear organopolysiloxane residue of 2 to 10 silicon atoms or a branched or cyclic organopolysiloxane residue of 3 to 10 silicon atoms.

7. The fluorine-containing composition of claim 1, wherein in the formulae (1) and (2), Z in the formula (4) is any one selected from the group consisting of a single bond, a carbon atom, a silicon atom, a nitrogen atom, -C(O-)=, a tri- to hexavalent linear organopolysiloxane residue of 2 to 10 silicon atoms, a tri- to hexavalent branched or cyclic organopolysiloxane residue of 3 to 10 silicon atoms, a trivalent isocyanuric group, and a trivalent triazine ring-containing group.

8. The fluorine-containing composition of claim 1, wherein in the formulae (1) and (2), X in the formula (4) is selected from the group consisting of a hydroxy group, a C₁-C₁₀ alkoxy group, a C₂-C₁₀ alkoxyalkoxy group, a C₁-C₁₀ acyloxy group, a C₂-C₁₀ alkenyloxy group, and a halogen group.

9. The fluorine-containing composition of claim 1, wherein As are the same in the formulae (1) and (2).

10. The fluorine-containing composition of claim 1, wherein the fluoropolyether-containing polymer having a silanol group or a hydrolyzable silyl group having the formula (1) is at least one selected from those having the following formulae: 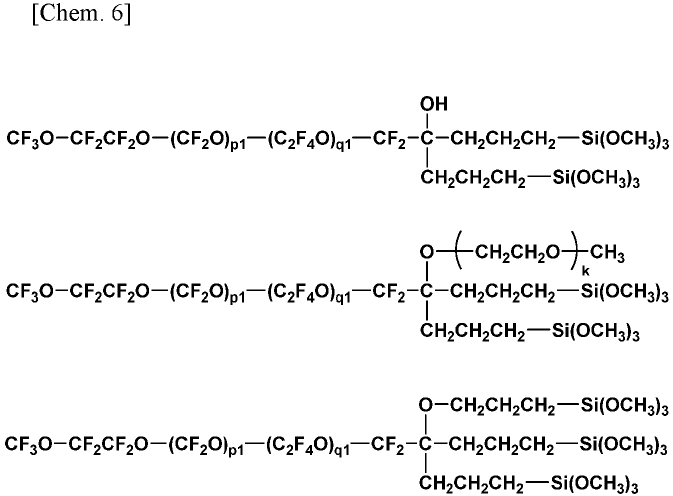 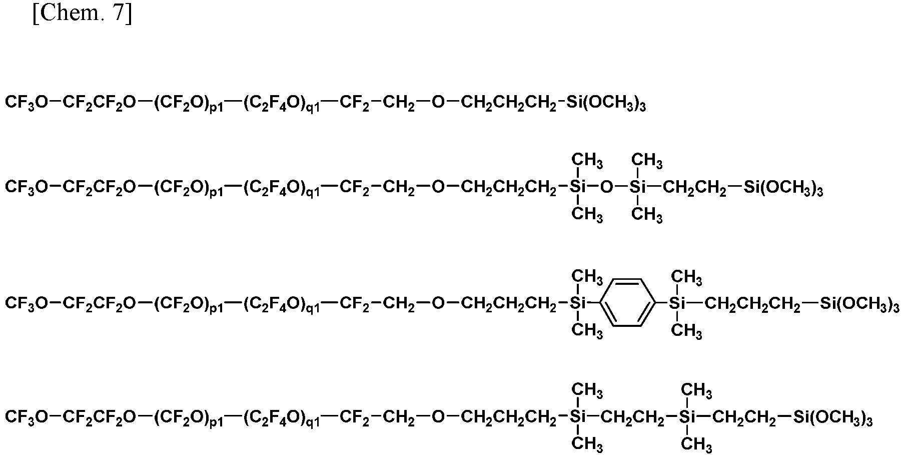 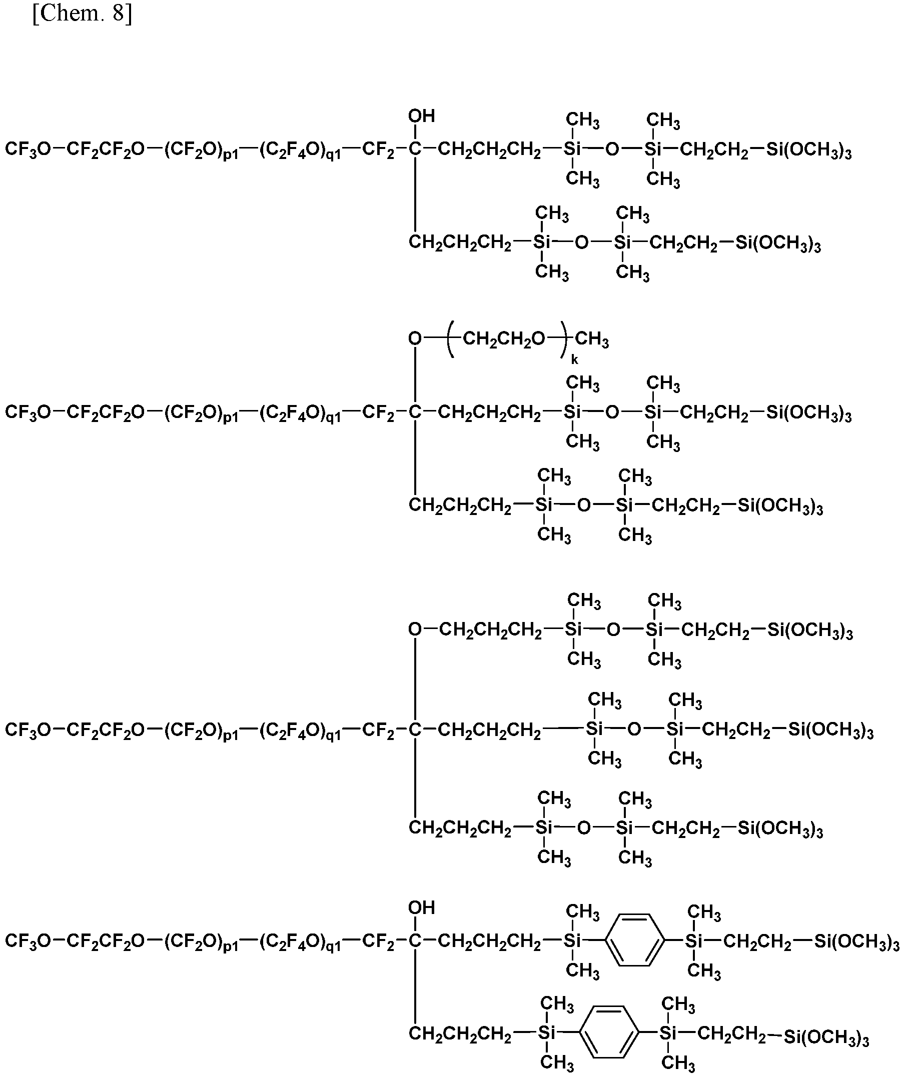 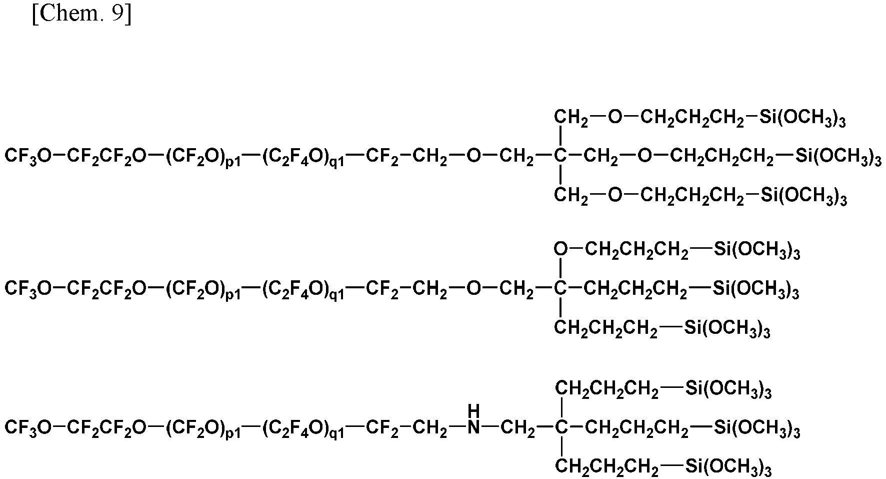 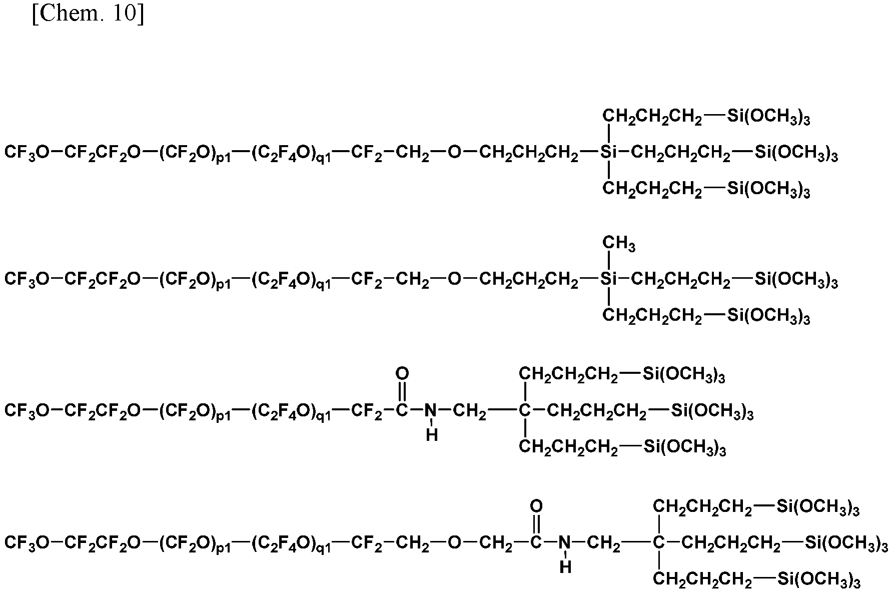 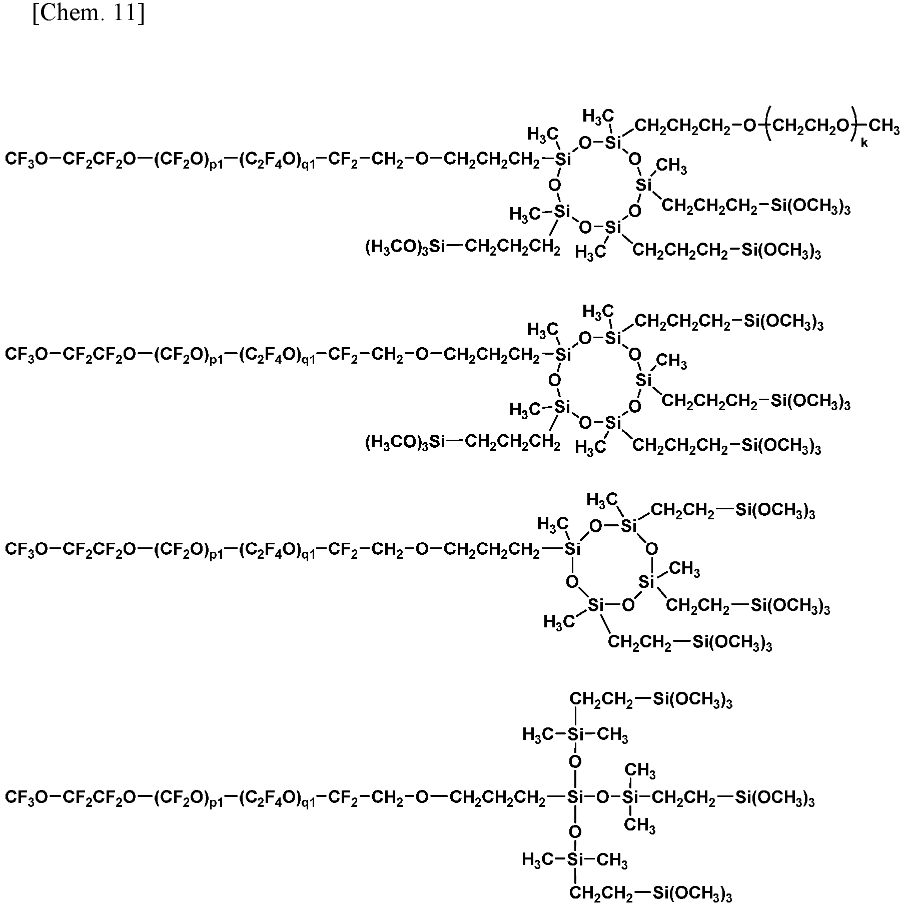 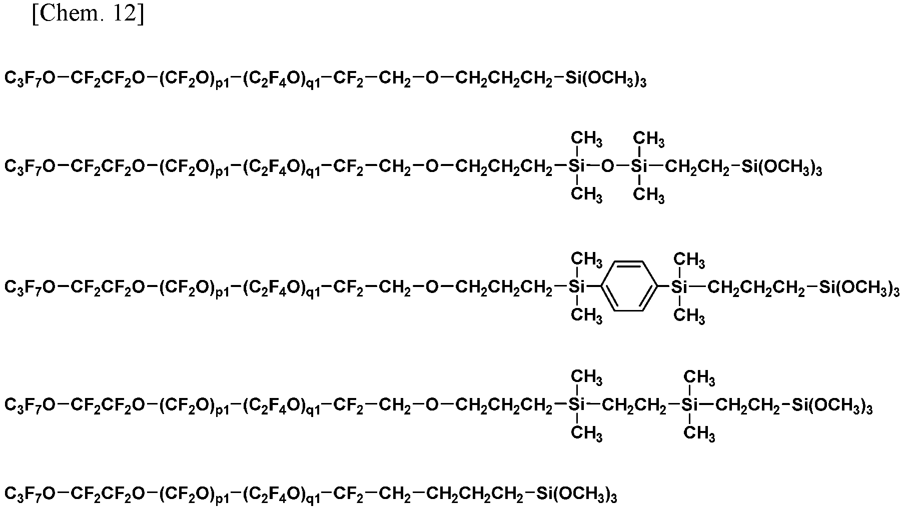 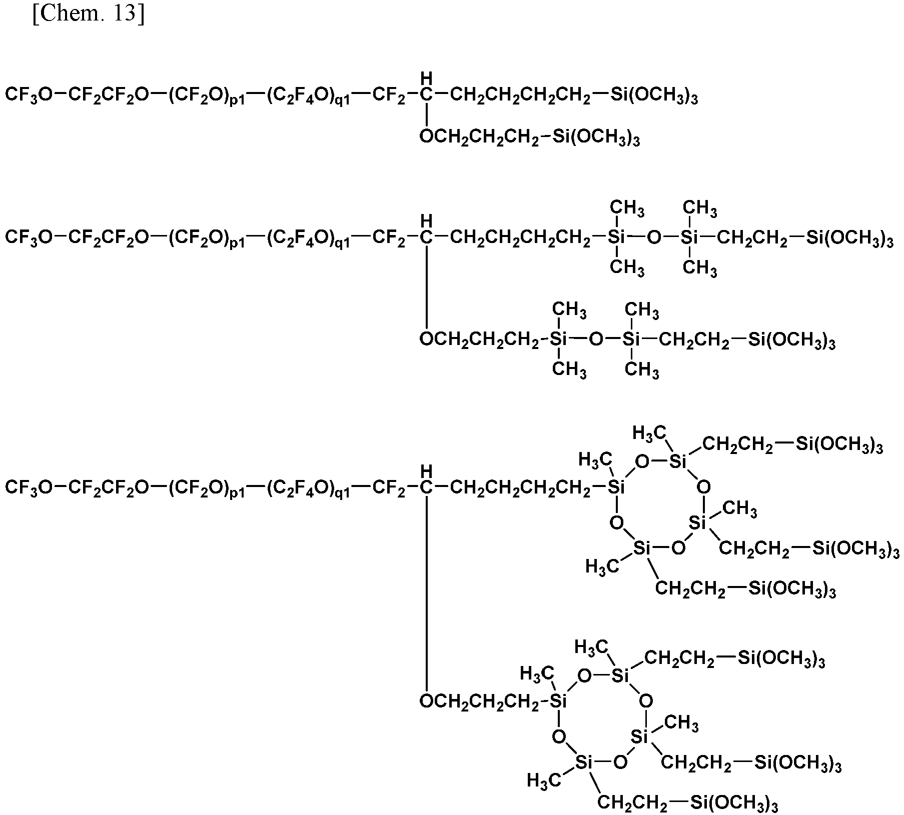 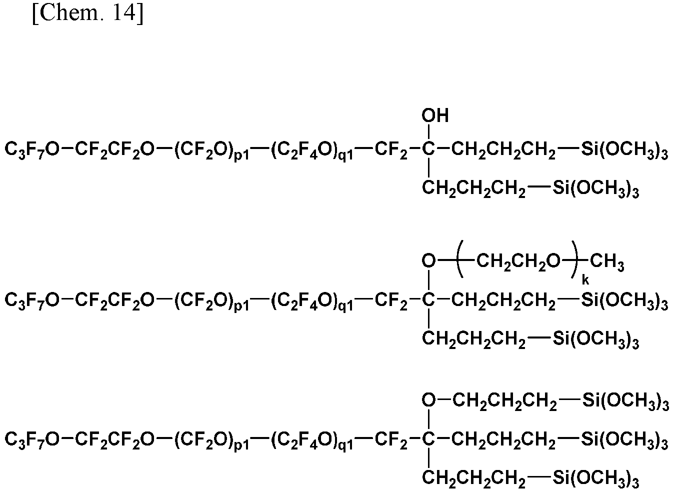 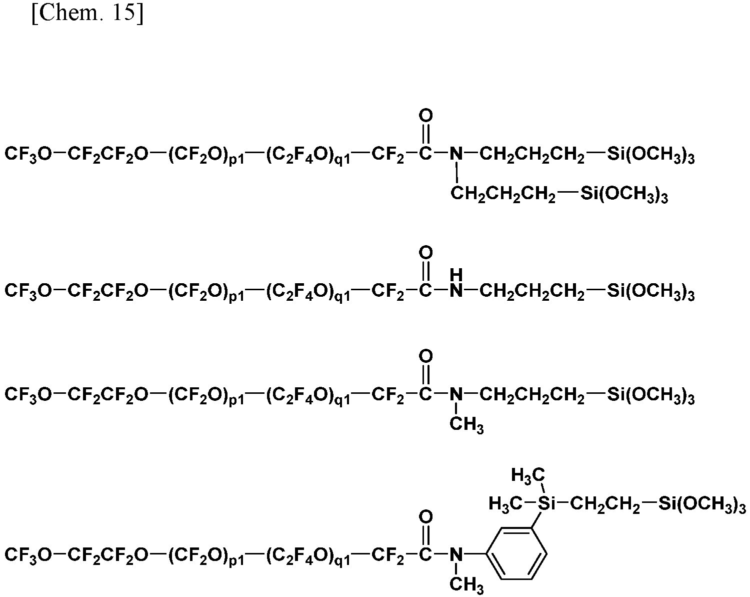 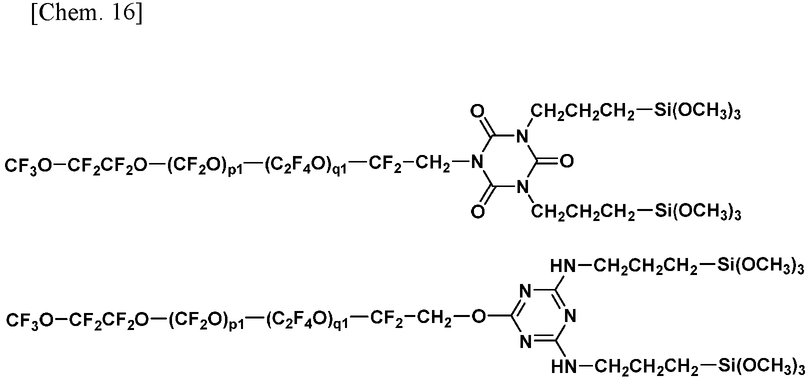 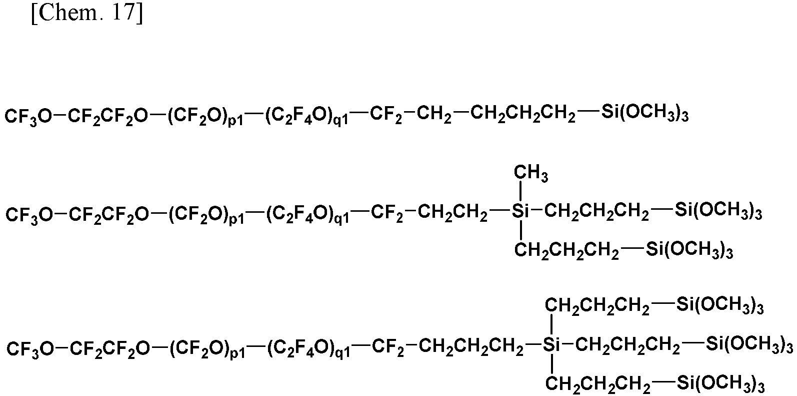 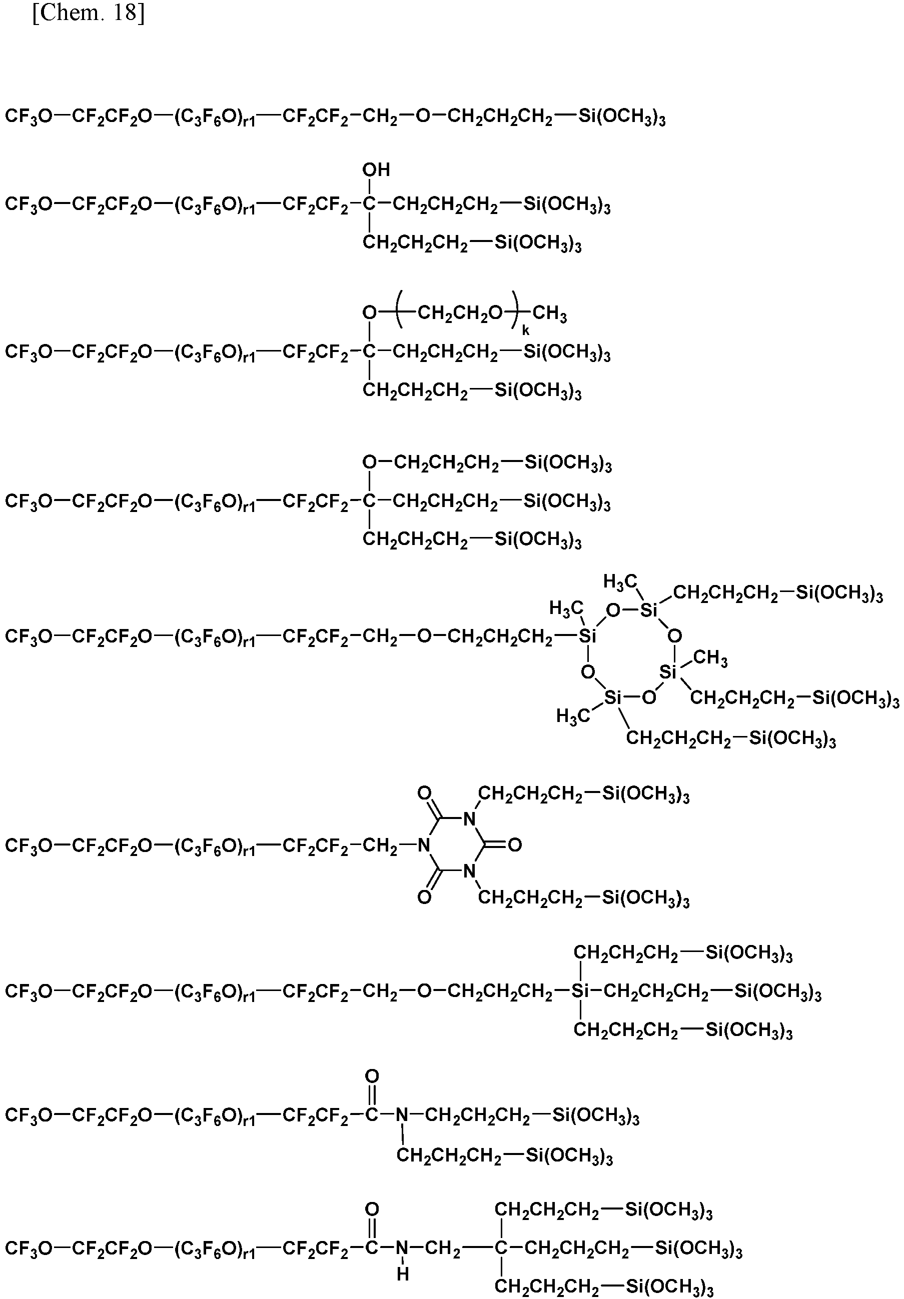 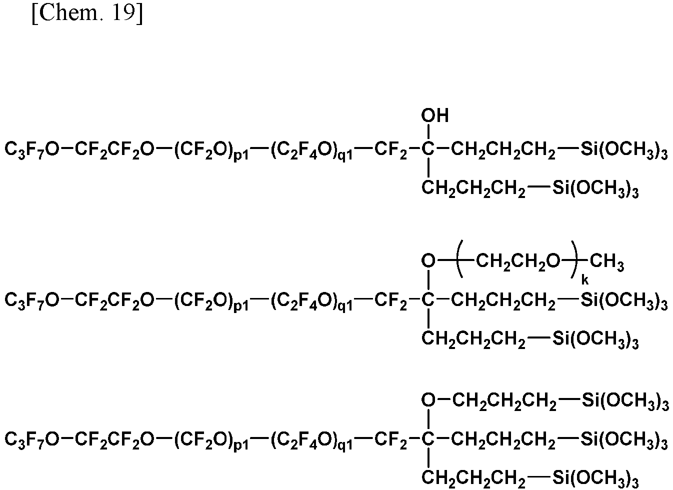 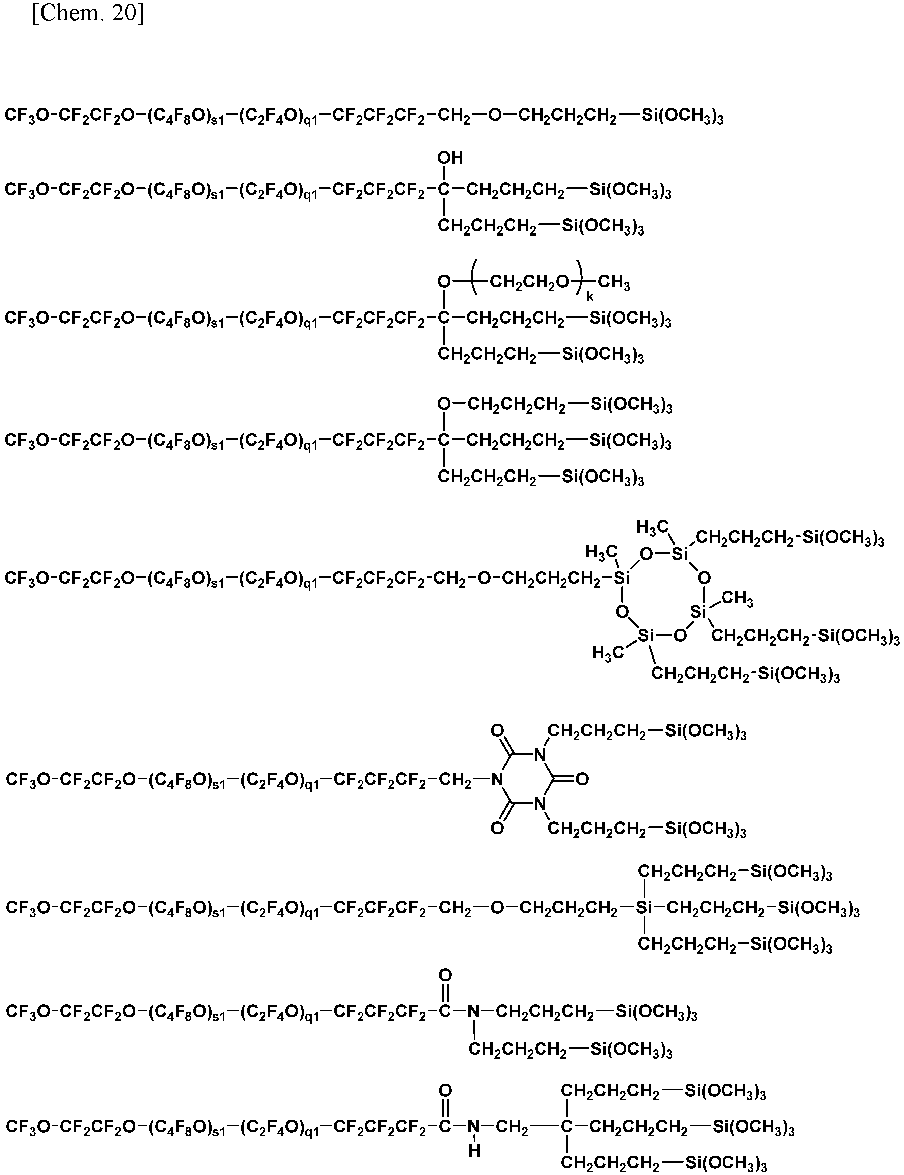 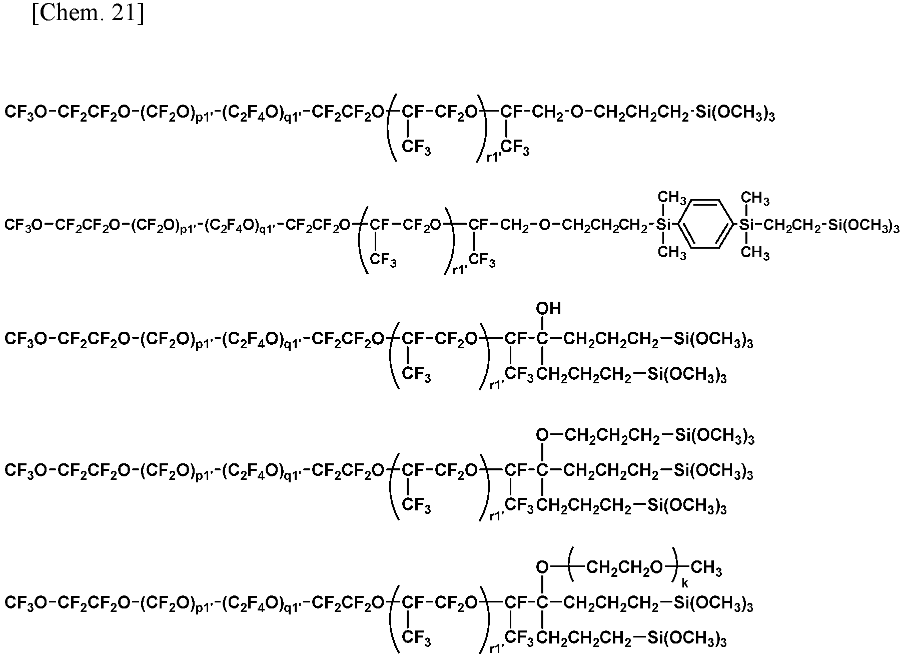 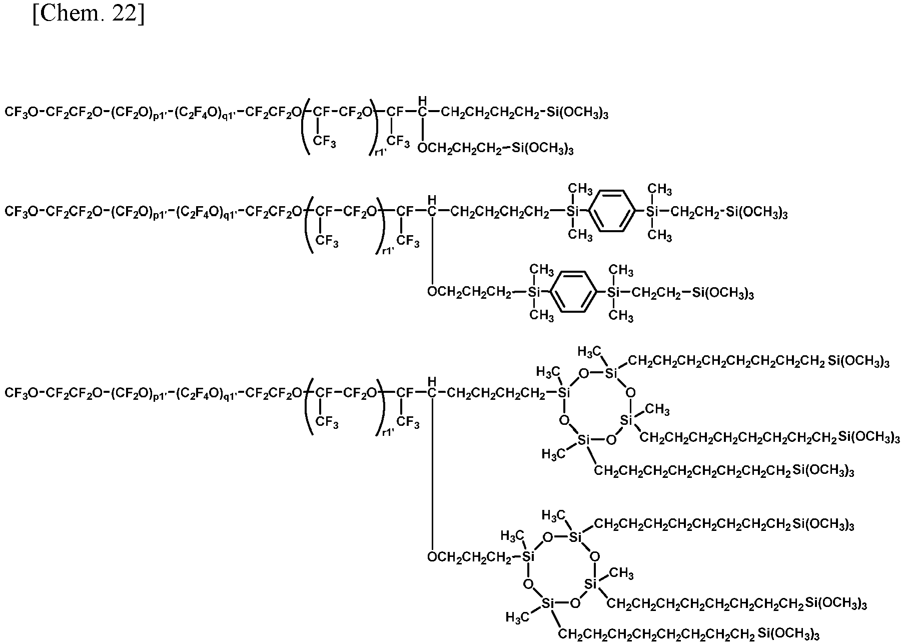 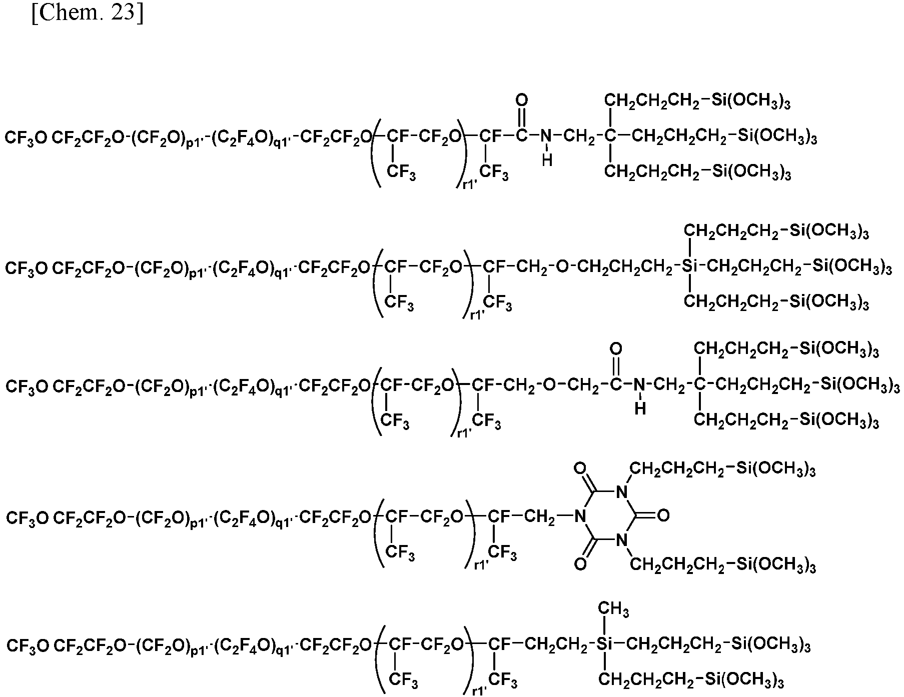 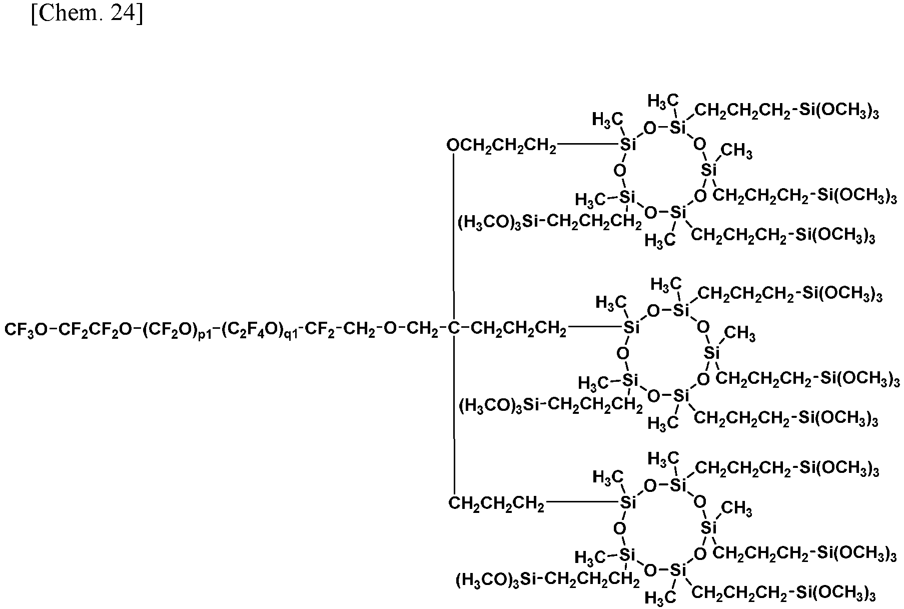 wherein p1, q1, r1, and s1 are each independently an integer of 1 or more, provided that the sum of p1, q1, r1, and s1 in each formula is 10 to 200, p1', q1', and r1' are each independently an integer of 1 or more, provided that the sum of p1', q1', and r1' in each formula is 9 to 199, individual repeat units shown in parentheses with p1, q1, r1, s1, p1', and q1' may be randomly bonded, and k is an integer of 1 to 20.

11. The fluorine-containing composition of claim 1, wherein the fluoropolyether-containing polymer having a silanol group or a hydrolyzable silyl group having the formula (2) is at least one selected from those having the following formulae: 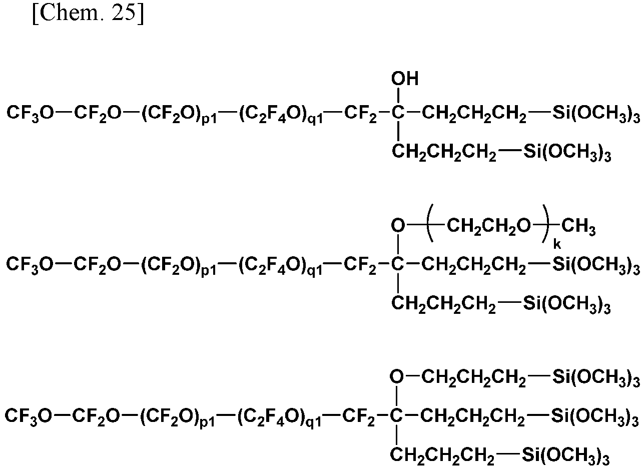 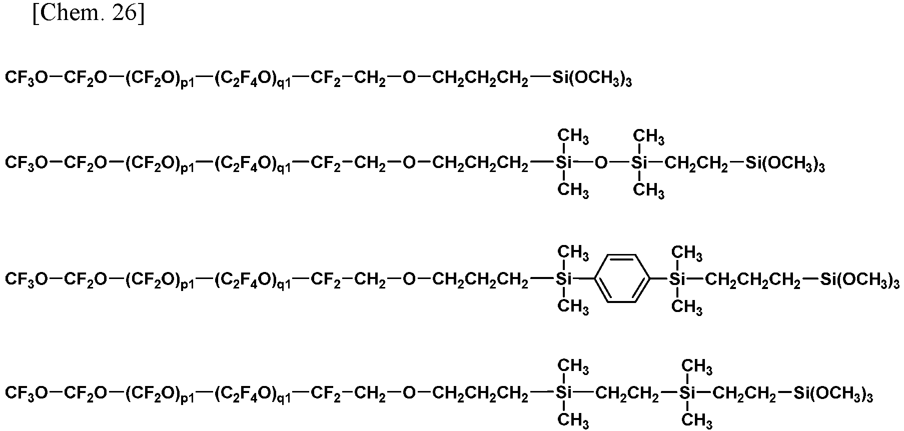 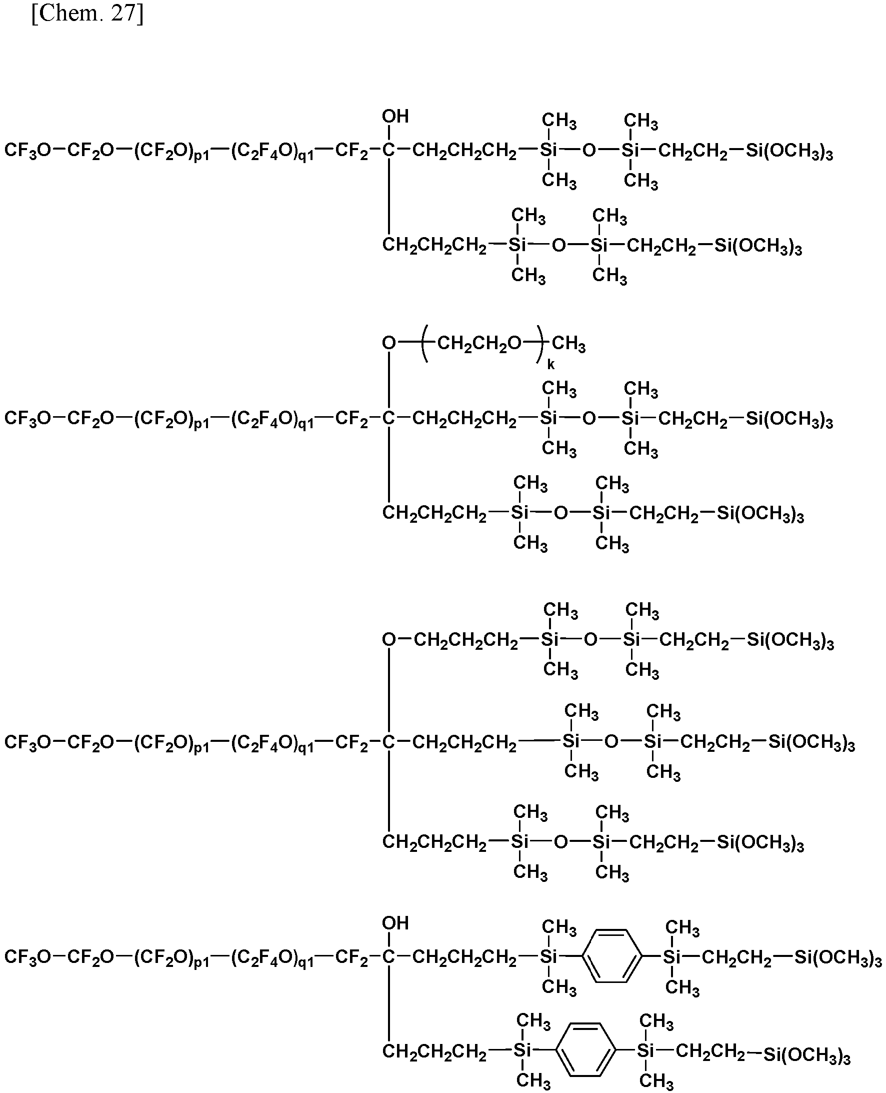 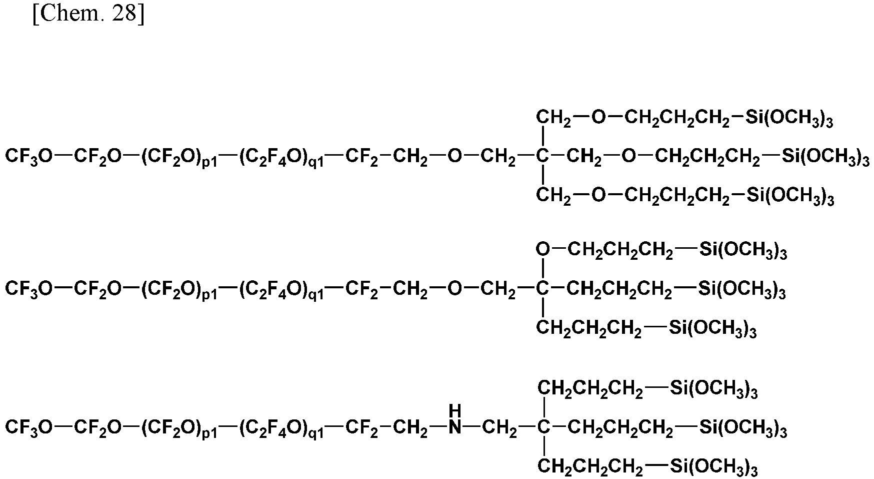 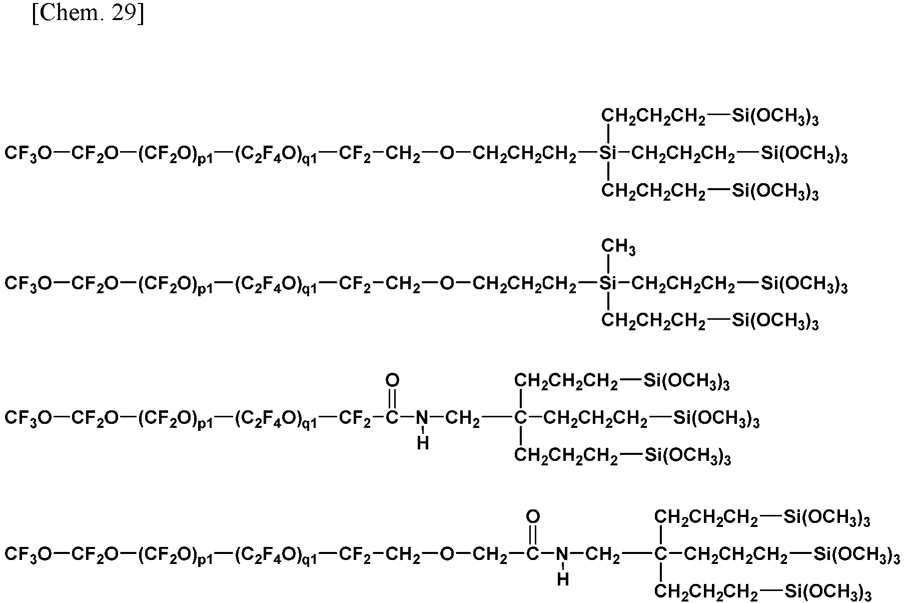 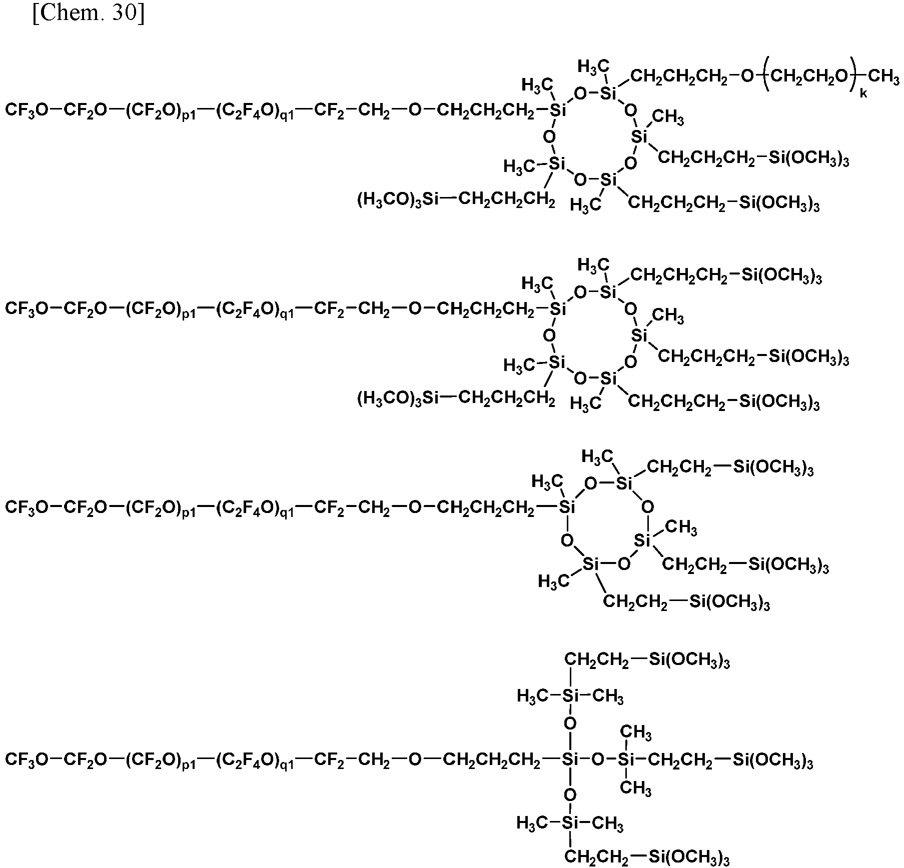 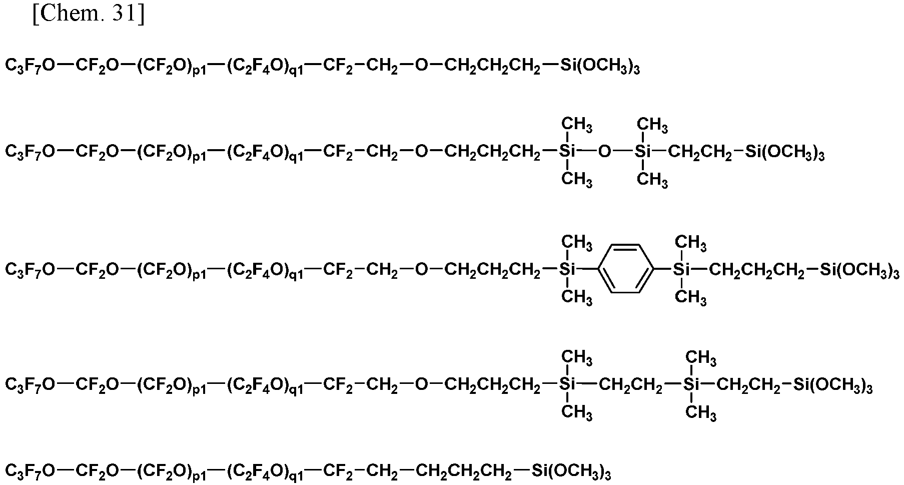 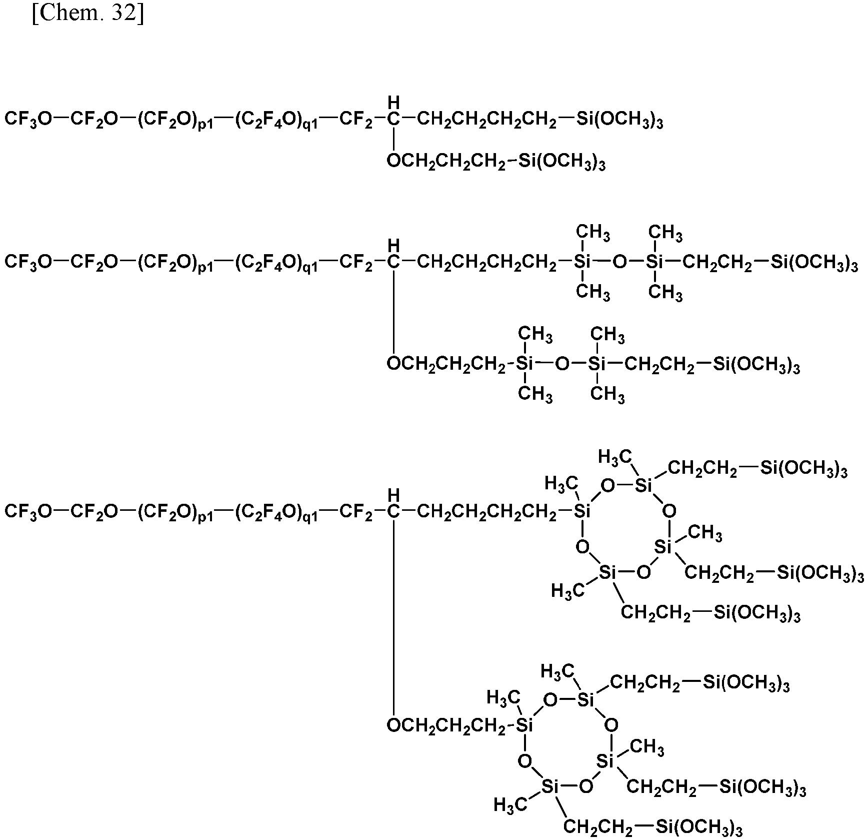 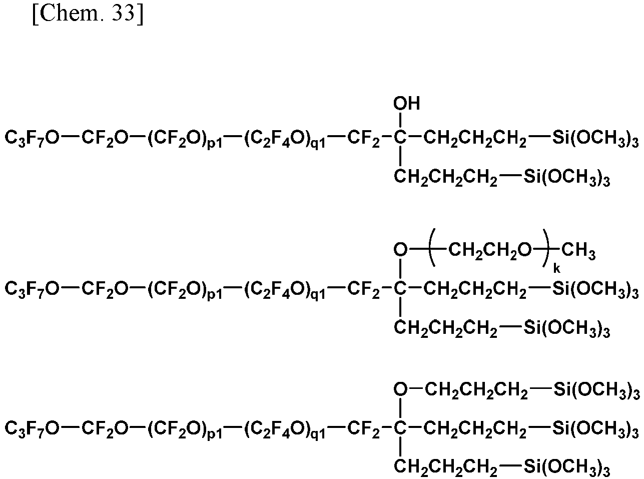 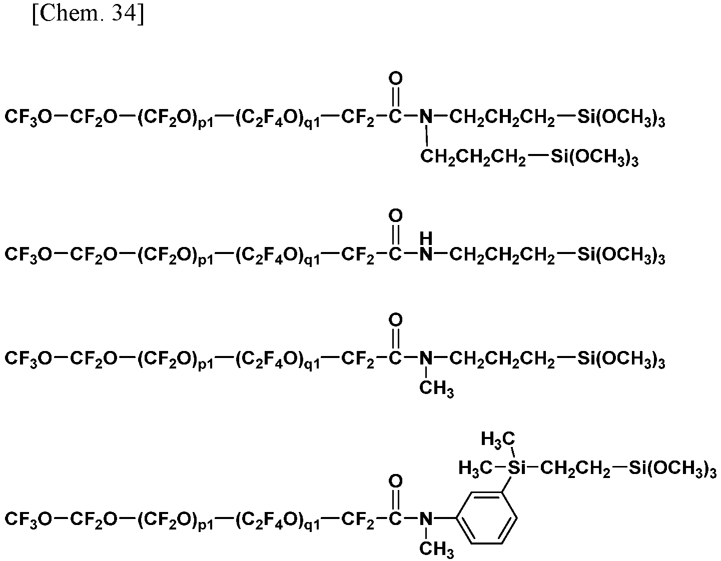 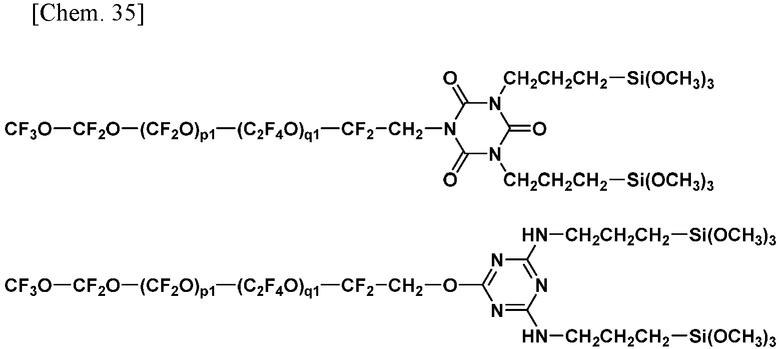 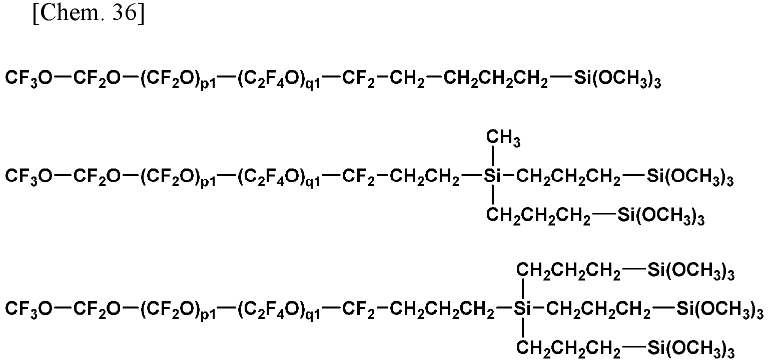 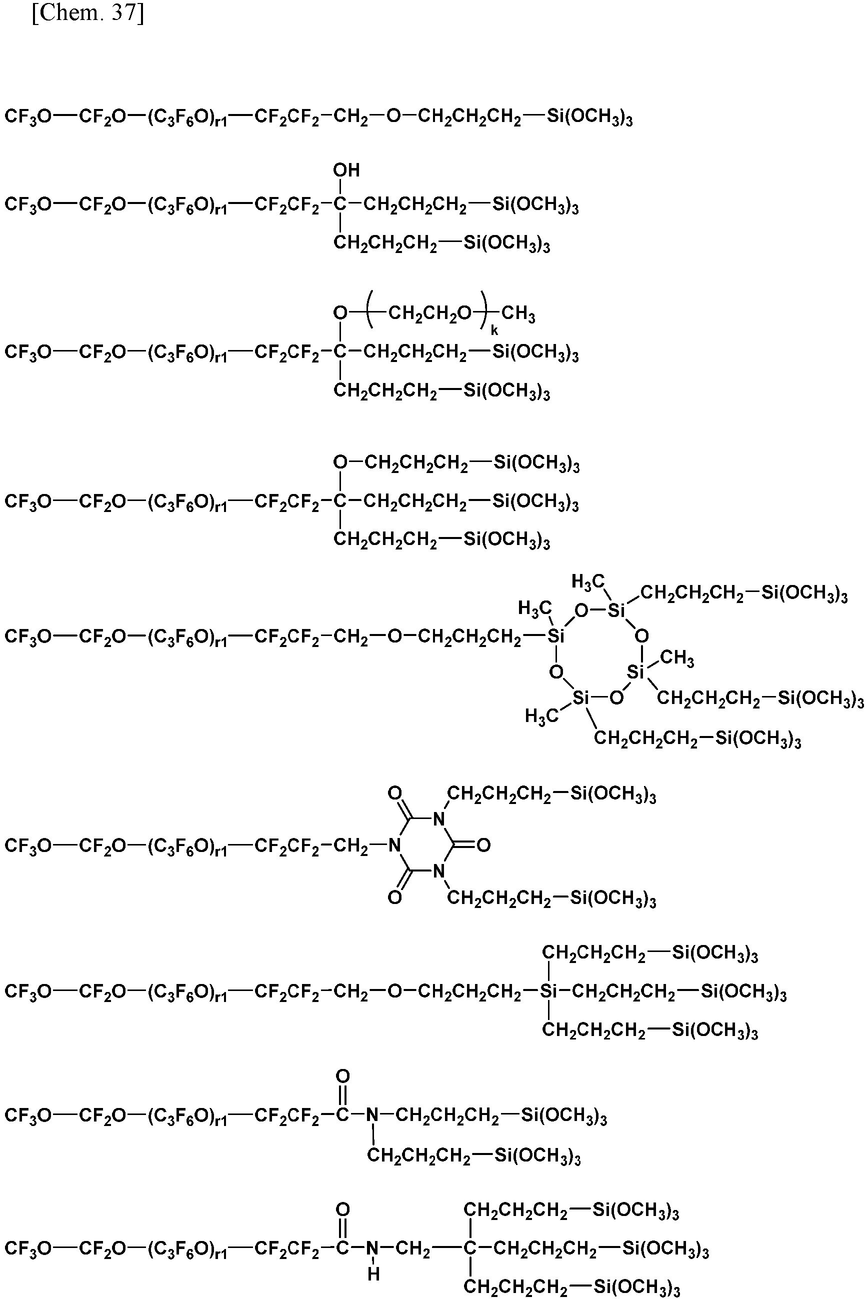 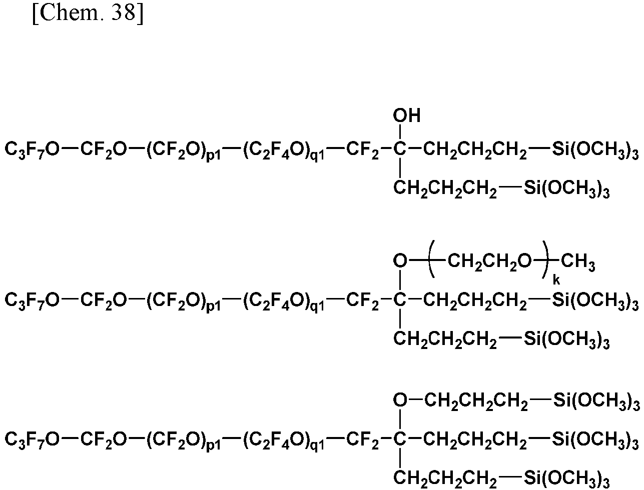 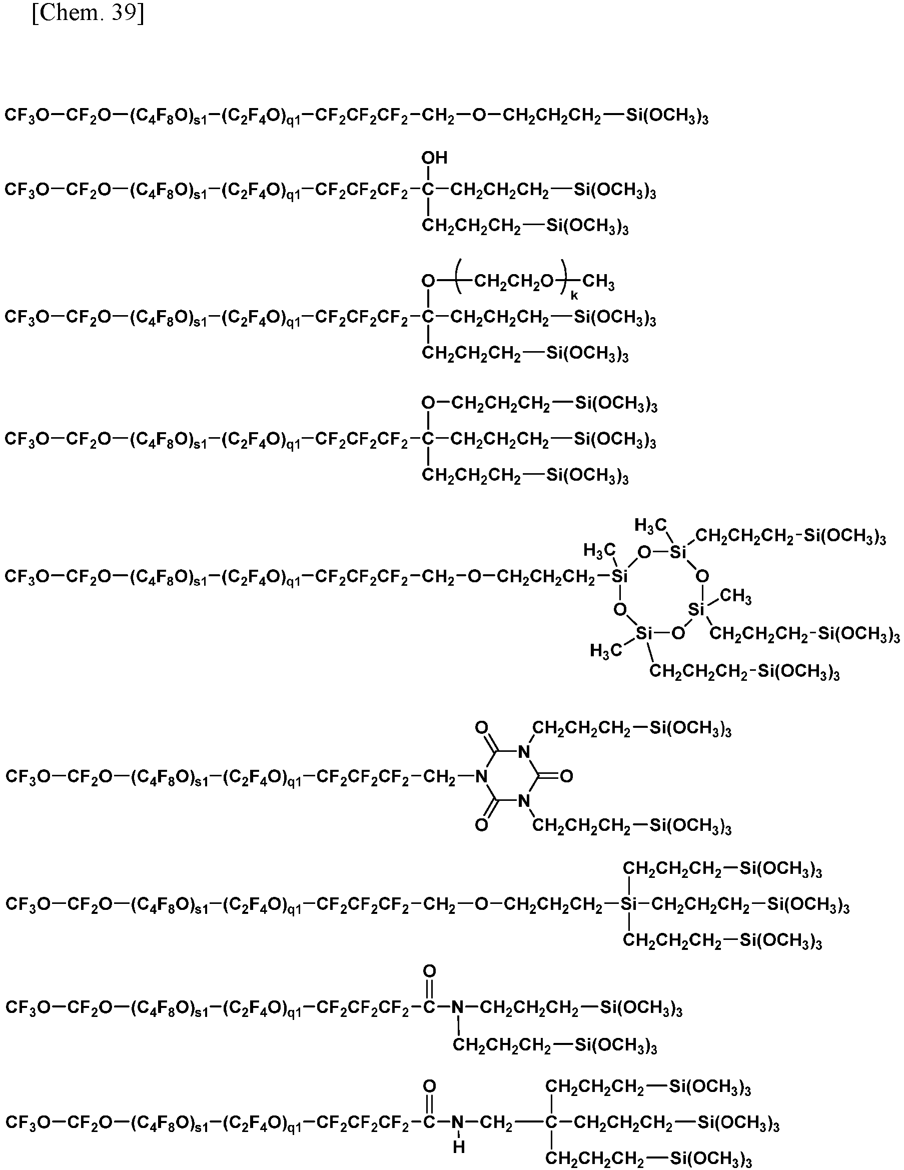 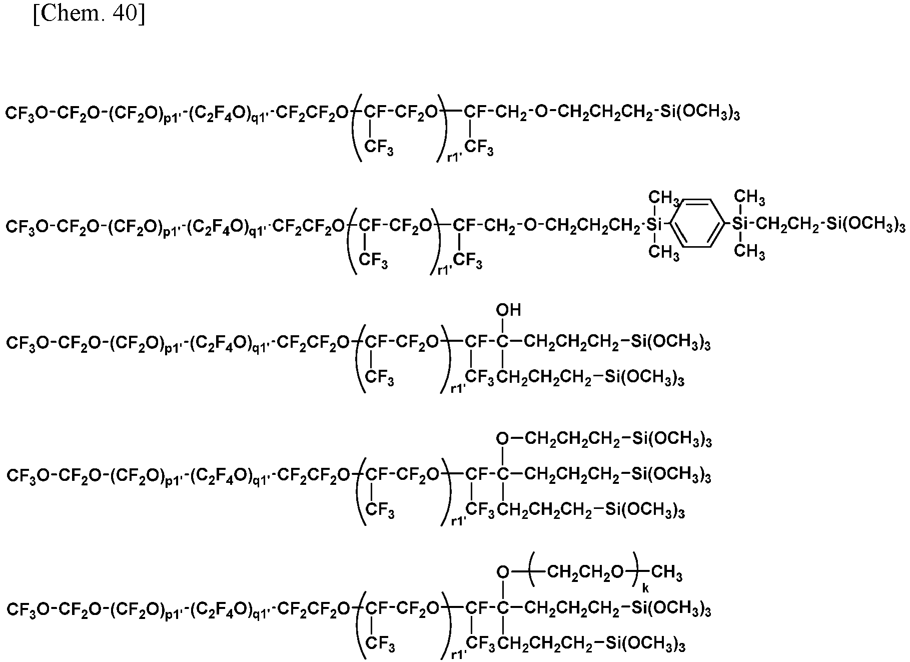 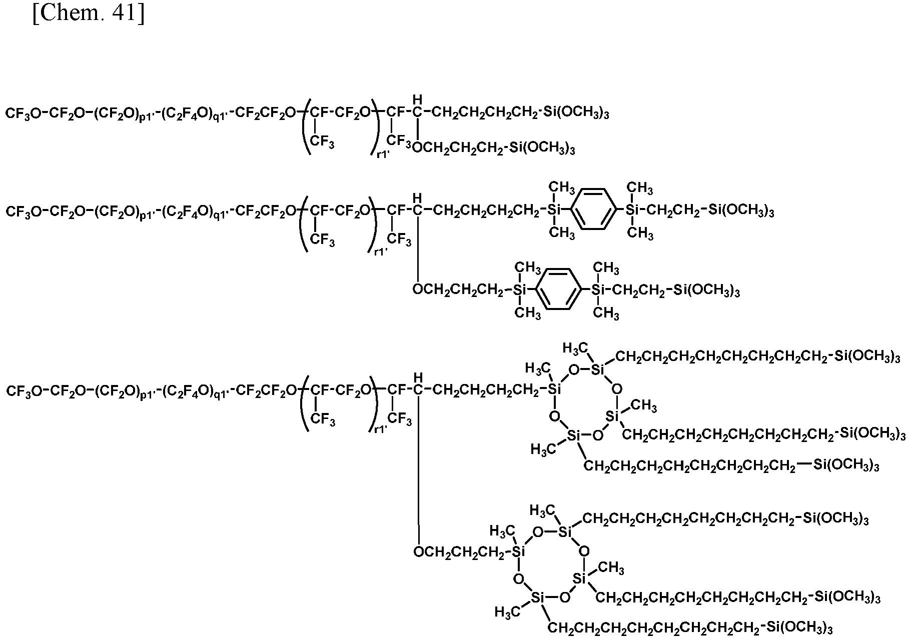 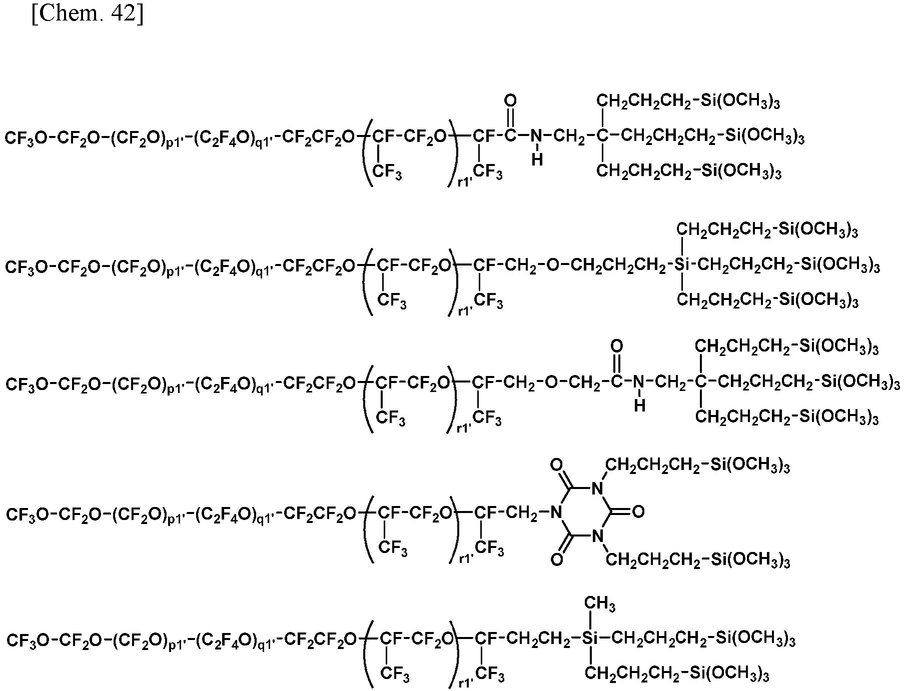 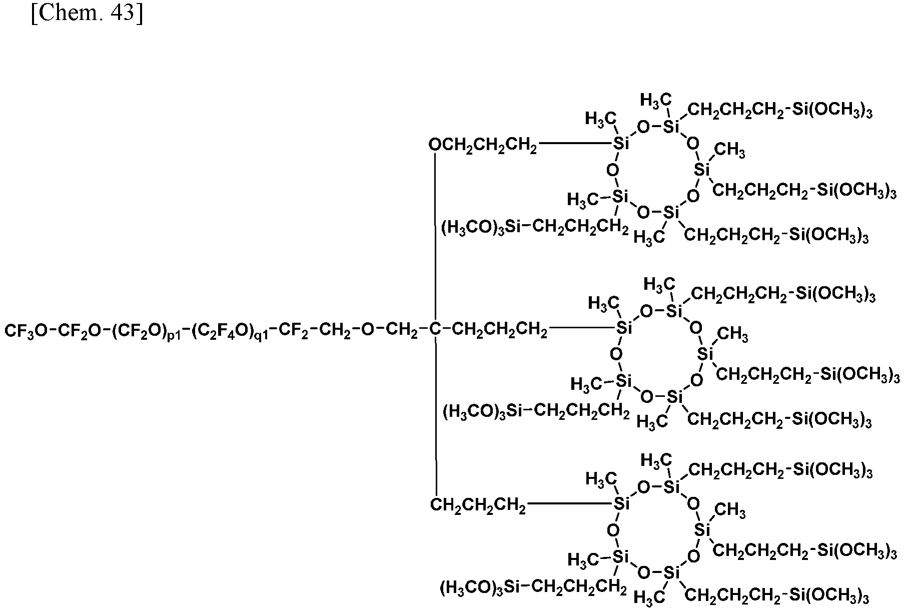 wherein p1, q1, r1, and s1 are each independently an integer of 1 or more, provided that the sum of p1, q1, r1, and s1 in each formula is 10 to 200, p1', q1', and r1' are each independently an integer of 1 or more, provided that the sum of p1', q1', and r1' in each formula is 9 to 199, individual repeat units shown in parentheses with p1, q1, r1, s1, p1', and q1' may be randomly bonded, and k is an integer of 1 to 20.

12. A surface treatment agent comprising the fluorine-containing composition of any one of claims 1 to 11.

13. An article having a surface treated with the surface treatment agent of claim 12.

14. The article of claim 13, which is an optical article.

15. The article of claim 13, which is a touch panel display.

16. The article of claim 13, which is an antireflective film.

17. The article of claim 13, wherein a substrate is SiO₂-deposited glass.

18. The article of claim 13, wherein a substrate is strengthened glass.

19. The article of claim 13, wherein a substrate is a lens substrate.

20. The article of claim 13, wherein a substrate is a quartz substrate.
